# FASCICULE DE BREVET EUROPEEN

(11) **EP 1 940 133 B1**
(45) Date de publication et mention de la délivrance du brevet: **02.09.2015**
(21) Numéro de dépôt: 07291649.7
(22) Date de dépôt: 31.12.2007
(51) Int. Cl.: H04L 29/12, H04L 12/58, H04W 76/00, H04L 29/08

(54) **Système et procédé de gestion de joignabilité via au moins un réseau de communication**
System und Verfahren zur Verwaltung von Erreichbarkeitsdaten in zu mindestens einem Kommunikationsnetz
System and method for reachability management through at least one communication network

(30) Priorité: 31.12.2006 FR 0611548
(43) Date de publication de la demande: 02.07.2008
(73) Titulaire: Société Française du Radiotéléphone, 75008 Paris (FR)
(72) Inventeur: Ha, Thanh-Luu, 77600 Bussy Saint Georges (FR); De Moissac, Arnaud, 75017 Paris (FR)
(74) Mandataire: Debay, Yves

(56) Documents cités:
- EP-A- 0 949 787
- WO-A-01/58113
- WO-A-02/075572
- WO-A-2005/029889
- US-A1- 2005 182 781

## Description

La présente invention concerne le domaine des communications électroniques en général. En effet, l'invention concerne l'ensemble des communications électroniques reposant sur différents média de communication tels que la téléphonie (les téléphones fixes) ou la téléphonie mobile, ainsi que les différents média de communication supportés par les réseaux de type Internet. Les réseaux de type Internet sont désormais accessibles, entre autres, via les réseaux de téléphonie mobile et offrent de nombreux outils de communication, tels que la navigation Internet classique mais également, par exemple, les messageries électroniques (e-mail, selon la terminologie anglaise, ou courriel, selon la terminologie française), les blogs et les forums, ou les messageries instantanées. Les messageries instantanées, tels que, par exemple, les messageries SIP (« Session Initiation Protocol » selon la terminologie anglaise) ou les messageries MSN® ou Windows Live Messenger® ou encore Skype®, permettent aux utilisateurs de dialoguer par des messages en texte (« chat », selon la terminologie classiquement utilisée dans le domaine) en direct par Internet et permettent également aux utilisateurs de faire des vidéo conférences ou simplement de tenir des conversations vocales par Internet (appelées selon la terminologie anglaise VoIP, pour « Voice Over IP », l'abréviation IP signifiant « Internet Protocol »). Tous ces moyens de communications sont désormais accessibles à partir de différents types de terminaux communicants, notamment grâce à l'évolution des réseaux de communication déployés par les opérateurs de communication. Ces terminaux communicants peuvent donc consister aujourd'hui en n'importe quel type de terminal électronique comportant des moyens de traitement de données suffisamment puissants pour supporter les différentes applications et des moyens de communication via au moins un réseau de communication. Par exemple, on peut aujourd'hui communiquer sur tous ces média à partir d'un téléphone mobile, notamment de 3° génération, d'un ordinateur, d'un assistant personnel (PDA, pour l'anglais « Personal Digital Assistant»), munis de moyens de communication via au moins un réseau de communication, etc. Ainsi, les utilisateurs de tous ces moyens de communication modernes possèdent en général plusieurs identifiants de communication, c'est-à-dire des numéros de téléphone (fixe et/ou mobile), des adresses email, des identifiants de messagerie, voire des noms de domaine ou des adresses de liens pour leurs blogs etc.

Un premier inconvénient dans ce domaine en plein développement des communications électroniques modernes concerne justement le fait que chacun des utilisateurs possède de nombreux identifiants de communication que leurs correspondants doivent connaître pour pouvoir les joindre sur les différents média de communication.

Un second inconvénient concerne le fait que les identifiants de communication d'un utilisateur peuvent changer au cours du temps (par exemple lorsqu'il change d'opérateur) et que ses correspondants n'en sont pas forcément avertis ou que l'utilisateur doive les avertir, ce qui s'avère souvent problématique et au moins laborieux. Une solution, connue sous le nom « ENUM » (pour l'anglais « tElephone NUmber Mapping ») et définie dans la norme RFC 2916 de l'IETF (pour l'anglais « Request For Comment » du détachement d'ingénierie Internet ou « Internet Engineering Task Force » selon la terminologie anglaise), consiste en ce que chaque utilisateur ait un numéro principal, dit numéro unique, appelé «e164» dans les recommandations de l'union Internationale des Télécommunications (UIT, ou ITU pour l'anglais « International Télécommunication Union »). Ce numéro unique, appelé « ENUM » ci-après, sera, à terme, utilisé pour toutes les communications électroniques quel que soit le média, de façon à simplifier l'utilisation des moyens modernes de communication. Ce numéro unique « e164 » ou « ENUM » est enregistré dans une base de données, accessible selon le système des noms de domaine (DNS, pour l'anglais « Domain Name System) grâce auquel un identifiant d'adresse Internet (tel qu'une adresse IP) est associé à un nom de domaine plus facile à retenir (cette corrélation entre les adresses IP et les noms de domaine associés étant appelée « résolution des noms de domaine »). Les identifiants de communication utilisés dans le système DNS sont, quelque soit le média et la technologie utilisés, regroupés sous le terme de « Nom de Domaine totalement qualifié » (FQDN, pour l'anglais « Fully Qualified Domain Name »). Ils pourront, selon la technologie, le média et le protocole utilisés, consister en des numéros de téléphone (par exemple les « telURI », pour « téléphone Universal Resource Identifier » de la RFC 3966 désignant les identifiants de communication téléphonique), des adresses mails, ou des identifiants Internet tels que les URI (pour l'anglais « Uniform Resources Identifier »), ou même les URL (pour l'anglais « Uniform Resource Locator ») ou les URN (pour l'anglais « Uniform Resource Name ») pour autant que les adressages soient résolus. Ainsi, le système ENUM permet d'associer une pluralité d'identifiants de communication à un seul et unique numéro. Pour cela, le numéro unique, défini dans la norme comme une clé de recherche dénommée « e164 » et inscrit auprès de l'ITU (pour éviter que deux utilisateurs aient des numéros identiques), consiste en un numéro de téléphone auquel on ajoute le code du pays, dans lequel on insère un point (.) entre chaque caractère et dont on inverse la séquence avant d'y ajouter le suffixe « e164.arpa » indiquant la racine des noms de domaine du système ENUM. Ainsi, ce numéro permet d'établir une requête DNS, appelée requête NAPTR (pour l'anglais « eNum Authority PoinTeR ») pour obtenir du serveur DNS contenant la base de données une réponse, appelée NAPTR_RR (pour l'anglais « eNum Authority PoinTeR Resource Record »), contenant tous les identifiants de communication de l'utilisateur de ce numéro. La norme d'aujourd'hui définit d'autres champs dans les requêtes NAPTR, notamment pour l'ordre de présentation des identifiants de communication et la norme RFC 3953 définit une gestion de la présence de l'utilisateur. Cependant, la norme ne prévoit pas d'utilisation de ces champs supplémentaires ni de réelle gestion de la présence puisque l'utilisateur est considéré comme étant joignable sur n'importe lequel des média correspondant à ses identifiants de communication et le système ne permet pas de savoir sur quel média l'utilisateur est présent.

Un troisième inconvénient dans ce domaine, lié aux inconvénients et problèmes précédents et non résolu par cette solution ENUM, concerne la joignabilité de l'utilisateur sur au moins un terminal communicant, via au moins un média de communication. En effet, le système ENUM permet de connaître tous les identifiants d'un utilisateur mais ne permet pas de savoir, à un instant donné, sur lequel il est joignable ou sur lequel il souhaite être joint.

Un quatrième inconvénient, également lié aux inconvénients et problèmes précédents et non résolu (voire engendré) par la solution ENUM, concerne la confidentialité des identifiants de communication d'un utilisateur. En effet, il se peut qu'un utilisateur qui fournit un de ses identifiants à un correspondant (un contact), ne souhaite pas que ce dernier ait accès à tous ses identifiants de communication.

Un cinquième inconvénient, également lié aux inconvénients et problèmes précédents et non résolu (voire engendré) par la solution ENUM, concerne le fait qu'un utilisateur cherchant à joindre un correspondant reçoit une liste d'identifiants de communication dont certains ne sont pas compatibles avec le terminal (ou le média) utilisé par ce correspondant pour joindre l'utilisateur.

Un sixième inconvénient, également lié aux inconvénients et problèmes précédents et non résolu (voire engendré) par la solution ENUM, concerne le fait que les requêtes d'obtention des identifiants de communication classiquement utilisées dans les systèmes DNS sont envoyées via des ports de communication qui sont très souvent bloqués par les systèmes de protection tels que les pare-feus (« Fire-Wall », selon la terminologie anglaise). Ainsi, l'utilisateur qui souhaite obtenir les identifiants d'un de ses correspondants n'arrive pas forcément à envoyer de requête, par exemple de type NAPTR, directement au serveur, selon la configuration de son terminal et/ou du réseau local dans lequel il se trouve.

Il est connu également de l'art antérieur, notamment par la demande US 2005/182781 A1, des solutions proposant un serveur de gestion de la joignabilité, comportant une interface de conversion pour permettre aux terminaux des utilisateurs de dialoguer avec le serveur et permettre aux utilisateurs de gérer des données définissant leur joignabilité et de consulter ou mettre à jour leurs identifiants de communication dans une base de données d'un serveur ENUM.

Dans ce contexte, il est intéressant de proposer une solution permettant à la fois de simplifier l'utilisation des différents média de communication et de permettre une gestion de la joignabilité des utilisateurs, en garantissant éventuellement une confidentialité des identifiants de communication et en assurant éventuellement une compatibilité entre les média utilisables par les correspondants.

Un premier but de la présente invention est de supprimer certains inconvénients de l'art antérieur en proposant un système de gestion de la joignabilité d'au moins un utilisateur via au moins un réseau de communication, permettant au moins à cet utilisateur de choisir les media de communication sur lesquels il souhaite être joint en fonction du temps.

Ce but est atteint par un système selon la revendication 1.

D'autres particularités de divers modes de réalisation d'un tel système sont détaillées dans les revendications dépendantes 2 à 16.

Un second but de la présente invention est de supprimer certains inconvénients de l'art antérieur en proposant un procédé de gestion de la joignabilité d'au moins un utilisateur via au moins un réseau de communication, permettant au moins à cet utilisateur de choisir les media de communication sur lesquels il souhaite être joint en fonction du temps.

Ce but est atteint par un procédé selon la revendication 17.

D'autres particularités de divers modes de réalisation d'un tel procédé sont détaillées dans les revendications dépendantes 18 à 37.

Un troisième but de la présente invention est de supprimer certains inconvénients de l'art antérieur en proposant un terminal de gestion de la joignabilité d'au moins un utilisateur via au moins un réseau de communication, permettant au moins à cet utilisateur de choisir les media de communication sur lesquels il souhaite être joint en fonction du temps sur n'importe quel terminal communicant.
- Ce but est atteint par un terminal communicant selon la revendication 38 et d'autres particularités sont détaillées dans la revendication dépendante 39.

Un quatrième but de la présente invention est de supprimer certains inconvénients de l'art antérieur en proposant de rendre la présente invention transposable d'un terminal à un autre, en proposant un dispositif portable de gestion de la joignabilité d'au moins un utilisateur via au moins un réseau de communication, permettant au moins à cet utilisateur de choisir les media de communication sur lesquels il souhaite être joint en fonction du temps sur n'importe quel terminal communicant.

Ce but est atteint par un dispositif électronique portable selon la revendication 40 et d'autres particularités sont détaillées dans la revendication dépendante 41.

Un cinquième but de la présente invention est de supprimer certains inconvénients de l'art antérieur et de rendre la présente invention transposable d'un terminal à un autre, en proposant un procédé de gestion de la joignabilité d'au moins un utilisateur grâce à un dispositif portable, permettant au moins à cet utilisateur de choisir les media de communication sur lesquels il souhaite être joint en fonction du temps sur n'importe quel terminal communicant.
- Ce but est atteint par un procédé selon la revendication 42 et d'autres particularités sont détaillées dans la revendication dépendante 43.

D'autres particularités et avantages de la présente invention apparaîtront plus clairement à la lecture de la description ci-après, faite en référence aux dessins annexés, donnés à titre d'exemples non limitatifs, dans lesquels :

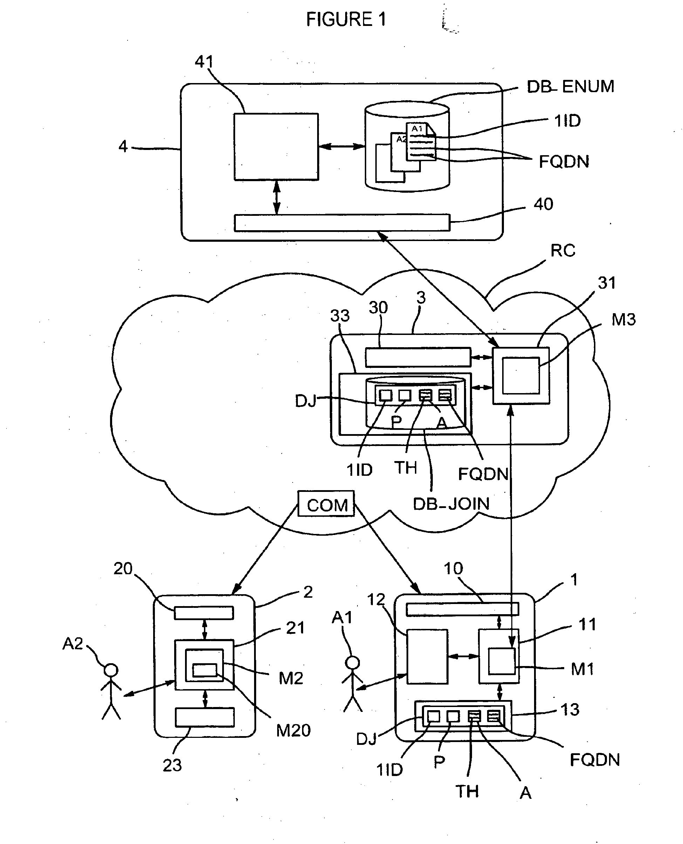

- la figure 1 représente le système selon un mode de réalisation de l'invention,
- la figure 2A représente la hiérarchie des systèmes de centralisation d'une solution connue de l'art antérieur et la figure 2B représente la conversion d'un numéro de téléphone en en identifiant principal, dit numéro unique, ainsi que l'association de ce dernier avec des identifiants de communication,
- la figure 3A représente un exemple d'une partie de profils et de sous-profils dans les données de joignabilité selon un mode de réalisation de l'invention et la figure 3B représente une partie d'un agenda dans les données de joignabilité selon un mode de réalisation de l'invention,

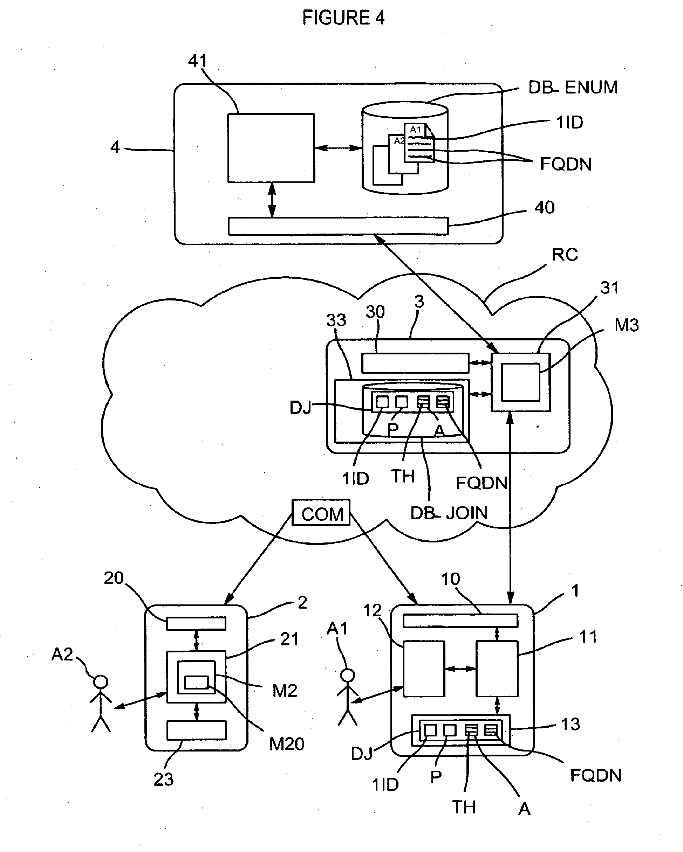

- la figure 4 représente le système selon un autre mode de réalisation de l'invention,

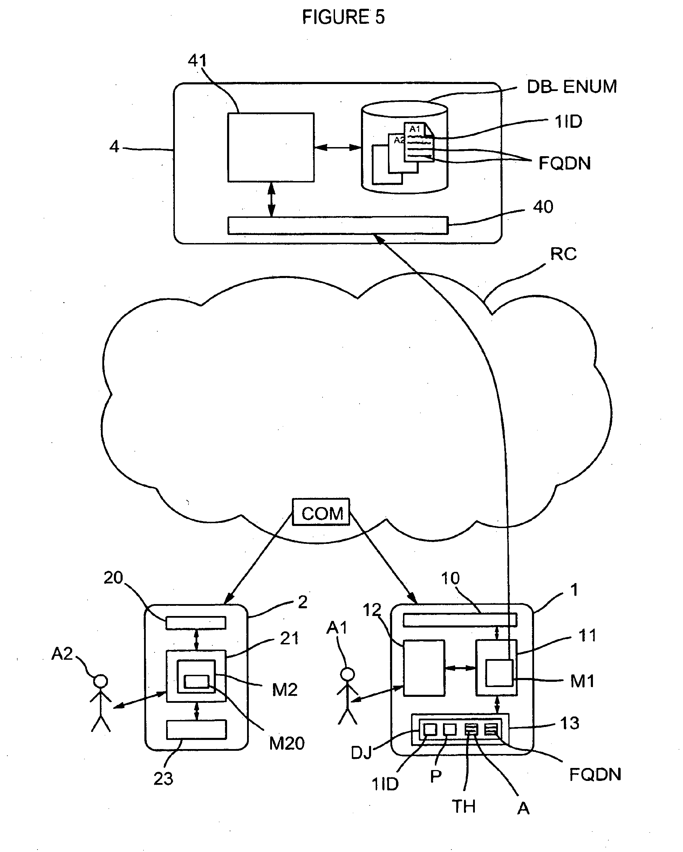

- la figure 5 représente le système selon un autre mode de réalisation de l'invention,

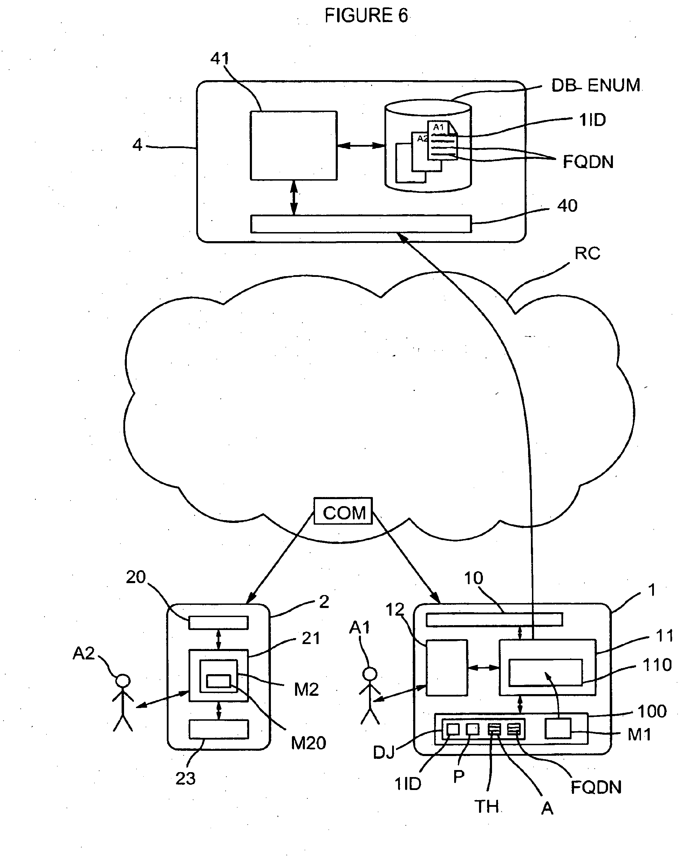

- la figure 6 représente le dispositif portable implémenté dans le terminal appelé, selon un autre mode de réalisation de l'invention,

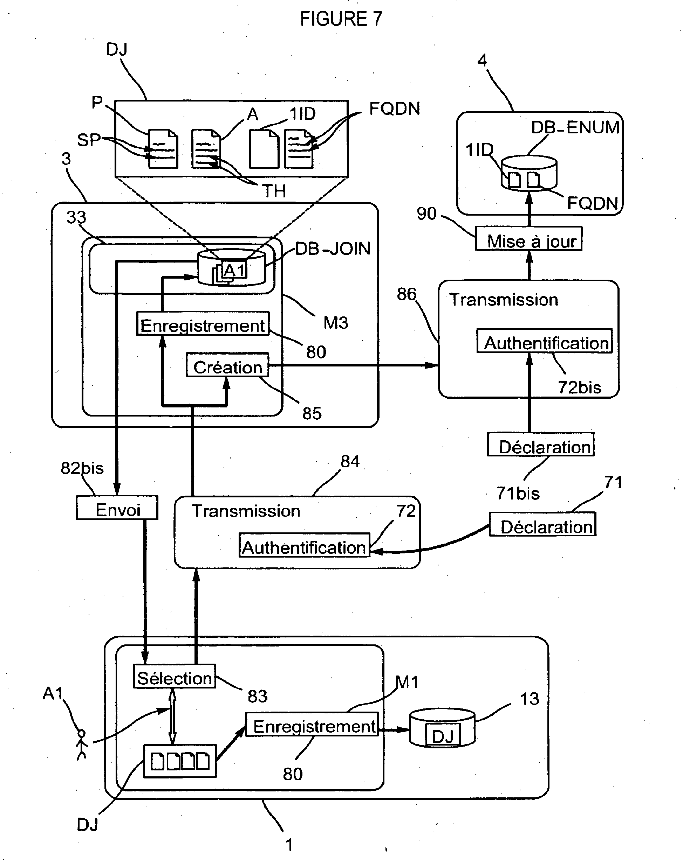

- la figure 7 représente les étapes principales du procédé selon un mode de réalisation de l'invention, mises en oeuvre par le système de la figure 1,

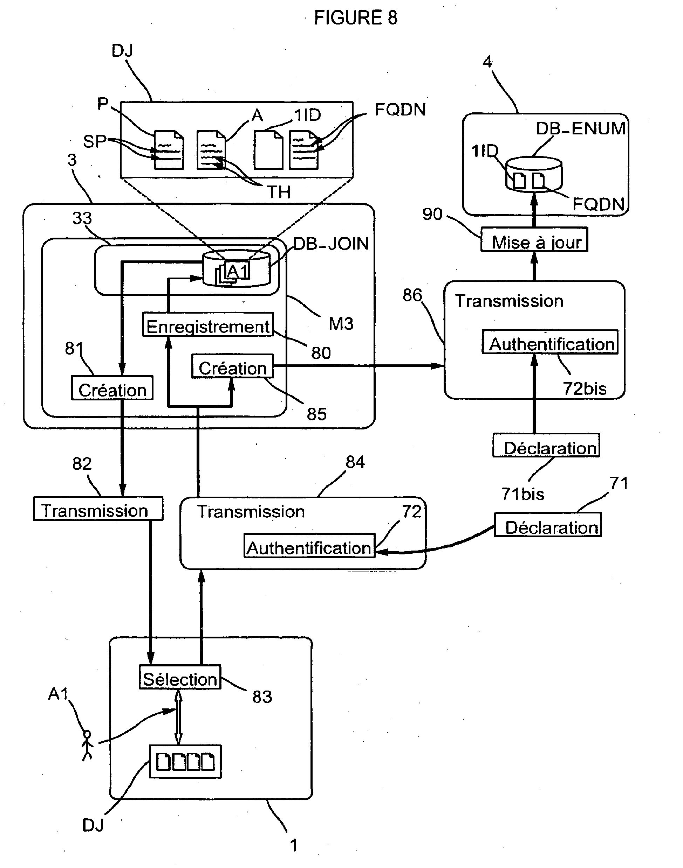

- la figure 8 représente les étapes principales du procédé selon un mode de réalisation de l'invention, mises en oeuvre par le système de la figure 4,

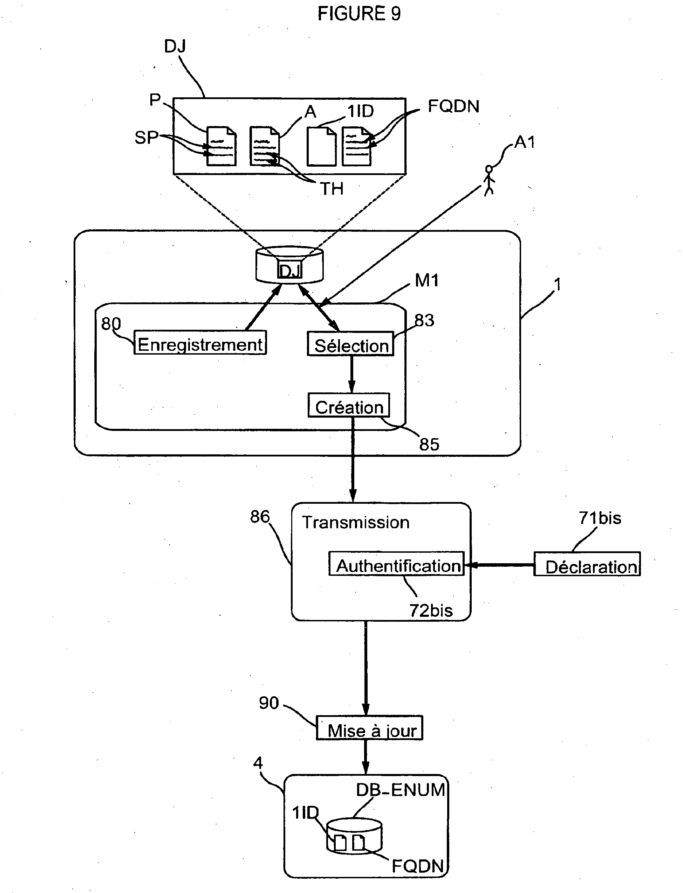

- la figure 9 représente les étapes principales du procédé selon un mode de réalisation de l'invention, mises en oeuvre par le système de la figure 5, ou par le terminal appelé de la figure 6, ou par le dispositif portable implémenté dans le terminal appelé de la figure 6,

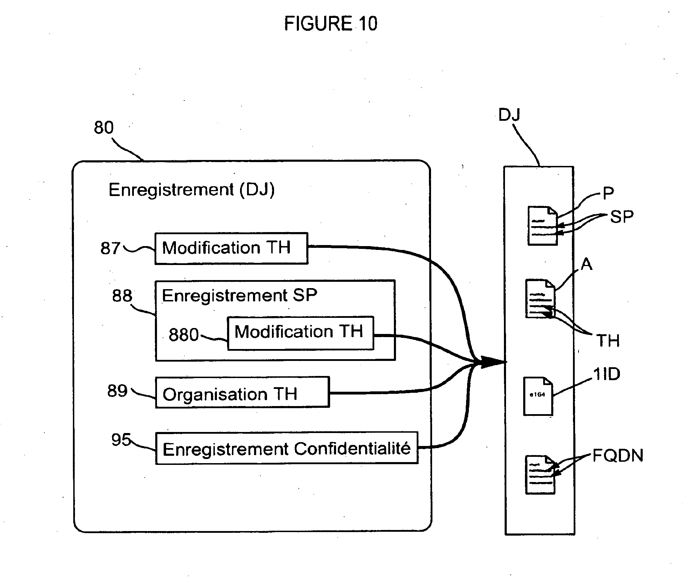

- la figure 10 représente le détail de l'étape d'enregistrement des données de joignabilité selon un mode de réalisation de l'invention,

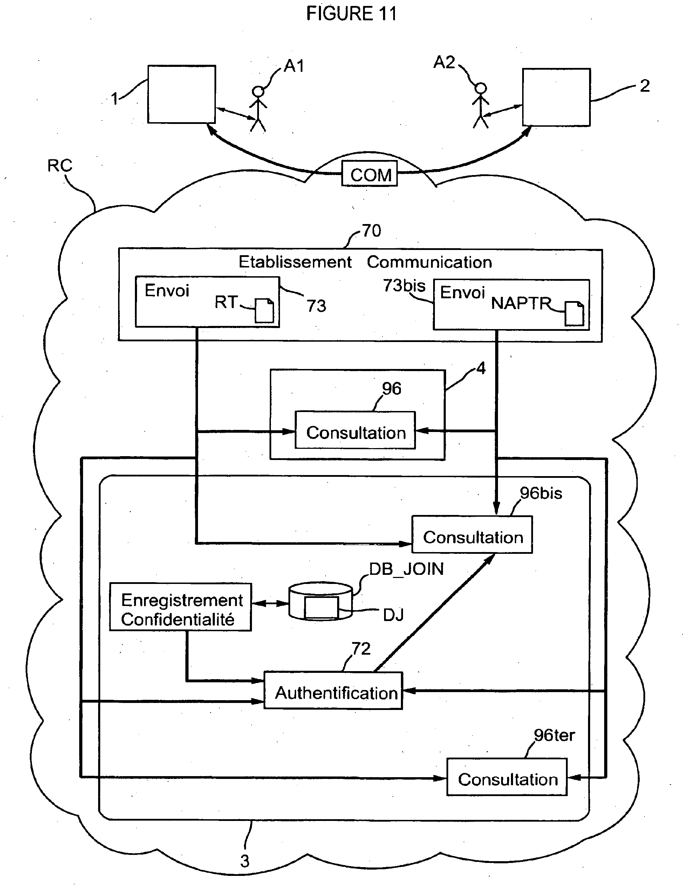

- la figure 11 représente une partie des étapes du procédé selon un mode de réalisation de l'invention,

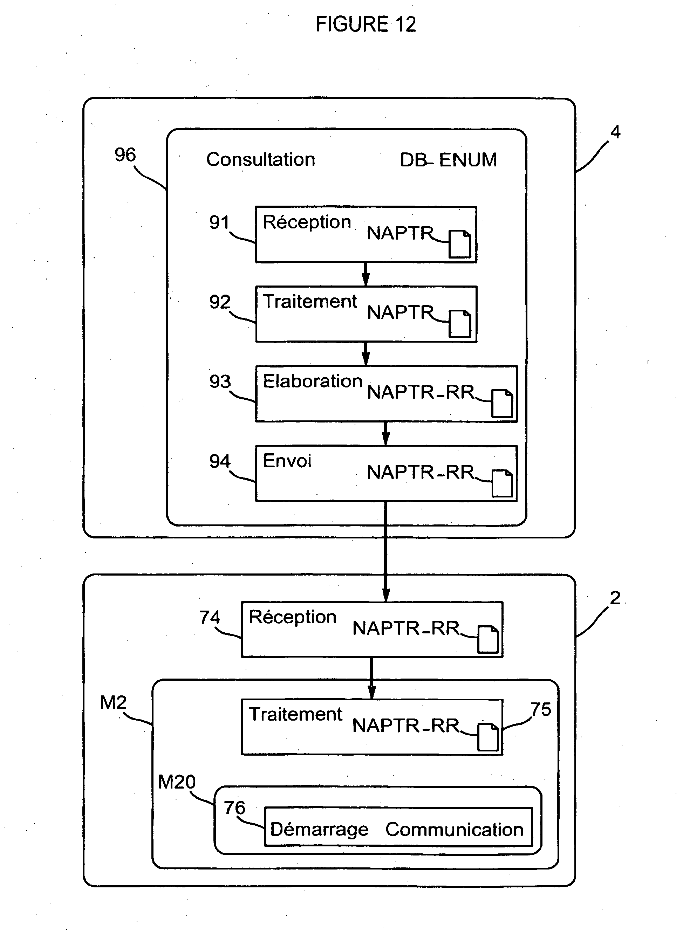

- la figure 12 représente une partie des étapes du procédé selon un mode de réalisation de l'invention,

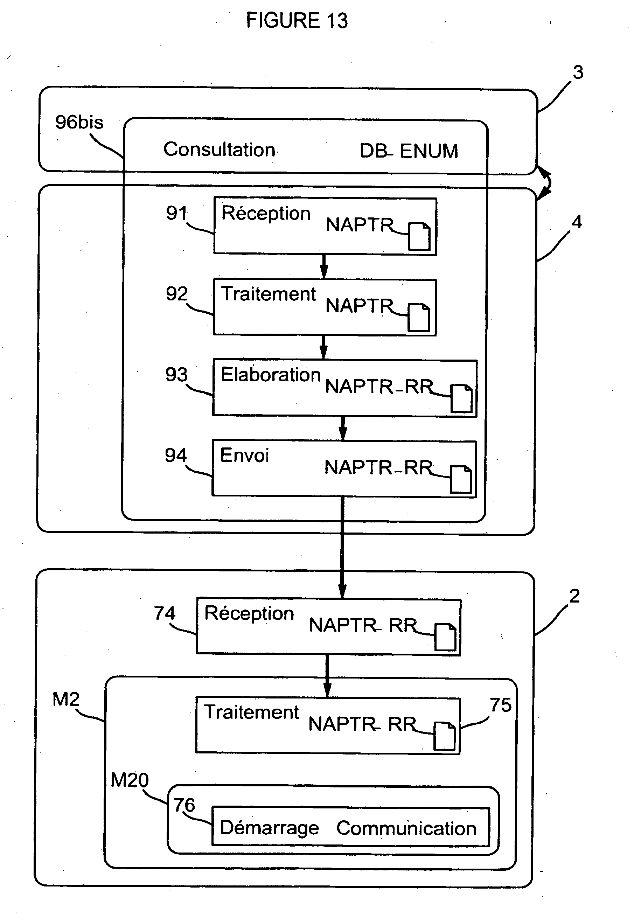

- la figure 13 représente une partie des étapes du procédé selon un mode de réalisation de l'invention,

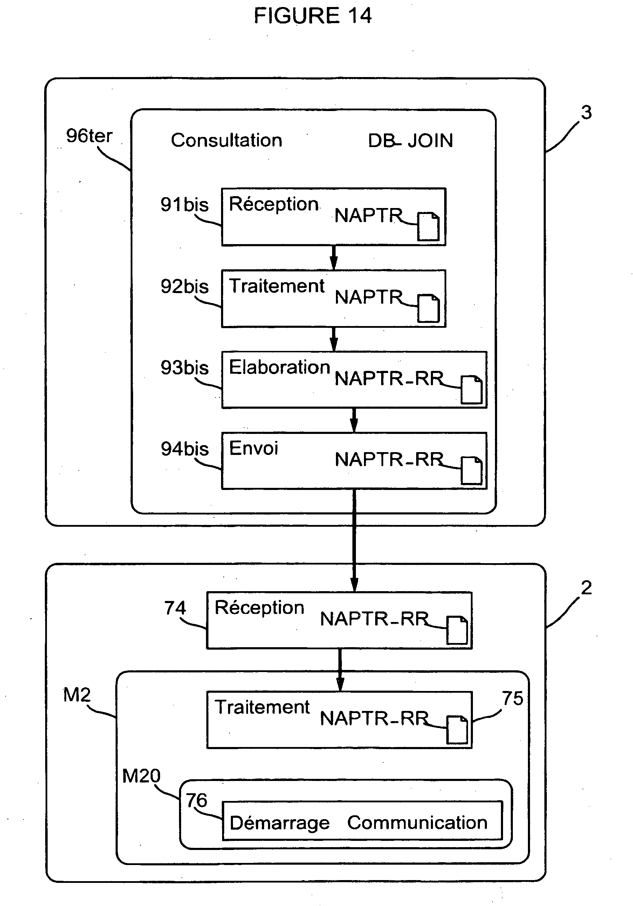

- la figure 14 représente une partie des étapes du procédé selon un mode de réalisation de l'invention.

La présente invention concerne un système, un terminal, un dispositif portable et un procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Par le terme « joignabilité », on entend ici le fait qu'un utilisateur puisse être joint sur un terminal communicant. La notion de joignabilité n'est pas restreinte ici au média de communication utilisé et on considère qu'on joint un utilisateur si on communique avec lui en direct mais également si on communique avec lui en différé, par exemple en lui envoyant un message électronique (par exemple un email ou un SMS) ou en enregistrant un message vocal. De façon générale, la notion de joignabilité correspond ici à l'établissement d'une communication avec un correspondant, à travers tous les média disponibles. L'invention est basée sur l'utilisation des numéros uniques associés aux identifiants de communication des utilisateurs de terminaux communicants, pour offrir différentes fonctionnalités de gestion de la joignabilité des utilisateurs au cours du temps. On considère ici, à titre d'exemple non limitatif, que l'utilisateur ayant enregistré ses identifiants de communication et son numéro « unique » dans la base de données DNS d'un système de type ENUM est un utilisateur « appelé » car cet enregistrement sert à ce qu'il puisse être appelé par ses correspondants (ses contacts). Par le terme «identifiant de communication », on entend ici n'importe quel type d'identifiant qui peut être utilisé pour joindre une personne via un réseau de communication, comme par exemple tout type d'adresse électronique ou de numéro de téléphone. De même, on considère ici, également à titre d'exemple non limitatif, qu'un utilisateur cherchant à joindre cet « appelé » et/ou consultant la base de données DNS d'un système de type ENUM, pour retrouver les identifiants de communication de cet utilisateur « appelé », est un utilisateur « appelant ». Cependant, n'importe quel utilisateur peut bien entendu être appelant ou appelé selon les cas et cette terminologie ne doit être interprétée qu'à titre d'illustration pour expliquer dans quel sens a lieu la mise en relation des deux utilisateurs à un instant donné. L'invention permet d'ailleurs que l'appelant connaisse le numéro « unique » de l'appelé pour obtenir les identifiants de communication, mais également qu'il ne connaisse qu'un seul identifiant de communication de l'appelé et cherche justement à connaître le numéro unique de ce dernier, ou les autres identifiants de communication. Il va donc de soi que l'invention prévoit que le terminal (1) appelé comporte également, en plus de ses moyens de communication et de traitement spécifiques, les mêmes moyens de communication et de traitement que ceux spécifiques du terminal (2) appelant. Inversement, le terminal (2) appelant pourra comporter également, en plus de ses moyens de communication et de traitement spécifiques, les mêmes moyens de communication et de traitement que ceux spécifiques du terminal (1) appelé. Dans ce cas, comme nous le verrons plus loin, le terminal (2) appelant permettra à son utilisateur d'avoir accès à encore plus de fonctionnalités offertes par la présente invention. N'importe quel terminal comportant les moyens adéquats décrits ici devient un terminal appelant ou appelé selon au moins un mode de réalisation de la présente invention, et l'invention prévoit également, comme expliqué ci-après, que ces différents moyens spécifiques soit transposables d'un terminal à un autre.

Par le terme terminal communicant, qu'il soit appelé ou appelant, on entend ici n'importe quel type de terminal muni de moyens de communication sur au moins un réseau (RC) de communication. En effet, comme mentionné précédemment, les réseaux modernes permettent de communiquer via différents médias. Par exemple, les réseaux de téléphonie mobile permettent une navigation de type Internet mais également l'envoi de courriers électroniques (emails ou courriels, selon les terminologies utilisées d'après les langues respectivement anglaise et française). Un terminal donné pourra donc souvent accéder à différents réseaux de communication et on regroupe ici sous le terme de « au moins un réseau de communication » l'ensemble des réseaux disponibles à partir d'un terminal, sachant que ce terminal peut être de n'importe quel type et que le réseau peut en fait donner accès à plusieurs réseaux différents. Ainsi, à titre d'exemple, le terminal communicant pourra consister en un ordinateur muni d'une connexion Internet ou en un téléphone mobile, de dernière génération ou non, pour téléphoner et/ou naviguer sur Internet et/ou sur le WAP (« Wireless Application Protocol ») et/ou envoyer des emails et/ou par n'importe quel type de moyen de communication à courte ou longue distance. L'essentiel ici consiste en ce que le système et le procédé permettent à un utilisateur de définir et gérer, en temps réel, sa joignabilité sur au moins un terminal communicant qu'il a à sa disposition à un instant donné. On décrit donc ici le système et le procédé comme s'inscrivant dans au moins un réseau (RC) de communication. Ce réseau est déployé, de façon connue en soi, par des opérateurs de communication, grâce à un ensemble de terminaux et/ou de serveurs et/ou de relais et/ou d'antennes etc. regroupés ici sous le terme « d'équipement opérateur ». Le système et le procédé s'inscrivant dans cet équipement opérateur, pourront être totalement intégrés dans l'équipement opérateur d'un opérateur de communication, sauf en ce qui concerne les terminaux communicants des utilisateurs bien entendu, puisque ces terminaux ne sont pas intégrés dans l'équipement opérateur mais communiquent grâce à ce dernier. Ainsi, les serveurs du système pourront, dans un mode de réalisation, être implémentés au sein des équipements opérateurs de différents opérateurs de communication. Dans un mode de réalisation décrit en détail dans deux demandes déposées par la demanderesse en même temps que la présente demande, au moins un équipement opérateur est considéré comme appartenant au système car il permet d'aiguiller (et/ou de rediriger) les différentes communications générées au sein du système et de façon particulièrement avantageuse, permet à un utilisateur d'être joignable sur un ou plusieurs de ces identifiants de communication, qu'il aura choisi(s) au préalable. L'invention décrite ici pourra donc être intégrée dans un équipement opérateur ou non, mais les communications nécessitant le passage par un opérateur de communication, ce dernier mettra en oeuvre les moyens nécessaires pour les transmissions de données requises et la mise en relation des utilisateurs au sein d'au moins un réseau de communication, comme expliqué dans les deux demandes déposées par la demanderesse en même temps que la présente demande.

La présente invention, bien qu'ayant été préférentiellement développée dans le cadre du développement du système ENUM défini par la norme RFC 2916 de l'IETF, n'est pas limitée à ce seul exemple de système ni à la version actuelle de la norme correspondante. Ainsi, pour définir plus généralement l'invention, celle-ci s'inscrit dans le cadre de la gestion des identifiants de communication des utilisateurs de services de communication, stockés sur au moins un serveur (4) de centralisation, accessible via au moins un réseau (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication. Ainsi, on ne détaillera pas ici les protocoles utilisés pour l'adressage des données, car l'invention pourra être adaptée en fonction des protocoles utilisés et il est même probable que les fonctionnalités décrites ici soient rendues plus aisées du fait de l'évolution des protocoles standard de communication. Par exemple, une identification de l'utilisateur appelant (décrite plus loin) par le protocole IPv6 sera plus aisée qu'elle ne l'est pour l'instant par le protocole IPv4 utilisé aujourd'hui pour l'envoi de données aux serveurs DNS de centralisation des numéros uniques de type ENUM. De plus, l'identifiant principal ou numéro unique (1ID) est aujourd'hui du type e164, selon les normes en vigueur, mais l'invention permet bien entendu d'utiliser n'importe quel type de format pour cet identifiant principal ou numéro unique (1ID). De même, les média décrits ici ne le sont qu'à titre illustratif car les réseaux de communication modernes permettent de rendre compatibles les communications selon plusieurs média et l'invention permet justement de faire en sorte qu'un terminal puisse être mis en relation avec un autre terminal quelque soit le média, le protocole, le langage et le(s) réseau(x) utilisés, comme détaillé dans les deux autres demandes déposées par la demanderesse en même temps que la présente demande.

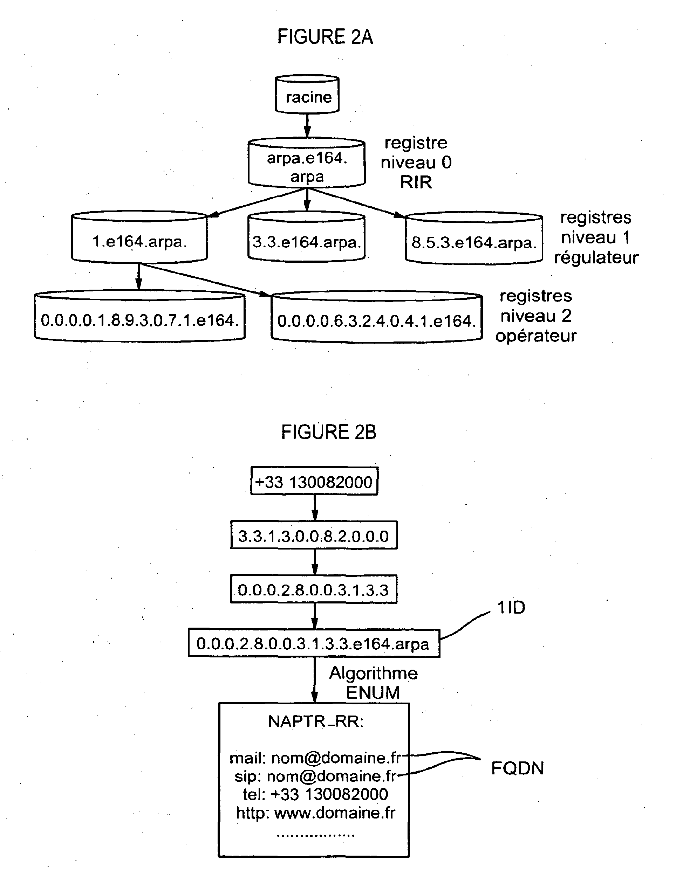

La présente invention vise à permettre la gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Le système comporte au moins un serveur (4) de centralisation, accessible via le(s) réseau(x) (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication. Ce type de serveur (4) de centralisation pourra, de façon connue en soi, être un serveur DNS de type ENUM permettant de délivrer les identifiants de communication d'utilisateurs enregistrés. La figure 2A montre l'organisation hiérarchique de tels serveurs de centralisation, dans l'exemple de la norme ENUM. Ce type de système ENUM est organisé en registres (ou bases de données) hiérarchisés. Une racine renvoie aux registres de niveau 0, qui constituent les « Registres Internet Régionaux » (RIR, pour « Regional Internet Registries » selon la terminologie anglaise). Il existe actuellement quatre RIR : ARIN pour les zones Amérique du Nord - Afrique ; APNIC pour les zones Asie-Pacifique ; LACNIC pour les zones Amériques du Sud - Caraïbes et RIPE NCC pour la zone Europe étendue. Ces registres renvoient aux registres de niveau 1, dit niveau « régulateur » correspondant aux pays de chacune des régions des RIR. Ces registres de niveau 1 renvoient aux registres de niveau 2, dit niveau « opérateur » correspondant aux opérateurs de communication dans chacun des pays. La figure 2B représente schématiquement et succinctement la conversion d'un numéro de téléphone en identifiant principal (« numéro unique ») selon la norme ENUM et l'association de ce numéro unique (1ID) avec une pluralité d'identifiants (FQDN) de communication.

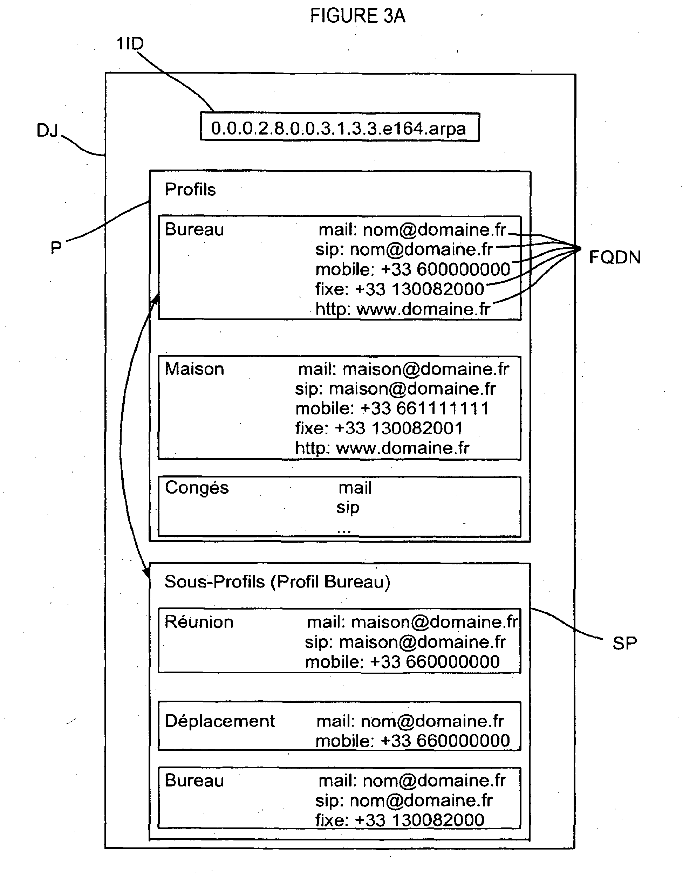

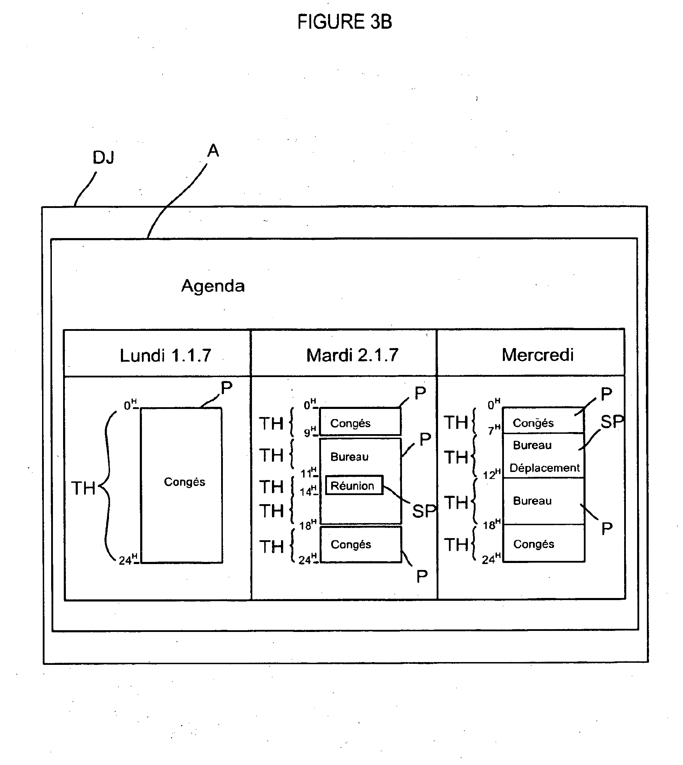

Le système comporte, selon un mode de réalisation de l'invention, au moins un terminal (1) appelé, comportant des moyens (10) de communication via le(s) réseau(x) (RC) de communication, des moyens (11) de traitement de données, des moyens (12) interactifs pour le contrôle du terminal (1) communicant par l'appelé (A1) et des moyens (13) de mémorisation. Les moyens (12) interactifs pour le contrôle du terminal (1) communicant par l'appelé (A1) pourront bien entendu consister, par exemple, en un écran tactile et/ou un clavier (numérique ou alphanumérique) et un écran. De plus, le système comporte au moins un module (M1, M3) de gestion de la joignabilité dont l'implémentation est différente selon les modes de réalisation. Ce module spécifique de la présente invention peut être implémenté soit dans les moyens de traitement (11) du terminal (1) appelé soit dans des moyens de traitement (31) d'au moins un serveur (3) de gestion de la joignabilité des appelés (A1), dit serveur (3) de joignabilité, soit dans les deux, selon les variantes de réalisation décrites ci-après. Le serveur (3) de joignabilité comporte évidemment des moyens (30) de communication le rendant accessible via le(s) réseau(x) (RC) de communication. Le module (ou les modules) (M1 et/ou M3) de gestion est spécifique (ou sont spécifiques) de la présente invention car il est agencé (ou sont agencés) pour, d'une part, contrôler un enregistrement de données, dites données (DJ) de joignabilité permettant aux utilisateurs de gérer leur joignabilité au cours du temps, et pour, d'autre part, mettre à jour le serveur (4) de centralisation, de façon à ce que les données (DJ) de joignabilité conditionnent les données présentes dans le serveur (4) de centralisation. Le module (M1 et/ou M3) contrôle donc un enregistrement dans les moyens (13) de mémorisation du terminal (1) appelé et/ou dans des moyens (33) de mémorisation du serveur (3) de joignabilité, d'au moins certaines données, dites données (DJ) de joignabilité. Ces données de joignabilité comportent des données représentatives d'au moins un numéro unique (1ID) et des données représentatives d'identifiants (FQDN) de communication de l'appelé (A1). De façon particulièrement avantageuse, ces données (DJ) de joignabilité, représentées schématiquement, à titre d'illustration non limitative sur les figures 3A et 3B, pourront comporter des données représentatives d'au moins un profil (P). Ce profil comprend des données représentatives d'identifiants (FQDN) de communication de l'appelé (A1) triés selon un ordre de préférence choisi par l'appelé (A1). Ces données (DJ) de joignabilité pourront également comporter des données représentatives d'au moins un agenda (A) comprenant des données représentatives de tranches horaires (TH) et de paramètres relatifs à l'activation du (ou des) profil(s) (P) pendant les tranches horaires (TH). Les données représentatives de l'ordre de préférence, des tranches horaires (TH) et de l'activation du profil (P) sont déterminées par l'appelé (A1) grâce au(x) module(s) (M1 et/ou M3) de gestion et aux moyens (12) interactifs de son terminal (1) communicant et lui permettent donc de définir les identifiants (FQDN) de communication via lesquels il veut être joint. Le module (M1 et/ou M3) contrôle également une mise à jour des données stockées dans la base (DB_ENUM) de données centralisée du serveur (4) de centralisation, à partir des données (DJ) de joignabilité enregistrées dans les moyens (13 et/ou 33) de mémorisation du terminal (1) appelé et/ou du serveur (3) de joignabilité. Cette mise à jour a lieu lors d'un changement par l'appelé (A1) d'au moins une des données (DJ) de joignabilité et/ou au cours du temps, lors du passage d'une tranche horaire (TH) à une autre.

Dans un premier mode de réalisation détaillé plus loin, les moyens spécifiques du terminal (1) communicant, mentionnés précédemment, comportent des données (DJ) de joignabilité et un module (M1) de gestion de la joignabilité.

Dans un second mode de réalisation, ces moyens spécifiques sont implémentés seulement dans le serveur (3) de joignabilité et le terminal (1) appelé n'est alors plus nécessairement différent des terminaux communicants connus de l'art antérieur. Ce mode de réalisation permet donc qu'un utilisateur ait accès à la présente invention sans que son terminal (1) communicant n'ait été modifié.

Dans un troisième mode de réalisation, ces moyens spécifiques sont implémentés à la fois dans le terminal (1) appelé et dans le serveur (3) de joignabilité et ils coopèrent tous les deux de façon complémentaire.

Le module (M1) de gestion appelé et/ou le module (M3) de gestion serveur contrôle(nt), respectivement, les moyens (10) de communication du terminal (1) appelé et/ou les moyens (30) de communication du serveur (3) de joignabilité pour la mise à jour de la base de données (DB_ENUM) du serveur (4) de centralisation, selon le mode de réalisation. Le(s) module(s) (M1) de gestion appelé et/ou (M3) de gestion serveur gère(nt) les données représentatives des tranches horaires (TH) de façon à ce qu'elles soient modifiables selon les profils (P), de façon à permettre de choisir les heures d'activation des différents profils (P). Ainsi l'appelé (A1) pourra, soit en accédant au serveur (3) de joignabilité, soit directement sur son terminal (1) appelé, soit grâce à la coopération du serveur (3) de joignabilité avec un terminal communicant utilisé par l'appelé (A1) (ce terminal pouvant alors être dénommé terminal (1) appelé), définir à quelles heures les différents profils qu'il a définis seront activés. Comme représenté sur les figures 3A et 3B, il pourra donc prévoir à l'avance sur quel média il pourra être joint par ses correspondants. De plus, comme également représenté sur les figures 3A et 3B, le module (M1) de gestion appelé et/ou le module (M3) de gestion serveur gère(nt), pour chaque profil (P), au moins un sous-profil (SP) pour définir différents ordres de préférence des identifiants (FQDN) de communication en fonction de différentes tranches horaires (TH). Ces données représentatives de ces sous-profils (SP) sont, selon différents modes de réalisation, enregistrées dans la base de données (DB_JOIN) de joignabilité du serveur (3) de joignabilité et/ou dans les moyens (13) de mémorisation du terminal (1) appelé. Pour chaque profil, l'appelé pourra définir des sous-profils lui permettant de choisir ponctuellement les média sur lesquels il veut être joignable, en fonction de son agenda ou de son choix du moment, sans avoir à bouleverser complètement l'organisation de l'un de ses profils (P). Les sous-profils pourront naturellement être activables et désactivables, par exemple de façon à ce que l'appelé soit joignable grâce aux identifiants sélectionnés dans un sous-profil de façon prioritaire par rapport aux identifiants sélectionnés dans le profil dont ce sous-profil dépend lorsque ce dernier est activé, mais que lorsque ce dernier est désactivé, l'appelé soit joignable grâce aux identifiants sélectionnés dans le profil. De plus, pour chaque profil (P) et sous-profil (SP), l'appelé pourra changer les tranches horaires, de façon à ce que la transition entre deux tranches horaires ne soit pas limitée à des heures prédéterminées. L'appelé pourra ainsi gérer précisément l'heure à laquelle se passe cette transition, par exemple à la seconde près. Le(s) module(s) (M1) de gestion appelé et/ou (M3) de gestion serveur gère(nt) donc les données représentatives des tranches horaires (TH) de façon à ce qu'elles soient modifiables selon les sous-profils (SP). Enfin, l'appelé pourra planifier à l'avance l'évolution de son agenda et donc des tranches horaires et de son profil. Pour cela, le module (M1) de gestion appelé et/ou le module (M3) de gestion serveur gère(nt) les données représentatives de l'agenda (A) pour organiser les tranches horaires (TH) par jour et/ou par semaine et/ou par mois et/ou par année. Afin de simplifier la gestion de la joignabilité par l'appelé (A1), l'invention prévoit que les données (DJ) soient compatibles avec les données générées par les logiciels d'organisation d'agenda tels que ceux des téléphones portables, ceux des ordinateurs ou ceux des PDA, quel que soit l'éditeur de ce type de logiciel. L'invention prévoit également que si les données ne sont pas compatibles, le module de gestion comporte des moyens d'importation et/ou d'exportation des données représentatives de l'agenda (A) dans les données (DJ) de joignabilité de l'appelé (A1) et/ou des données représentatives d'agenda dans les logiciels de type connu. Ainsi, l'invention permet une synchronisation (ou une combinaison) automatique des agendas entre eux.

Dans le premier mode de réalisation de l'invention, le module (M1) de gestion est implémenté dans le terminal (1) appelé uniquement. Dans ce mode de réalisation, les moyens (11) de traitement du terminal (1) appelé comportent un module (M1) de gestion, appelé module (M1) de gestion appelé, contrôlant l'enregistrement et la sélection des données (DJ) de joignabilité dans les moyens (13) de mémorisation du terminal (1) appelé. Dans ce mode de réalisation, le module (M1) de gestion du terminal (1) appelé génère également des données compatibles avec le serveur (4) de centralisation, pour la mise à jour de la base de données (DB_ENUM) du serveur (4) de centralisation à partir des données représentatives des identifiants (FQDN) de communication de l'appelé (A1) et/ou de son numéro unique (1 ID), présentes dans les données (DJ) de joignabilité stockées dans les moyens (13) de mémorisation du terminal. Dans ce mode de réalisation, les fonctions du serveur (3) de joignabilité sont déportées sur le terminal (1) appelé qui gère tout seul les données (DJ) de joignabilité et la mise à jour de la base de données (DB_ENUM) du serveur (4) de centralisation.

Dans le second mode de réalisation de l'invention, le module (M3) de gestion est implémenté dans le serveur (3) de joignabilité uniquement. Les moyens (31) de traitement du serveur (3) de joignabilité comportent un module (M3) de gestion, appelé module (M3) de gestion serveur. Les moyens (33) de mémorisation du serveur (3) de joignabilité stockent alors les données (DJ) de joignabilité. Par exemple, ces moyens (33) de mémorisation du serveur (3) de joignabilité pourront comporter au moins une base de données (DB_JOIN), dite de joignabilité, stockant des données relatives à une pluralité d'appelés (A1), ces données comportant des données (DJ) de joignabilité de chacun des appelés (A1). Les données (DJ) de joignabilité des différents utilisateurs enregistrés auprès de gestionnaires du serveur seront donc centralisées dans ce serveur, ce qui permet une mobilité des informations. En effet, un appelé (A1) se connectant au serveur (3) de joignabilité à l'aide de n'importe quel type de terminal communicant, pourra récupérer ses données (DJ) de joignabilité. Dans ce mode de réalisation, le module (M3) de gestion est capable de générer des données qui sont compatibles avec les moyens (11) de traitement du terminal (1) appelé et qui comportent au moins un type de données parmi les données (DJ) de joignabilité. Ces données compatibles pourront, par exemple, consister simplement en des pages Internet de type html (« hypertext mark-up language », selon la terminologie anglaise) ou xml (« extended mark-up language », selon la terminologie anglaise) qui seront affichées par le terminal (1) appelé qui les recevra, sans que cela ne nécessite de modification particulière. Cet exemple de pages Internet est bien entendu utilisé à titre illustratif pour montrer que dans ce mode de réalisation, le serveur (3) de joignabilité peut aisément générer des données compatibles avec le terminal (1) appelé de façon à ce que son utilisateur, c'est-à-dire l'appelé (A1), puisse sélectionner les données (DJ) de joignabilité qu'il souhaite. Dans un autre exemple, ces données compatibles pourront également être envoyées en même temps qu'une application logicielle téléchargeable par le terminal (1) appelé, telle qu'une applet, un plug-in ou tout autre type d'application destinée à être exécutée au sein d'un environnement logiciel en cours d'exécution sur le terminal (1) appelé. Ainsi, le terminal (1) appelé sera rendu compatible avec les données générées par le serveur (3) de joignabilité, sans nécessiter d'autre modification que le téléchargement et l'installation de ce type d'application logicielle. Il doit être évident pour l'homme de métier que le système pourra être programmé pour générer des données échangées entre le serveur (3) de joignabilité et le terminal (1) appelé dans n'importe quel format que l'on sait être compatible entre les différents types de terminaux communicants connus ou que l'on sait pouvoir rendre compatible par l'installation d'applications exécutables au sein d'environnements logiciels exécutés sur les terminaux (1) appelés ou par le téléchargement de données. Dans un autre exemple de réalisation, les données compatibles peuvent consister en des enregistrement vocaux présentant différents choix possibles à l'appelé (A1) qui sélectionne, grâce aux moyens interactifs du terminal (1) appelé, les options qu'il a choisies. Pour cela, le module (M3) de gestion serveur pourra comporter par exemple des moyens de présentation de messages vocaux et des moyens de reconnaissance de tonalité, comme il est connu de l'art antérieur. Ainsi, le module (M3) de gestion serveur permettra la sélection de choix par l'appelé (A1) même à partir d'un téléphone fixe, grâce aux tonalités des touches du téléphone pressées par l'utilisateur pour valider ses choix réalisés en fonction des propositions contenues dans les messages vocaux. Le module (M3) de gestion contrôle les moyens (30) de communication du serveur (3) de joignabilité pour effectuer des transmissions, avec le terminal (1) appelé, de ces données compatibles générées. Ces données compatibles permettent alors la sélection, par l'appelé (A1), grâce aux moyens (11) de traitement et aux moyens (12) interactifs de son terminal (1) appelé, des données à enregistrer dans la base de données (DB_JOIN) de joignabilité du serveur (3) de joignabilité. D'autre part, le module (M3) de gestion serveur est également agencé pour générer des données compatibles avec le serveur (4) de centralisation, de façon à lui transmettre des données qui pourront être enregistrées dans la base de données (DB_ENUM) centralisée. Ainsi, ces données compatibles avec le serveur (4) de centralisation permettront la mise à jour de la base de données (DB_ENUM) du serveur (4) de centralisation à partir de la base de données (DB_JOIN) de joignabilité.

Dans le troisième mode de réalisation, le module (M1, M3) de gestion est implémenté à la fois dans le terminal (1) appelé et dans le serveur (3) de joignabilité. Les moyens (31) de traitement du serveur (3) de joignabilité comportent un module (M3) de gestion, appelé module (M3) de gestion serveur. Les moyens (33) de mémorisation du serveur (3) de joignabilité comportent au moins une base de données (DB_JOIN), dite de joignabilité, stockant des données relatives à une pluralité d'appelés (A1), ces données comportant des données (DJ) de joignabilité de chacun des appelés (A1). De même, les moyens (13) de mémorisation du terminal (1) appelé stockent au moins un type de données parmi les données (DJ) de joignabilité de l'appelé et les moyens (11) de traitement du terminal (1) appelé comportent également un module (M1) de gestion, appelé module (M1) de gestion appelé, complémentaire du module (M3) de gestion serveur. Le module (M1) de gestion appelé et le module (M3) de gestion serveur sont complémentaires l'un de l'autre et fonctionne de manière coordonnée. Dans une variante de réalisation, le module (M1) de gestion appelé pourra consister en une application logicielle téléchargeable par le terminal (1) appelé, telle qu'une applet, un plug-in ou tout autre type d'application destinée à être exécutée au sein d'un environnement logiciel en cours d'exécution sur le terminal (1) appelé. Ainsi, n'importe quel terminal (1) appelé exécutant un environnement logiciel supportant ce type d'application pourra être rendu compatible avec le présent système grâce à l'implémentation d'un module (M1) de gestion appelé dans ses moyens de traitement de données, simplement en se connectant au serveur (3) de joignabilité et en téléchargeant les données nécessaires à cette implémentation. Ces deux modules s'échangent, via le(s) réseau(x) (RC) de communication, des données comportant au moins un type de données parmi les données (DJ) de joignabilité, pour l'enregistrement, dans la base de données (DB_JOIN) de joignabilité, des données représentatives des identifiants (FQDN) de communication de l'appelé (A1) et/ou de son numéro unique (1ID) et/ou de son profil (P) et/ou de son agenda (A), sélectionnées par l'appelé (A1) sur le terminal (1) appelé. Le module (M3) de gestion serveur sert, comme dans le mode de réalisation précédent, d'interface (ou de tampon) entre les terminaux (1) appelés et le serveur (4) de centralisation. Le module (M3) de gestion serveur du serveur (3) de joignabilité génère également des données compatibles avec le serveur (4) de centralisation, pour la mise à jour de la base de données (DB_ENUM) du serveur (4) de centralisation à partir de la base de données (DB_JOIN) de joignabilité. Dans ce mode de réalisation, il se peut que les données de joignabilité ne soient pas présentes dans les moyens (13) de mémorisation du terminal (1) appelé ou que l'appelé (A1) souhaite mettre à jour son terminal (1) appelé à partir du serveur (3) de joignabilité, car il a choisi de centraliser ses identifiants de communication sur ce serveur (3). Dans ce cas, le module (M3) de gestion serveur contrôle les moyens (30) de communication pour l'envoi, vers le terminal (1) appelé, des données représentatives des identifiants (FQDN) de communication de l'appelé (A1) et/ou de son numéro unique (1ID) et/ou de son profil (P) et/ou de son agenda (A), lorsque ces données sont absentes des moyens (13) de mémorisation du terminal (1) appelé et/ou lorsque le module (M1) de gestion appelé le requiert.

Le serveur (4) de centralisation comporte naturellement des moyens (40) de communication, via le(s) réseau(x) (RC) de communication. Ces moyens (40) de communication sont, dans le présent système, agencés, en outre et en particulier, pour la réception de requêtes (NAPTR) d'obtention des identifiants (FQDN) de communication d'un appelé (A1) identifié par son numéro unique (1ID), pour l'envoi d'une réponse comprenant une liste (NAPTR_RR) d'identifiants (FQDN) de communication correspondant au numéro unique (1 ID) de l'appelé (A1) et pour la réception de mises à jour de la base de données (DB_ENUM) centralisée à partir de la base de données (DB_JOIN) de joignabilité. D'autre part, le serveur (4) de centralisation comporte des moyens (41) de traitement de données, en outre et en particulier, pour le traitement des requêtes (NAPTR) d'obtention d'identifiants, l'identification du numéro unique (1ID) de l'appelé (A1) et l'élaboration de la réponse comprenant la liste (NAPTR_RR) d'identifiants (FQDN) de communication correspondants. Le serveur (4) de centralisation tel que décrit dans la présente demande peut naturellement constituer un des serveurs de la hiérarchie d'un système d'identifiants uniques, par exemple tel que ceux de la norme ENUM représentés sur les figures 2A et 2B. L'invention prévoit que ce serveur puisse en fait implémenter les fonctions du serveur (3) de joignabilité. De même, le serveur (3) de joignabilité, s'il implémente les fonctions du serveur (4) de centralisation, pourra constituer un des serveurs de la hiérarchie d'un système d'identifiants uniques, par exemple tel que ceux de la norme ENUM. Ainsi, dans les second et troisième modes de réalisation de la présente invention, où le système fait appel à un serveur (3) de joignabilité, ce dernier peut en fait constituer, en intégrant les moyens spécifiques du serveur (4) de centralisation, un seul et même serveur comportant les deux bases de données (DB_ENUM, DB_JOIN), ainsi que des moyens (31, 41) de traitement de données et des moyens (30, 40) de communication spécifiques à ces deux serveurs, tels que décrits ici. Ces deux serveurs peuvent être implémentés directement dans un équipement opérateur d'un opérateur de communication car il est possible que chacun des opérateurs de communication possède un système d'identifiants uniques, par exemple tel que ceux de la norme ENUM. Cette possibilité et ses implications sont décrites en détail dans les deux demandes déposées par la demanderesse en même temps que la présente demande. De plus, dans un mode de réalisation de l'invention, le serveur (4) de centralisation comporte des moyens (S) d'authentification des appelés (A1) ou des serveur (3) de joignabilité dont le module (M1, M3) met à jour la base de données (DB_ENUM) centralisée, de façon à limiter l'accès à des appelés (A1) ou des serveurs (3) de joignabilité, préalablement enregistrés auprès de gestionnaires du serveur (4) de centralisation. Ainsi, le système permet d'éviter qu'une personne non autorisée ou un serveur non autorisé ne modifie les identifiants (FQDN) de communication d'un utilisateur du présent système.

Dans les second et troisième modes de réalisation de la présente invention, où le système fait appel à un serveur (3) de joignabilité, les moyens (31) de traitement de données de ce dernier pourront, dans une variante de réalisation, comporter également des moyens (S) d'authentification pour identifier les appelés (A1) enregistrant des données de joignabilité dans la base de données (DB_JOIN) du serveur (3) de joignabilité. Ainsi, le système permet de limiter l'accès au module (M3) de gestion à des appelés (A1) préalablement enregistrés auprès de gestionnaires du serveur (3) de joignabilité.

Dans un mode de réalisation de l'invention, les fonctionnalités du présent système sont rendues compatibles également pour les appelants (A2). Ainsi, dans ce mode de réalisation de l'invention, le système comporte également au moins un terminal (2) appelant. Ce terminal (2) appelant comporte naturellement des moyens (20) de communication via le(s) réseau(x) (RC) de communication pour joindre au moins un appelé (A1) sur au moins un terminal (1) appelé, grâce à des requêtes (RT) d'établissement de communication, et communiquer avec ce terminal (1) appelé au travers d'au moins un média. De plus, selon la présente invention, ces moyens (20) de communication peuvent également être agencés pour envoyer des requêtes (NAPTR) d'obtention des identifiants (FQDN) de communication d'un appelé (A1) directement vers le serveur (3) de joignabilité (si ce terminal (2) intègre les fonctionnalités du système) et/ou vers le serveur (4) de centralisation et pour recevoir des réponses contenant des listes (NAPTR_RR) d'identifiants (FQDN) de communication. De façon plus spécifique à la présente invention, ce terminal (2) appelant pourra comporter également des moyens (21) de traitement de données comportant un module de gestion, dit module (M2) de gestion appelant. Dans une variante de réalisation, ce module (M2) de gestion appelant comporte un lanceur (M20) d'application gérant les moyens (20) de communication pour sélectionner le média correspondant à l'identifiant (FQDN) de communication prioritaire dans une liste (NAPTR_RR) reçue. Cette sélection pourra être réalisée manuellement par l'appelant (A2) sur son terminal(2) appelant, par exemple grâce à des moyens interactifs tels qu'un écran tactile et/ou un clavier (numérique ou alphanumérique) et un écran. Dans une variante de réalisation, cette sélection du média par le lanceur (M20) d'application pourra être automatique. Dans cette variante, le lanceur (M20) d'application du module (M2) de gestion appelant, pourra gérer les moyens (20) de communication pour sélectionner les différents média de communication supportés par le terminal (2) appelant. De préférence, le lanceur (M20) d'application tente d'établir une communication via le média correspondant à l'identifiant (FQDN) de communication prioritaire dans la liste (NAPTR_RR) reçue. Cependant, par exemple en cas d'échec de la communication via le média prioritaire, cette sélection pourra être effectuée soit successivement en fonction de la priorité définie d'après la liste des identifiants (FQDN) de communication, soit simultanément en tentant d'établir une communication sur tous les média disponibles en même temps. Au cours de cette sélection automatique, le lanceur (M20) d'application envoie des requêtes d'établissement de communication à un équipement opérateur gérant les communications au sein du réseau et traite la réponse reçue afin d'établir la communication. Dans le cas d'une sélection successive, le lanceur (M20) d'application essaie le média de communication suivant dans la liste de priorité jusqu'à établir une communication, en abandonnant après un nombre déterminé d'itérations infructueuses. Dans le cas d'une sélection simultanée, le lanceur (M20) d'application cesse ses tentatives d'établissement de communication sur les différents média si au moins l'une des communications est établie et abandonne après un nombre déterminé d'itérations infructueuses. De plus, le module (M2) de gestion appelant, pourra également gérer au moins un numéro unique (1ID) et/ou au moins un identifiant (FQDN) de communication, correspondant à au moins un appelé (A1) et mémorisé(s) dans des moyens (23) de mémorisation du terminal (2) appelant. Grâce à ce module (M2) de gestion, qui pourra naturellement être en fait le même module (M1) que celui d'un terminal (1) appelé au sens où on l'entend ici, mais requérant l'obtention des identifiants (FQDN) d'un appelé (A1), ce terminal pourra accéder directement au serveur (3) de joignabilité au lieu du serveur (4). Dans une autre variante possible, expliquée en détail dans les deux autres demandes déposées par la demanderesse en même temps que la présente demande, l'équipement opérateur pourra comporter des moyens de redirection des transmissions de données, pour rediriger le terminal vers les serveur (3) de joignabilité.

De plus, dans la variante de réalisation où le terminal (2) appelant requiert l'obtention des identifiants (FQDN) de communication de l'appelé (A1) directement auprès du serveur (3) de joignabilité, les données stockées dans la base de données (DB_JOIN) de joignabilité pourront, dans une variante supplémentaire, comporter également des données relatives à des paramètres de confidentialité du numéro unique (1ID) et des identifiants (FQDN) de communication de l'appelé (A1). Ces données permettant aux appelés (A1) de définir les appelants (A2) autorisés à obtenir leurs données (DJ) de joignabilité et/ou de définir quelles données ils sont autorisés à obtenir parmi ces données (DJ) de joignabilité. Ainsi, si un terminal (2) appelant requiert l'obtention des identifiants (FQDN) de communication de l'appelé (A1), il sera au préalable identifié par le serveur (3) de joignabilité qui, en fonction de ces paramètres de confidentialité, délivrera les informations requises.

Les différents modes de réalisation du système selon l'invention décrits ici permettent la mise en oeuvre d'un procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Le mode de réalisation le plus général de ce procédé sera mis en oeuvre par un système comportant au moins un terminal (1) appelé, au moins un serveur (4) de centralisation et au moins un module (M1, M3) de gestion, implémenté dans les moyens de traitement (11) du terminal (1) appelé et/ou dans des moyens de traitement (31) d'au moins un serveur (3) de gestion de la joignabilité.

Une première étape principale du procédé selon l'invention consiste en une étape d'enregistrement (80) d'au moins certaines données (DJ) de joignabilité, par le module (M1, M3) de gestion, dans les moyens (13) de mémorisation du terminal (1) appelé et/ou dans des moyens (33) de mémorisation du serveur (3) de joignabilité, selon le mode de réalisation. Cette étape (80) d'enregistrement des données (DJ) de joignabilité comporte au moins une étape de modification (87) des tranches horaires (TH) selon les profils (P), de façon à permettre de choisir les heures d'activation des différents profils (P). De plus, dans une variante de réalisation, cette étape d'enregistrement (80) pourra comporter au moins une étape d'enregistrement (88) d'au moins un sous-profil (SP) pour définir différents ordres de préférence des identifiants (FQDN) de communication en fonction de différentes tranches horaires (TH). Cette étape d'enregistrement (88) d'au moins un sous-profil (SP), par le(s) module(s) (M1, M3) de gestion, comporte une étape (880) de modification des tranches horaires (TH) selon les sous-profils (SP). Enfin, l'étape (80) d'enregistrement des données représentatives des tranches horaires (TH), par le(s) module(s) (M1, M3) de gestion dans les moyens (13, 33) de mémorisation du terminal (1) appelé et/ou du serveur (3) de joignabilité pourra comporter au moins une étape d'organisation (89) des tranches horaires (TH) par jour et/ou par semaine et/ou par mois et/ou par année.

Une seconde étape principale du procédé selon l'invention consiste en une étape de mise à jour (90), par le module (M1, M3) de gestion, des données stockées dans la base (DB_ENUM) de données centralisée du serveur (4) de centralisation, à partir des données (DJ) de joignabilité enregistrées, selon le mode de réalisation, dans les moyens (13 et/ou 33) de mémorisation du terminal (1) appelé et/ou du serveur (3) de gestion. Cette étape de mise à jour pourra avoir lieu automatiquement, lors d'un changement par l'appelé (A1) d'au moins une des données (DJ) de joignabilité et/ou au cours du temps, lors du passage d'une tranche horaire (TH) à une autre. Cette étape de mise à jour (90) comporte une étape de transmission (86), via le(s) réseau(x) (RC) de communication, de données représentatives des identifiants (FQDN) de communication de l'appelé (A1) et/ou de son numéro unique (1ID), par le module (M1, M3) de gestion vers des moyens (40) de communication du serveur (4) de centralisation. Lors du passage automatique d'une tranche horaire (TH) à une autre dans l'agenda (A) stocké sur le serveur (3) de joignabilité, une mise à jour des données (DJ) de joignabilité pourra être automatiquement envoyée au terminal (1) appelé pour qu'ils contiennent les bonnes informations et que l'appelé (A1) soit automatiquement averti des changements d'au moins une de ses données de joignabilité (passage d'un profil à un autre par exemple).

Dans le cas du premier mode de réalisation du système selon l'invention, un premier mode de réalisation du procédé consiste en ce que le module (M1) de gestion appelé met en oeuvre une étape d'enregistrement (80) des données (DJ) de joignabilité dans les moyens (13) de mémorisation du terminal (1) appelé. Dans ce cas, ce module (M1) de gestion appelé permet la mise en oeuvre d'une étape de sélection (83) des données (DJ) de joignabilité dans les moyens (13) de mémorisation du terminal (1) par l'appelé (A1), grâce aux moyens (12) interactifs de son terminal (1) appelé. Ce module (M1) de gestion met également en oeuvre une étape de création (85) de données compatibles avec le serveur (4) de centralisation, pour la mise à jour (90) de la base de données (DB_ENUM) du serveur (4) de centralisation à partir des données sélectionnées représentatives des identifiants (FQDN) de communication de l'appelé (A1) et/ou de son numéro unique (1 ID), présentes dans les données (DJ) de joignabilité stockées dans les moyens (13) de mémorisation du terminal.

Dans le cas du second mode de réalisation du système selon l'invention, un second mode de réalisation du procédé consiste en ce que le module (M3) de gestion serveur met en oeuvre une étape d'enregistrement (80) des données (DJ) de joignabilité dans les moyens (33) de mémorisation du serveur (3) de gestion comportant au moins une base de données (DB_JOIN), dite de joignabilité, stockant des données relatives à une pluralité d'appelés (A1), ces données comportant des données (DJ) de joignabilité de chacun des appelés (A1). Pour la mise en oeuvre de cette étape d'enregistrement (80) des données (DJ) de joignabilité, dans ce mode de réalisation, le module (M3) de gestion serveur met d'abord en oeuvre une étape de création (81) de données compatibles avec les moyens (11) de traitement du terminal (1) appelé et comportant au moins un type de données parmi les données (DJ) de joignabilité. Ensuite, une étape de transmission (82) de ces données compatibles générées vers le terminal (1) appelé, via le(s) réseau(x) (RC) de communication permet à l'appelé (A1) de mettre en oeuvre une étape de sélection (83) parmi les données transmises, grâce aux moyens (11) de traitement et aux moyens (12) interactifs de son terminal (1) appelé, des données à enregistrer dans la base de données (DB_JOIN) de joignabilité du serveur (3) de gestion. Enfin, une étape de transmission (84) des données sélectionnées par le terminal (1) appelé vers le module (M3) de gestion serveur, via le(s) réseau(x) (RC) de communication, permet au module (M3) de gestion serveur, de mettre en oeuvre l'étape proprement dite d'enregistrement (80) de ces données dans la base de données (DB_JOIN) du serveur (3) de joignabilité. Ensuite, une étape de création (85), par le module (M3) de gestion serveur, de données compatibles avec le serveur (4) de centralisation, permet la mise à jour (90) de la base de données (DB_ENUM) du serveur (4) de centralisation à partir de la base de données (DB_JOIN) de joignabilité.

Dans le cas du troisième mode de réalisation du système selon l'invention où le module (M1, M3) de gestion est implémenté à la fois dans le terminal (1) appelé et dans le serveur (3) de gestion, un troisième mode de réalisation du procédé consiste en ce que le module (M3) de gestion serveur et le module (M1) de gestion appelé coopèrent pour l'enregistrement (80) des données de joignabilité dans la base de données (DB_JOIN) de joignabilité et la mise à jour (90) de la base de données (DB_ENUM) centralisée. Cette coopération comporte une étape de sélection (83) par l'appelé (A1), grâce au module (M1) de gestion appelé contrôlant les moyens (12) interactifs et les moyens (13) de mémorisation de son terminal (1) appelé, parmi les données (DJ) de joignabilité stockées dans les moyens (13) de mémorisation du terminal (1) appelé, des données à enregistrer dans la base de données (DB_JOIN) de joignabilité du serveur (3) de gestion. Une étape de transmission (84) des données sélectionnées par le terminal (1) appelé vers le module (M3) de gestion serveur, via le(s) réseau(x) (RC) de communication, permet alors l'enregistrement (80), par le module (M3) de gestion serveur, de ces données dans la base de données (DB_JOIN) du serveur (3) de joignabilité. Ensuite, une étape de création (85), par le module (M3) de gestion serveur, de données compatibles avec le serveur (4) de centralisation, permet la mise à jour (90) de la base de données (DB_ENUM) du serveur (4) de centralisation à partir de la base de données (DB_JOIN) de joignabilité. Dans ce mode de réalisation, l'étape d'enregistrement (80) des données (DJ) de joignabilité, peut être mise en oeuvre également par le module (M1) de gestion appelant, pour enregistrer une copie des données (DJ) de joignabilité dans les moyens (13) de mémorisation de son terminal (1) appelé. Cette étape n'est pas nécessaire mais elle permet que l'appelé ait, dans son terminal, les données de joignabilité et puisse les mettre à jour à partir du serveur (3) de joignabilité ou, à l'inverse, éventuellement modifier celles stockées dans le serveur (3), de joignabilité. L'appelé (A1) a alors le , choix de centraliser ses données de joignabilité sur le serveur (3) de joignabilité ou de plutôt les rendre mobiles et transposables d'un terminal communicant qu'il utilise à un autre. De plus, le procédé peut, dans ce troisième mode de réalisation, comporter une étape d'envoi (82bis), par les moyens (30) de communication du serveur (3) de joignabilité, vers le terminal (1) appelé, des données représentatives des identifiants (FQDN) de communication de l'appelé (A1) et/ou de son numéro unique (1ID) et/ou de son profil (P) et/ou de son agenda (A), lorsque le terminal (1) appelé ne stocke pas ces données et/ou lorsque le module (M1) de gestion appelé le requiert.

Comme mentionné précédemment au sujet du système selon l'invention, le serveur (3) de joignabilité et le serveur (4) de centralisation peuvent constituer un seul et même serveur. Le procédé peut alors comporter une étape d'implémentation des deux bases de données (DB_ENUM, DB_JOIN), ainsi que des moyens (31, 41) de traitement de données et des moyens (30, 40) de communication spécifiques de ces deux serveurs dans l'un ou dans l'autre. L'étape de création (85) de données compatibles avec le serveur (4) de centralisation consiste alors simplement en une conversion d'au moins une partie des données de la base de données (DB_JOIN) de joignabilité en données de la base de données (DB_ENUM). De même, dans ce mode de réalisation, l'étape de transmission (86) de données représentatives des identifiants (FQDN) de communication de l'appelé (A1) et/ou de son numéro unique (1ID), par le module (M3) de gestion serveur vers des moyens (40) de communication du serveur (4) de centralisation, ne sera pas nécessaire. Enfin, l'étape de mise à jour (90) de la base de données (DB_ENUM) du serveur (4) de centralisation consiste alors en un enregistrement de ces données converties dans la base de données (DB_ENUM). Par le terme conversion des données entre les deux bases de données, on entend ici tout type d'opération permettant le transfert d'une base de données à l'autre, qu'il y ait effectivement besoin d'une conversion ou non. De plus, les deux bases de données pourront bien entendu être regroupées en fait en une seule base de données, pour autant que les moyens de traitement de ce serveur unique permettent une gestion des données en fonction de la tâche à exécuter, c'est-à-dire en fonction de ce qui est demandé par le terminal accédant à ces données.

Dans les second et troisième modes de réalisation où le système comporte un serveur (3) de joignabilité, l'invention prévoit une variante de réalisation comportant une étape préalable de déclaration (71) des appelés (A1) auprès de gestionnaires de ce serveur (3) de joignabilité. Dans cette variante, l'étape de transmission (84) de données, pour l'enregistrement (80) dans la base de données (DB_JOIN) de joignabilité, comporte une étape d'authentification (72) de l'appelé (A1) accédant au serveur (3) de joignabilité, par des moyens (S) d'authentification présents dans les moyens (31) de traitement de données du serveur (3) de joignabilité, de façon à limiter l'accès à des appelés (A1) préalablement enregistrés auprès de gestionnaires du serveur (3) de joignabilité au cours de l'étape préalable de déclaration (71) des appelés (A1). Dans une variante supplémentaire, l'étape d'enregistrement (80) du profil (P) dans la base de données (DB_JOIN) de joignabilité comporte également une étape d'enregistrement (95) de données relatives à des paramètres de confidentialité du numéro unique (1 ID) et des identifiants (FQDN) de communication de l'appelé (A1), ces données permettant aux appelés (A1) de définir les appelants (A2) autorisés à obtenir leurs données (DJ) de joignabilité. Dans une variante supplémentaire, l'étape de transmission (86) de données pour la mise à jour (90) de la base de données (DB_ENUM) centralisée comporte une étape d'authentification (72bis) de l'appelé (A1) ou du serveur (3) de joignabilité, par des moyens (S) d'authentification du serveur (4) de centralisation, de façon à limiter l'accès à des appelés (A1) ou des serveurs (3) de joignabilité, préalablement enregistrés auprès de gestionnaires du serveur (4) de centralisation au cours d'une étape préalable de déclaration (71 bis) des appelés (A1) et des serveurs (3) de joignabilité.

Le procédé selon l'invention est mis en oeuvre lorsqu'un appelant (A2) requiert l'établissement (70) d'une communication (COM) avec un appelé (A1) via le(s) réseau(x) (RC) de communication. Lorsqu'un appelant (A2) requiert l'établissement (70) d'une communication (COM) avec un appelé (A1), via le(s) réseau(x) (RC) de communication, des moyens (20) de communication d'au moins un terminal (2) appelant mettent en oeuvre une étape d'envoi (73), via le(s) réseau(x) (RC) de communication, d'une requête (RT) d'établissement d'une communication, pour joindre au moins un appelé (A1) sur au moins un terminal (1) appelé et communiquer avec ce terminal (1) appelé. Dans d'autres cas, lorsqu'un appelant (A2) requiert l'établissement (70) d'une communication (COM) avec un appelé (A1), via le(s) réseau(x) (RC) de communication, des moyens (20) de communication d'au moins un terminal (2) appelant mettent en oeuvre une étape d'envoi (73bis), via le(s) réseau(x) (RC) de communication, d'une requête (NAPTR) d'obtention des identifiants (FQDN) de communication d'un appelé (A1), pour obtenir les identifiants (FQDN) de l'appelé (A1). Bien entendu, cette étape d'envoi (73bis), par le terminal (2) appelant, d'une requête (NAPTR) d'obtention des identifiants (FQDN) de communication d'un appelé (A1), peut être mise en oeuvre par l'appelant (A2) qui souhaite obtenir les identifiants (FQDN) de communication d'un appelé (A1) même sans requérir d'établissement (70) d'une communication, pour autant que le terminal (2) appelant le permette. Dans le mode de réalisation où le système comporte un terminal (2) appelant comportant un module (M2) de gestion appelant, lorsque l'appelant (A2) requiert l'établissement (70) d'une communication (COM) avec un appelé (A1), cet appelé (A1) est identifié par le module (M2) de gestion appelant, implémenté dans des moyens (21) de traitement de données du terminal (2) appelant, grâce à au moins un numéro unique (1ID) et/ou au moins un identifiant (FQDN) de communication, mémorisé(s) dans des moyens (23) de mémorisation du terminal (2) appelant. De façon connue en soi, l'appelé (A1) peut être identifié par les moyens (21) de traitement de données du terminal (2) appelant, grâce à au moins un numéro unique (1ID) et/ou au moins un identifiant (FQDN) de communication, mémorisé(s) dans des moyens (23) de mémorisation du terminal (2) appelant. Cependant, lorsque le terminal (2) appelant comporte un module (M2) de gestion, celui-ci permet de gérer le numéro unique (1 ID) et/ou le(s) identifiant(s) (FQDN) de communication en fonction des réponses reçues du serveur (3) de joignabilité ou du serveur (4) de centralisation.

Le procédé selon l'invention comporte une étape de consultation (96) de la base de données (DB_ENUM) centralisée par le terminal (2) appelant et/ou une étape de consultation (96bis) de la base de données (DB_ENUM) centralisée par le serveur (3) de joignabilité et/ou une consultation (96ter) de la base de données (DB_JOIN) de joignabilité par le module (M3) de gestion serveur. Dans une variante possible, l'étape de consultation (96bis) de la base de données (DB_ENUM) centralisée ou l'étape de consultation (96ter) de la base de données (DB_JOIN) de joignabilité est précédée d'une étape d'authentification (72) des appelants (A2) ayant requis l'établissement (70) d'une communication (COM), par des moyens (S) d'authentification présents dans les moyens (31) de traitement de données du serveur (3) de joignabilité, comme mentionné précédemment. Cette étape (72) d'authentification permet de limiter l'accès à des appelants (A2) préalablement enregistrés par les appelés (A1), lors de l'étape (95) d'enregistrement des paramètres de confidentialité, comme étant autorisés à obtenir leurs données (DJ) de joignabilité. L'étape de consultation (96) de la base de données (DB_ENUM) centralisée est mise en oeuvre par le serveur (4) de centralisation lui-même à la demande du terminal (2) appelant et l'étape de consultation (96bis) de la base de données (DB_ENUM) centralisée est mise en oeuvre par le serveur (4) de centralisation lui-même à la demande du serveur (3) de joignabilité. Ces étapes comportent chacune une étape de réception (91), par des moyens (40) de communication du serveur (4) de centralisation, via le(s) réseau(x) (RC) de communication, de la requête (NAPTR) d'obtention des identifiants (FQDN) de communication d'un appelé (A1) identifié par son numéro unique (1ID). Une étape de traitement (92) de la requête (NAPTR) d'obtention d'identifiants et d'identification du numéro unique (1ID) de l'appelé (A1) dans la base (DB_ENUM) de données centralisée, par les moyens (41) de traitement de données du serveur (4) de centralisation, permet alors une étape d'élaboration (93), par les moyens (41) de traitement de données du serveur (4) de centralisation, d'une réponse comprenant la liste (NAPTR_RR) d'identifiants (FQDN) correspondants. Cette liste (NAPTR_RR) est bien entendu automatiquement limitée en fonction des données (DJ) de joignabilité, grâce à l'étape de mise à jour (90) de la base (DB_ENUM) de données centralisée. Ensuite, les moyens (40) de communication du serveur (4) de centralisation mettent en oeuvre une étape d'envoi (94) de la réponse comprenant une liste (NAPTR_RR) d'identifiants (FQDN) de communication correspondant au numéro unique (1ID) de l'appelé (A1). Cet envoi (94) se fait bien entendu vers le terminal (2) lorsqu'il s'agit d'une consultation (96) de la base de données (DB_ENUM) centralisée par le terminal (2) appelant, mais se fait vers le serveur (3) de joignabilité lorsqu'il s'agit d'une consultation (96bis) de la base de données (DB_ENUM) centralisée par le serveur (3) de joignabilité. Par contre, l'étape de consultation (96ter) de la base de données (DB_JOIN) de joignabilité est mise en oeuvre par le serveur (3) de joignabilité lorsque le système comporte un terminal (2) appelant accédant au serveur (3) de joignabilité au lieu du serveur (4) de centralisation. Cette étape comporte une étape de réception (91 bis), par les moyens (30) de communication du serveur (3) de joignabilité, via le(s) réseau(x) (RC) de communication, de la requête (NAPTR) d'obtention des identifiants (FQDN) de communication d'un appelé (A1) identifié par son numéro unique (1ID). Une étape de traitement (92bis) de la requête (NAPTR) d'obtention d'identifiants et d'identification du numéro unique (1ID) de l'appelé (A1) dans la base (DB_JOIN) de données de joignabilité, par le module (M3) de gestion serveur, permet alors une étape d'élaboration (93bis) d'une réponse comprenant la liste (NAPTR_RR) d'identifiants (FQDN) correspondants. Cette liste (NAPTR_RR) est bien entendu automatiquement limitée en fonction des données (DJ) de joignabilité puisqu'il s'agit ici d'une consultation de la base de données (DB_JOIN) de joignabilité. Enfin, les moyens (30) de communication du serveur (3) de joignabilité mettent en oeuvre une étape d'envoi (94bis) de la réponse comprenant une liste (NAPTR_RR) d'identifiants (FQDN) de communication correspondant au numéro unique (1ID) de l'appelé (A1) vers le terminal (2) appelant.

Dans les différentes variantes de réalisation décrites ci-dessus, lorsque le terminal (2) appelant a requis l'établissement (70) d'une communication (COM) avec un appelé (A1), via le(s) réseau(x) (RC) de communication, l'étape de consultation (96, 96bis) de la base de données (DB_ENUM) centralisée et/ou l'étape de consultation (96ter) de la base de données (DB_JOIN) de joignabilité est(sont) accompagnée(s) d'une étape de réception (74) par les moyens (20) de communication du terminal (2) appelant, de la réponse contenant la liste (NAPTR_RR) d'identifiants (FQDN) de communication de l'appelé (A1). Ensuite, dans la variante de réalisation où le terminal (2) appelant comporte une module (M2) de gestion appelant, ce dernier met en oeuvre une étape de traitement (75) de la réponse contenant la liste (NAPTR_RR) d'identifiants (FQDN) de communication de l'appelé (A1) et démarrage (76) d'une communication (COM), par un lanceur (M20) d'application du module (M2) de gestion appelant, gérant les moyens (20) de communication pour sélectionner le média correspondant à l'identifiant (FQDN) de communication prioritaire dans la liste (NAPTR_RR) reçue. Cette sélection par le lanceur (M20) d'application du terminal (2) appelant pourra être réalisée, comme expliqué précédemment en référence au système selon l'invention, de manière successive ou simultanée.

On comprend à la lecture de la description faite ici, que le présent système peut être composé au minimum d'un terminal (1) communicant stockant des données de joignabilité et comportant un module (M1) de gestion. Ce terminal (1) pourra être de n'importe quel type comme expliqué précédemment. L'invention concerne donc également un terminal (1) communicant de gestion de la joignabilité d'au moins un utilisateur, dit appelé (A1), sur au moins un terminal, dit terminal appelé, via au moins un réseau (RC) de communication, pour la joignabilité de l'appelé (A1) par au moins un utilisateur, dit appelant (A2), sur au moins un terminal (2) communicant, dit terminal (2) appelant. Ce terminal (1) communicant comporte, comme expliqué précédemment, des moyens (10) de communication via le(s) réseau(x) (RC) de communication, des moyens (11) de traitement de données, des moyens (12) interactifs pour le contrôle du terminal (1) communicant par l'appelé (A1) et des moyens (13) de mémorisation. De même que dans le premier mode de réalisation détaillé précédemment, les moyens (11) de traitement du terminal (1) communicant comportent au moins un module (M1) de gestion contrôlant l'enregistrement, dans les moyens (13) de mémorisation du terminal (1) appelé, des données (DJ) de joignabilité. Ces données (DJ) de joignabilité comporteront au moins un type de données parmi des données représentatives d'au moins un numéro unique (1 ID), d'au moins un profil (P) comprenant des données représentatives d'identifiants (FQDN) de communication de l'appelé (A1) triés selon un ordre de préférence et d'au moins un agenda (A) comprenant des données représentatives de tranches horaires (TH) et de paramètres relatifs à l'activation du (ou des) profil(s) (P) pendant les tranches horaires (TH). Ces données représentatives de l'ordre de préférence, des tranches horaires (TH) et de l'activation du profil (P) seront déterminées par l'appelé (A1) grâce au module (M1) de gestion et aux moyens (12) interactifs de son terminal (1) communicant selon l'invention. Le module (M1) de gestion du terminal (1) communicant selon l'invention contrôle également la mise à jour, à partir des données (DJ) de joignabilité, de données stockées dans au moins une base (DB_ENUM) de données, dite centralisée, d'au moins un serveur (4) de centralisation, accessible via le(s) réseau(x) (RC) de communication. Cette base (DB_ENUM) de données centralisée, comme mentionné pour les autres modes de réalisation, stocke des données relatives à une pluralité d'appelés (A1), ces données comportant, pour chaque appelé (A1), un identifiant principal, dit numéro unique (1ID), associé à au moins un identifiant (FQDN) de communication. La mise à jour sera réalisée par le module (M1) de gestion lors d'un changement par l'appelé (A1) d'au moins une des données (DJ) de joignabilité et/ou au cours du temps, lors du passage d'une tranche horaire (TH) à une autre. Cette mise à jour sera permise par le fait que le module (M1) de gestion du terminal (1) communicant, appelé module (M1) de gestion appelé, est agencé pour générer également des données compatibles avec le serveur (4) de centralisation, pour la mise à jour de la base de données (DB_ENUM) du serveur (4) de centralisation à partir des données représentatives des identifiants (FQDN) de communication de l'appelé (A1) et/ou de son numéro unique (1ID), présentes dans les données (DJ) de joignabilité stockées dans les moyens (13) de mémorisation du terminal.

Dans un autre mode de réalisation, les données (DJ) de joignabilité et le module (M1) de gestion pourront être enregistrés dans un dispositif (100) électronique portable lisible par un terminal communicant. Ainsi, ce dispositif portable permet à l'appelé (A1) d'avoir toujours sur lui les moyens nécessaires pour mettre en oeuvre la présente invention. Ce dispositif portable pourra, par exemple, consister en une clé USB (« Universal Sérial Bus », selon la terminologie anglaise), une carte SIM (Subscriber Identity Module », selon la terminologie anglaise), une carte SD (« secure digital », selon la terminologie anglaise) ou n'importe quel type de dispositif portable comportant une mémoire et lisible par un terminal communicant permettant l'exécution du module (M1) de gestion appelé (A1) stocké dans le dispositif portable, par exemple au sein d'un environnement logiciel de communication implémenté dans le terminal communicant. Par exemple, une clé USB ou une carte SIM ou une carte SD, pourra stocker les données (DJ) de joignabilité et des données nécessaires à l'exécution du module (M1) de gestion au sein d'un environnement logiciel tel que, par exemple, un navigateur Internet ou tout autre type de logiciel de communication avec le serveur (4) de centralisation. L'invention concerne donc également un dispositif (100) électronique portable de gestion de la joignabilité d'au moins un utilisateur, dit appelé (A1), sur au moins un terminal, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Le terminal (1) appelé comporte, comme dans les autres modes de réalisation, des moyens (10) de communication via le(s) réseau(x) (RC) de communication, des moyens (11) de traitement de données, des moyens (12) interactifs pour le contrôle du terminal (1) communicant par l'appelé (A1) et des moyens (13) de mémorisation. Dans ce mode de réalisation de l'invention, les moyens (11) de traitement du terminal (1) communicant exécutent au moins une application (110) logicielle de communication via le(s) réseau(x) (RC) de communication. Le dispositif (100) portable de gestion comporte au moins une mémoire accessible en lecture et en écriture par le terminal (1) communicant et stockant au moins un type de données (DJ) de joignabilité. Ces données consisteront, comme dans les autres modes de réalisation, en au moins un type de données parmi des données représentatives d'au moins un numéro unique (1ID), d'au moins un profil (P) comprenant des données représentatives d'identifiants (FQDN) de communication de l'appelé (A1) triés selon un ordre de préférence et d'au moins un agenda (A) comprenant, des données représentatives de tranches horaires (TH) et de paramètres relatifs à l'activation du (ou des) profil(s) (P) pendant les tranches horaires (TH). Les données représentatives de l'ordre de préférence, des tranches horaires (TH) et de l'activation du profil (P) seront déterminées par l'appelé (A1) grâce aux moyens (12) interactifs de son terminal (1) communicant et à au moins un module (M1) de gestion de la joignabilité. De plus, la mémoire du dispositif (100) portable de gestion stockera au moins un type de données permettant l'exécution, au sein de l'application (110) logicielle de communication du terminal (1) communicant, d'au moins un module (M1) de gestion de la joignabilité contrôlant la mise à jour, à partir des données (DJ) de joignabilité, de données stockées dans au moins une base (DB_ENUM) de données, dite centralisée, d'au moins un serveur (4) de centralisation accessible via le(s) réseau(x) (RC) de communication, la base (DB_ENUM) de données centralisée stockant des données relatives à une pluralité d'appelés (A1), ces données comportant, pour chaque appelé (A1), un identifiant principal, dit numéro unique (1ID), associé à au moins un identifiant (FQDN) de communication, la mise à jour étant réalisée par le module (M1) de gestion lors d'un changement par l'appelé (A1) d'au moins une des données (DJ) de joignabilité et/ou au cours du temps, lors du passage d'une tranche horaire (TH) à une autre. Pour la mise à jour de la base de données (DB_ENUM) du serveur (4) de centralisation, à partir des données représentatives des identifiants (FQDN) de communication de l'appelé (A1) et/ou de son numéro unique (1 ID), présentes dans les données (DJ) de joignabilité stockées dans les moyens (13) de mémorisation du terminal, le module (M1) de gestion du dispositif (100) portable de gestion est agencé pour générer également des données compatibles avec le serveur (4) de centralisation, comme expliqué précédemment.

Dans ce mode de réalisation, où l'invention est implémentée dans un dispositif (100) portable de gestion permettant l'exécution du module (M1) de gestion dans l'environnement logiciel fourni par une application (110) logicielle exécutée sur un terminal (1) communicant, l'invention prévoit également un procédé de gestion de la joignabilité. Ce procédé consiste en un procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Dans ce mode de réalisation, ce procédé est mis en oeuvre grâce à au moins un dispositif (100) électronique portable de gestion de la joignabilité, comportant une mémoire accessible en lecture et en écriture par le terminal (1) communicant et stockant au moins un type de données permettant l'exécution d'au moins un module (M1) de gestion au sein d'une application (110) logicielle de communication en cours d'exécution sur des moyens (11) de traitement de données d'au moins un terminal (1) communicant comportant des moyens (10) de communication via le(s) réseau(x) (RC) de communication, des moyens (12) interactifs pour le contrôle du terminal (1) communicant par l'appelé (A1) et des moyens (13) de mémorisation. Ce procédé comporte au moins une étape d'enregistrement (80), par le module (M1) de gestion, dans la mémoire du dispositif (100) portable de gestion et/ou dans les moyens (13) de mémorisation du terminal (1) appelé, de données (DJ) de joignabilité. Ces données (DJ) de joignabilité consistent en au moins un type de données parmi des données représentatives d'au moins un numéro unique (1 ID), d'au moins un profil (P) comprenant des données représentatives d'identifiant (FQDN) de communication de l'appelé (A1) triés selon un ordre de préférence et d'au moins un agenda (A) comprenant des données représentatives de tranches horaires (TH) et de paramètres relatifs à l'activation du (ou des) profil(s) (P) pendant les tranches horaires (TH). Comme expliqué précédemment, les données représentatives de l'ordre de préférence, des tranches horaires (TH) et de l'activation du profil (P) sont déterminées par l'appelé (A1) grâce au module (M1) de gestion et aux moyens (12) interactifs du terminal (1) communicant. Le procédé selon ce mode de réalisation de l'invention comporte également au moins une étape de mise à jour (90), par le module (M1) de gestion, à partir des données (DJ) de joignabilité, de données stockées dans au moins une base (DB_ENUM) de données, dite centralisée, d'au moins un serveur (4) de centralisation, accessible via le(s) réseau(x) (RC) de communication. Comme précédemment, la base (DB_ENUM) de données centralisée stocke des données relatives à une pluralité d'appelés (A1), ces données comportant, pour chaque appelé (A1), un identifiant principal, dit numéro unique (1ID), associé à au moins un identifiant (FQDN) de communication. Cette étape de mise à jour (90) est mise en oeuvre, comme précédemment, par le module (M1) de gestion lors d'un changement par l'appelé (A1) d'au moins une des données (DJ) de joignabilité et/ou au cours du temps, lors du passage d'une tranche horaire (TH) à une autre. De plus cette mise à jour est permise par une étape de création (85), par le module (M1) de gestion, de données compatibles avec le serveur (4) de centralisation.

L'homme de métier comprendra aisément que dans ces modes de réalisation où l'invention est mise en oeuvre par un module (M1) de gestion d'un terminal (1) communicant autonome ou par un dispositif (100) portable comportant une mémoire accessible en lecture et en écriture par un terminal (1) communicant pour l'exécution d'un module (M1) de gestion, les différents moyens du système et les différentes étapes du procédé décrits pour les autres modes de réalisation pourront également être mis en oeuvre, pour autant que ces moyens et ces étapes ne concernent pas le serveur (3) de gestion.

On comprend, à la lecture de la présente demande, que la présente invention a atteint les buts qu'elle s'était fixée en proposant différents modes de réalisation supprimant les inconvénients de l'art antérieur. Par exemple, en ce qui concerne l'impossibilité d'émettre des requêtes (NAPTR) directement vers un serveur (4) de centralisation, au travers d'un pare-feu, l'invention permet de contourner le problème en proposant un envoi de cette requête directement vers le serveur (3) de joignabilité. Ce dernier pourra alors consulter la base de données (DB_JOIN) de joignabilité pour renvoyer la liste des identifiants (FQDN) de communication de l'appelé (A1) ou pourra en général alors envoyer une requête (NAPTR) vers le serveur (4) de centralisation car les serveurs sont généralement agencés pour permettre des communications vers plus de ports que ne le permettent les terminaux des utilisateurs ou' les réseaux locaux par lesquels ils se connectent. De même, lorsqu'un terminal (2) appelant envoie une requête (RT) d'établissement d'une communication, le serveur (3) de joignabilité pourra consulter la base de données (DB_JOIN) de joignabilité pour obtenir la liste des identifiants (FQDN) de communication de l'appelé (A1) et ou pourra consulter le serveur (4) de centralisation. De plus, comme expliqué dans les deux demandes déposées par la demanderesse en même temps que la présente demande, un équipement opérateur pourra éventuellement générer lui-même une requête (NAPTR) d'obtention des identifiants (FQDN) de communication de l'appelé (A1) lorsqu'un terminal (2) appelant envoie une requête (RT) d'établissement d'une communication (COM). L'équipement opérateur pourra naturellement consulter aussi bien le serveur (3) de joignabilité que le serveur (4) de centralisation puisque ses ports ne seront pas limités par un pare-feu.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant, le système comportant :
• au moins un serveur (4) de centralisation, accessible via le réseau/les réseaux (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication,
• au moins un terminal (1) appelé, comportant des moyens (10) de communication via le réseau/les réseaux (RC) de communication, des moyens (11) de traitement de données, des moyens (12) interactifs pour le contrôle du terminal (1) communicant par l'appelé (A1) et des moyens (13) de mémorisation,
le système étant **caractérisé en ce qu'**il comporte :
• au moins un module (M1) de gestion, implémenté dans les moyens de traitement (11) du terminal (1) appelé, comportant des moyens (10) de communication le rendant accessible via le réseau/les réseaux (RC) de communication, le module (M1) de gestion contrôlant :
- un enregistrement dans les moyens (13) de mémorisation du terminal (1) appelé, d'au moins certaines données, dites données (DJ) de joignabilité, parmi des données représentatives d'au moins un numéro unique (1ID), d'au moins un profil (P) comprenant des données représentatives d'identifiants (FQDN) de communication de l'appelé (A1) triés selon un ordre de préférence et d'au moins un agenda (A) comprenant des données représentatives de tranches horaires (TH) et de paramètres relatifs à l'activation du profil/des profils (P) pendant les tranches horaires (TH), les données représentatives de l'ordre de préférence, des tranches horaires (TH) et de l'activation du profil (P) étant déterminées par l'appelé (A1) grâce au module (M1) de gestion et aux moyens (12) interactifs de son terminal (1) communicant,
- une mise à jour des données stockées dans la base (DB_ENUM) de données centralisée du serveur (4) de centralisation, à partir des données (DJ) de joignabilité enregistrées dans les moyens (13) de mémorisation du terminal (1) appelé, lors d'un changement par l'appelé (A1) d'au moins une des données (DJ) de joignabilité et/ou au cours du temps, lors du passage d'une tranche horaire (TH) à une autre.

2. Système selon la revendication 1, **caractérisé en ce que** le module (M1) de gestion est implémenté dans le terminal (1) appelé, les moyens (11) de traitement du terminal (1) appelé comportant un module (M1) de gestion, appelé module (M1) de gestion appelé, contrôlant l'enregistrement et la sélection, dans les moyens (13) de mémorisation du terminal (1) appelé, des données (DJ) de joignabilité, le module (M1) de gestion du terminal (1) appelé générant également des données compatibles avec le serveur (4) de centralisation, pour la mise à jour de la base de données (DB_ENUM) du serveur (4) de centralisation à partir des données représentatives des identifiants (FQDN) de communication de l'appelé (A1) et/ou de son numéro unique (1 ID), présentes dans les données (DJ) de joignabilité stockées dans les moyens (13) de mémorisation du terminal.

3. Système selon la revendication 1 et 2, **caractérisé en ce que** le module (M1) et un module (M3) de gestion sont implémentés respectivement dans le terminal (1) appelé et dans un serveur (3) de gestion de la joignabilité des abonnés (A1), dit serveur (3) de joignabilité, les moyens (31) de traitement du serveur (3) de joignabilité comportant un module (M3) de gestion, appelé module (M3) de gestion serveur, les moyens (33) de mémorisation du serveur (3) de joignabilité comportant au moins une base de données (DB_JOIN), dite de joignabilité, stockant des données relatives à une pluralité d'appelés (A1), ces données comportant des données (DJ) de joignabilité de chacun des appelés (A1), les moyens (13) de mémorisation du terminal (1) appelé stockant au moins un type de données parmi les données (DJ) de joignabilité de l'appelé, les moyens (11) de traitement du terminal (1) appelé comportant également un module (M1) de gestion, appelé module (M1) de gestion appelé, complémentaire du module (M3) de gestion serveur, le module (M1) de gestion appelé et le module (M3) de gestion serveur s'échangeant, via le réseau/les réseaux (RC) de communication, des données comportant au moins un type de données parmi les données (DJ) de joignabilité, pour l'enregistrement, dans la base de données (DB_JOIN) de joignabilité, des données représentatives des identifiants (FQDN) de communication de l'appelé (A1) et/ou de son numéro unique (1ID) et/ou de son profil (P) et/ou de son agenda (A), sélectionnées par l'appelé (A1) sur le terminal (1) appelé, le module (M3) de gestion serveur générant également des données compatibles avec le serveur (4) de centralisation, pour la mise à jour de la base de données (DB_ENUM) du serveur (4) de centralisation à partir de la base de données (DB_JOIN) de joignabilité.

4. Système selon la revendication 3, **caractérisé en ce que** le module (M3) de gestion serveur contrôle les moyens (30) de communication pour l'envoi, vers le terminal (1) appelé, des données représentatives des identifiants (FQDN) de communication de l'appelé (A1) et/ou de son numéro unique (1ID) et/ou de son profil (P) et/ou de son agenda (A), lorsque ces données sont absentes des moyens (13) de mémorisation du terminal (1) appelé et/ou lorsque le module (M1) de gestion appelé le requiert.

5. Système selon une des revendications 1 à 4, **caractérisé en ce que** le serveur (3) de joignabilité et le serveur (4) de centralisation constituent un seul et même serveur comportant les deux bases de données (DB_ENUM, DB_JOIN), ainsi que des moyens (31, 41) de traitement de données et des moyens (30, 40) de communication spécifiques à ces deux serveurs.

6. Système selon une des revendications 3 à 5, **caractérisé en ce que** le module (M1) de gestion appelé et le module (M3) de gestion serveur contrôlent, respectivement, les moyens (10) de communication du terminal (1) appelé et les moyens (30) de communication du serveur (3) de joignabilité pour la mise à jour de la base de données (DB_ENUM) du serveur (4) de centralisation.

7. Système selon une des revendications 3 à 6, **caractérisé en ce que** le module (M1) de gestion appelé et le module (M3) de gestion serveur gèrent les données représentatives des tranches horaires (TH) de façon à ce qu'elles soient modifiables selon les profils (P), de façon à permettre de choisir les heures d'activation des différents profils (P).

8. Système selon une des revendications 3 à 6, **caractérisé en ce que** le module (M1) de gestion appelé et le module (M3) de gestion serveur gèrent, pour chaque profil (P), au moins un sous-profil (SP) pour définir différents ordres de préférence des identifiants (FQDN) de communication en fonction de différentes tranches horaires (TH), les données représentatives de ces sous-profils (SP) étant enregistrées dans la base de données (DB_JOIN) de joignabilité du serveur (3) de joignabilité et dans les moyens (13) de mémorisation du terminal (1) appelé.

9. Système selon la revendication 8, **caractérisé en ce que** le module (M1) de gestion appelé et le module (M3) de gestion serveur gèrent les données représentatives des tranches horaires (TH) de façon à ce qu'elles soient modifiables selon les sous-profils (SP).

10. Système selon une des revendications 3 à 9, **caractérisé en ce que** le module (M1) de gestion appelé et le module (M3) de gestion serveur gèrent les données représentatives de l'agenda (A) pour organiser les tranches horaires (TH) par jour et/ou par semaine et/ou par mois et/ou par année.

11. Système selon une des revendications 3 à 10, **caractérisé en ce que** les moyens (31) de traitement de données du serveur (3) de joignabilité comportent également des moyens (S) d'authentification pour identifier les appelés (A1) enregistrant des données de joignabilité dans la base de données (DB_JOIN) du serveur (3) de joignabilité et limiter l'accès au module (M3) de gestion à des appelés (A1) préalablement enregistrés auprès de gestionnaires du serveur (3) de joignabilité.

12. Système selon une des revendications 3 à 11, **caractérisé en ce que** les données stockées dans la base de données (DB_JOIN) de joignabilité comporte également des données relatives à des paramètres de confidentialité du numéro unique (1ID) et des identifiants (FQDN) de communication de l'appelé (A1), ces données permettant aux appelés (A1) de définir les appelants (A2) autorisés à obtenir leurs données (DJ) de joignabilité et/ou de définir quelles données ils sont autorisés à obtenir parmi ces données (DJ) de joignabilité.

13. Système selon une des revendications 1 à 12, **caractérisé en ce que** le serveur (4) de centralisation comporte des moyens (S) d'authentification des appelés (A1) ou des serveurs (3) de joignabilité dont le module (M1) et le module (M3) mettent à jour la base de données (DB_ENUM) centralisée, de façon à limiter l'accès à des appelés (A1) ou des serveurs (3) de joignabilité, préalablement enregistrés auprès de gestionnaires du serveur (4) de centralisation.

14. Système selon une des revendications 1 à 13, **caractérisé en ce que** le serveur (4) de centralisation comporte :
- des moyens (40) de communication, via le réseau/les réseaux (RC) de communication, pour la réception de requêtes (NAPTR) d'obtention des identifiants (FQDN) de communication d'un appelé (A1) identifié par son numéro unique (1ID), pour l'envoi d'une réponse comprenant une liste (NAPTR_RR) d'identifiants (FQDN) de communication correspondant au numéro unique (1ID) de l'appelé (A1) et pour la réception de mises à jour de la base de données (DB_ENUM) centralisée à partir de la base de données (DB_JOIN) de joignabilité,
- des moyens (41) de traitement de données pour le traitement des requêtes (NAPTR) d'obtention d'identifiants, l'identification du numéro unique (1ID) de l'appelé (A1) et l'élaboration de la réponse comprenant la liste (NAPTR_RR) d'identifiants (FQDN) correspondants.

15. Système selon une des revendications 1 à 14, **caractérisé en ce qu'**il comporte également au moins un terminal (2) appelant, comportant :
- des moyens (20) de communication via le réseau/les réseaux (RC) de communication pour joindre au moins un appelé (A1) sur au moins un terminal (1) appelé, grâce à des requêtes (RT) d'établissement de communication, et communiquer avec ce terminal (1) appelé au travers d'au moins un média, et/ou pour envoyer des requêtes (NAPTR) d'obtention des identifiants (FQDN) de communication d'un appelé (A1) directement vers le serveur (3) de joignabilité et/ou le serveur (4) de centralisation et pour recevoir des réponses contenant des listes (NAPTR_RR) d'identifiants (FQDN) de communication,
- des moyens (21) de traitement de données comportant un module de gestion, dit module (M2) de gestion appelant, comportant un lanceur (M20) d'application gérant les moyens (20) de communication pour sélectionner le média correspondant à l'identifiant (FQDN) de communication prioritaire dans une liste (NAPTR_RR) reçue.

16. Système selon la revendication 15, **caractérisé en ce que** le module (M2) de gestion appelant, gère au moins un numéro unique (1ID) et/ou au moins un identifiant (FQDN) de communication, correspondant à au moins un appelé (A1) et mémorisé/mémorisés dans des moyens (23) de mémorisation du terminal (2) appelant.

17. Procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant, mis en oeuvre par un système comportant :
- au moins un terminal (1) appelé comportant des moyens (10) de communication via le réseau/les réseaux (RC) de communication, des moyens (11) de traitement de données, des moyens (12) interactifs pour le contrôle du terminal (1) communicant par l'appelé (A1) et des moyens (13) de mémorisation,
- au moins un serveur (4) de centralisation, accessible via le réseau/les réseaux (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication,
- au moins un module (M1) de gestion, implémenté dans les moyens de traitement (11) du terminal (1) appelé, comportant des moyens (30) de communication le rendant accessible via le réseau/les réseaux (RC) de communication,
le procédé étant **caractérisé en ce qu'**il comporte les étapes suivantes :
- enregistrement (80), par le module (M1) de gestion, dans les moyens (13) de mémorisation du terminal (1) appelé, d'au moins certaines données, dites données (DJ) de joignabilité, parmi des données représentatives d'au moins un numéro unique (1ID), d'au moins un profil (P) comprenant des données représentatives d'identifiants (FQDN) de communication de l'appelé (A1) triés selon un ordre de préférence et d'au moins un agenda (A) comprenant des données représentatives de tranches horaires (TH) et de paramètres relatifs à l'activation du profil/des profils (P) pendant les tranches horaires (TH), les données représentatives de l'ordre de préférence, des tranches horaires (TH) et de l'activation du profil (P) étant déterminées par l'appelé (A1) grâce au module (M1) de gestion et aux moyens (12) interactifs de son terminal (1) communicant,
- mise à jour (90), par le module (M1) de gestion, des données stockées dans la base (DB_ENUM) de données centralisée du serveur (4) de centralisation, à partir des données (DJ) de joignabilité enregistrées dans les moyens (13) de mémorisation du terminal (1) appelé, lors d'un changement par l'appelé (A1) d'au moins une des données (DJ) de joignabilité et/ou au cours du temps, lors du passage d'une tranche horaire (TH) à une autre.

18. Procédé selon la revendication 17, **caractérisé en ce que** le module (M1) de gestion est implémenté dans le terminal (1) appelé, les moyens (11) de traitement du terminal (1) appelé comportant un module (M1) de gestion, appelé module (M1) de gestion appelé, permettant la mise en oeuvre des étapes suivantes :
- sélection (83) des données (DJ) de joignabilité dans les moyens (13) de mémorisation du terminal (1) appelé,
- création (85) de données compatibles avec le serveur (4) de centralisation, pour la mise à jour (90) de la base de données (DB_ENUM) du serveur (4) de centralisation à partir des données représentatives des identifiants (FQDN) de communication de l'appelé (A1) et/ou de son numéro unique (1ID), présentes dans les données (DJ) de joignabilité stockées dans les moyens (13) de mémorisation du terminal.

19. Procédé selon la revendication 17, **caractérisé en ce que** le module (M1) et un module (M3) de gestion est implémenté respectivement dans le terminal (1) appelé et dans un serveur (3) de gestion de la joignabilité des abonnés (A1), dit serveur (3) de joignabilité, les moyens (31) de traitement du serveur (3) de gestion comportant le module (M3) de gestion, appelé module (M3) de gestion serveur, les moyens (33) de mémorisation du serveur (3) de gestion comportant au moins une base de données (DB_JOIN), dite de joignabilité, stockant des données relatives à une pluralité d'appelés (A1), ces données comportant des données (DJ) de joignabilité de chacun des appelés (A1), les moyens (13) de mémorisation du terminal (1) appelé stockant au moins un type de données parmi les données (DJ) de joignabilité de l'appelé (A1), les moyens (11) de traitement du terminal (1) appelé comportant également le module (M1) de gestion, appelé module (M1) de gestion appelé, complémentaire du module (M3) de gestion serveur, le module (M1) de gestion appelé et le module (M3) de gestion serveur permettant la mise en oeuvre des étapes suivantes :
- sélection (83) par l'appelé (A1), grâce au module (M1) de gestion appelé contrôlant les moyens (12) interactifs et les moyens (13) de mémorisation de son terminal (1) appelé, parmi les données (DJ) de joignabilité stockées dans les moyens (13) de mémorisation du terminal (1) appelé, des données à enregistrer dans la base de données (DB_JOIN) de joignabilité du serveur (3) de gestion,
- transmission (84) des données sélectionnées par le terminal (1) appelé vers le module (M3) de gestion serveur, via le réseau/les réseaux (RC) de communication, puis enregistrement (80), par le module (M3) de gestion serveur, de ces données dans la base de données (DB_JOIN) du serveur (3) de joignabilité,
- création (85), par le module (M3) de gestion serveur, de données compatibles avec le serveur (4) de centralisation, pour la mise à jour (90) de la base de données (DB_ENUM) du serveur (4) de centralisation à partir de la base de données (DB_JOIN) de joignabilité.

20. Procédé selon la revendication 19, **caractérisé en ce qu'**il comporte une étape d'envoi (82bis), par les moyens (30) de communication du serveur (3) de joignabilité, vers le terminal (1) appelé, des données représentatives des identifiants (FQDN) de communication de l'appelé (A1) et/ou de son numéro unique (1ID) et/ou de son profil (P) et/ou de son agenda (A), lorsque le terminal (1) appelé ne stocke pas ces données et/ou lorsque le module (M1) de gestion appelé le requiert.

21. Procédé selon une des revendications 19 à 20, **caractérisé en ce qu'**il comporte une étape d'implémentation des deux bases de données (DB_ENUM, DB_JOIN), ainsi que des moyens (31, 41) de traitement de données et les moyens (30, 40) de communication spécifiques du serveur (3) de joignabilité et du serveur (4) de centralisation qui constituent alors un seul et même serveur, l'étape de création (85) de données compatibles avec le serveur (4) de centralisation consistant alors en une conversion d'au moins une partie des données de la base de données (DB_JOIN) de joignabilité en données de la base de données (DB_ENUM) et l'étape de mise à jour (90) de la base de données (DB_ENUM) du serveur (4) de centralisation consistant en un enregistrement de ces données converties dans la base de données (DB_ENUM).

22. Procédé selon une des revendications 17 à 21, **caractérisé en ce que** l'étape de mise à jour (90) comporte une étape de transmission (86), via le réseau/les réseaux (RC) de communication, de données représentatives des identifiants (FQDN) de communication de l'appelé (A1) et/ou de son numéro unique (1ID), par le module (M1) et le module (M3) de gestion vers des moyens (40) de communication du serveur (4) de centralisation.

23. Procédé selon une des revendications 17 à 22, **caractérisé en ce que** l'étape (80) d'enregistrement des données représentatives des tranches horaires (TH), par le module (M1) et le module (M3) de gestion respectivement dans les moyens (13) de mémorisation du terminal (1) appelé et dans les moyens (33) de mémorisation du serveur (3) de joignabilité, comporte au moins une étape de modification (87) des tranches horaires (TH) selon les profils (P), de façon à permettre de choisir les heures d'activation des différents profils (P).

24. Procédé selon une des revendications 17 à 23, **caractérisé en ce que** l'étape (80) d'enregistrement des données représentatives des tranches horaires (TH), par le module (M1) et le module (M3) de gestion respectivement dans les moyens (13) de mémorisation du terminal (1) appelé et dans les moyens (33) de mémorisation du serveur (3) de joignabilité, comporte au moins une étape d'enregistrement (88) d'au moins un sous-profil (SP) pour définir différents ordres de préférence des identifiants (FQDN) de communication en fonction de différentes tranches horaires (TH).

25. Procédé selon la revendication 24, **caractérisé en ce que** l'étape d'enregistrement (88) d'au moins un sous-profil (SP), par le module (M1) et le module (M3) de gestion, comporte une étape (880) de modification des tranches horaires (TH) selon les sous-profils (SP).

26. Procédé selon une des revendications 17 à 25, **caractérisé en ce que** l'étape (80) d'enregistrement des données représentatives des tranches horaires (TH), par le module (M1) et le module (M3) de gestion respectivement dans les moyens (13) de mémorisation du terminal (1) appelé et dans les moyens (33) de mémorisation du serveur (3) de joignabilité comporte au moins une étape d'organisation (89) des tranches horaires (TH) par jour et/ou par semaine et/ou par mois et/ou par année.

27. Procédé selon une des revendications 19 à 26, **caractérisé en ce que** l'étape de transmission (84) de données pour l'enregistrement (80) dans la base de données (DB_JOIN) de joignabilité comporte une étape d'authentification (72) de l'appelé (A1) accédant au serveur (3) de joignabilité, par des moyens (S) d'authentification présents dans les moyens (31) de traitement de données du serveur (3) de joignabilité, de façon à limiter l'accès à des appelés (A1) préalablement enregistrés auprès de gestionnaires du serveur (3) de joignabilité au cours d'une étape préalable de déclaration (71) des appelés (A1).

28. Procédé selon une des revendications 17 à 27, **caractérisé en ce que** l'étape d'enregistrement (80) du profil (P) dans la base de données (DB_JOIN) de joignabilité comporte également une étape d'enregistrement (95) de données relatives à des paramètres de confidentialité du numéro unique (1ID) et des identifiants (FQDN) de communication de l'appelé (A1), ces données permettant aux appelés (A1) de définir les appelants (A2) autorisés à obtenir leurs données (DJ) de joignabilité et/ou de définir quelles données ils sont autorisés à obtenir parmi ces données (DJ) de joignabilité.

29. Procédé selon une des revendications 19 à 28, **caractérisé en ce qu'**il comporte au moins une étape des étapes suivantes, mise en oeuvre lorsqu'un appelant (A2) requiert l'établissement (70) d'une communication (COM) avec un appelé (A1) via le réseau/les réseaux (RC) de communication :
- consultation (96) de la base de données (DB_ENUM) centralisée par un terminal (2) appelant,
- consultation (96bis) de la base de données (DB_ENUM) centralisée par le serveur (3) de joignabilité,
- consultation (96ter) de la base de données (DB_JOIN) de joignabilité par le module (M3) de gestion serveur.

30. Procédé selon les revendications 27 et 29, **caractérisé en ce que** l'étape de consultation (96bis) de la base de données (DB_ENUM) centralisée ou l'étape de consultation (96ter) de la base de données (DB_JOIN) de joignabilité est précédée d'une étape d'authentification (72) des appelants (A2) ayant requis l'établissement (70) d'une communication (COM), par des moyens (S) d'authentification présents dans les moyens (31) de traitement de données du serveur (3) de joignabilité, de façon à limiter l'accès à des appelants (A2) préalablement enregistrés par les appelés (A1), lors de l'étape (95) d'enregistrement des paramètres de confidentialité, comme étant autorisés à obtenir au moins une partie de leurs données (DJ) de joignabilité.

31. Procédé selon une des revendications 22 à 30, **caractérisé en ce que** l'étape de transmission (86) de données pour la mise à jour (90) de la base de données (DB_ENUM) centralisée comporte une étape d'authentification (72bis) de l'appelé (A1) ou du serveur (3) de joignabilité, par des moyens (S) d'authentification du serveur (4) de centralisation, de façon à limiter l'accès à des appelés (A1) ou des serveurs (3) de joignabilité, préalablement enregistrés auprès de gestionnaires du serveur (4) de centralisation au cours d'une étape préalable de déclaration (71 bis) des appelés (A1) et des serveurs (3) de joignabilité.

32. Procédé selon une des revendications 29 à 31, **caractérisé en ce que**, lorsqu'un appelant (A2) requiert l'établissement (70) d'une communication (COM) avec un appelé (A1), via le réseau/les réseaux (RC) de communication, des moyens (20) de communication d'au moins un terminal (2) appelant mettent en oeuvre une étape d'envoi (73), via le réseau/les réseaux (RC) de communication, d'une requête (RT) d'établissement d'une communication, pour joindre au moins un appelé (A1) sur au moins un terminal (1) appelé et communiquer avec ce terminal (1) appelé.

33. Procédé selon une des revendications 29 à 31, **caractérisé en ce que**, lorsqu'un appelant (A2) requiert l'établissement (70) d'une communication (COM) avec un appelé (A1), via le réseau/les réseaux (RC) de communication, des moyens (20) de communication d'au moins un terminal (2) appelant mettent en oeuvre une étape d'envoi (73bis), via le réseau/les réseaux (RC) de communication, d'une requête (NAPTR) d'obtention des identifiants (FQDN) de communication d'un appelé (A1), pour obtenir les identifiants (FQDN) de l'appelé (A1).

34. Procédé selon une des revendications 29 à 33, **caractérisé en ce que** l'étape de consultation (96, 96bis) de la base de données (DB_ENUM) centralisée comporte les étapes suivantes :
- réception (91), par des moyens (40) de communication du serveur (4) de centralisation, via le réseau/les réseaux (RC) de communication, de la requête (NAPTR) d'obtention des identifiants (FQDN) de communication d'un appelé (A1) identifié par son numéro unique (1ID),
- traitement (92) de la requête (NAPTR) d'obtention d'identifiants et identification du numéro unique (1ID) de l'appelé (A1) dans la base (DB_ENUM) de données centralisée, par des moyens (41) de traitement de données du serveur (4) de centralisation,
- élaboration (93) d'une réponse comprenant la liste (NAPTR_RR) d'identifiants (FQDN) correspondants, cette liste (NAPTR_RR) étant automatiquement limitée en fonction des données (DJ) de joignabilité, grâce à l'étape de mise à jour (90) de la base (DB_ENUM) de données centralisée,
- envoi (94), par les moyens (40) de communication du serveur (4) de centralisation, de la réponse comprenant une liste (NAPTR_RR) d'identifiants (FQDN) de communication correspondant au numéro unique (11D) de l'appelé (A1).

35. Procédé selon une des revendications 29 à 33, **caractérisé en ce que** l'étape de consultation (96ter) de la base de données (DB_JOIN) de joignabilité comporte les étapes suivantes:
- réception (91 bis), par les moyens (30) de communication du serveur (3) de joignabilité, via le réseau/les réseaux (RC) de communication, de la requête (NAPTR) d'obtention des identifiants (FQDN) de communication d'un appelé (A1) identifié par son numéro unique (1ID),
- traitement (92bis) de la requête (NAPTR) d'obtention d'identifiants et identification du numéro unique (1 ID) de l'appelé (A1) dans la base (DB_JOIN) de données de joignabilité, par le module (M3) de gestion serveur,
- élaboration (93bis) d'une réponse comprenant la liste (NAPTR_RR) d'identifiants (FQDN) correspondants, cette liste (NAPTR_RR) étant automatiquement limitée en fonction des données (DJ) de joignabilité, grâce à l'étape d'enregistrement (80) des données (DJ) de joignabilité,
- envoi (94bis), par les moyens (30) de communication du serveur (3) de joignabilité, de la réponse comprenant une liste (NAPTR_RR) d'identifiants (FQDN) de communication correspondant au numéro unique (1ID) de l'appelé (A1), vers le terminal (2) appelant.

36. Procédé selon une des revendications 29 à 35, **caractérisé en ce que** l'étape de consultation (96, 96bis) de la base de données (DB_ENUM) centralisée et/ou l'étape de consultation (96ter) de la base de données (DB_JOIN) de joignabilité est accompagnée/sont accompagnées des étapes suivantes :
- réception (74) par les moyens (20) de communication du terminal (2) appelant, de la réponse contenant la liste (NAPTR_RR) d'identifiants (FQDN) de communication de l'appelé (A1),
- traitement (75), par le module (M2) de gestion appelant du terminal (2) appelant, de la réponse contenant la liste (NAPTR_RR) d'identifiants (FQDN) de communication de l'appelé (A1) et démarrage (76) d'une communication (COM), par un lanceur (M20) d'application du module (M2) de gestion appelant, gérant les moyens (20) de communication pour sélectionner le média correspondant à l'identifiant (FQDN) de communication prioritaire dans la liste (NAPTR_RR) reçue.

37. Procédé selon la revendication 36, **caractérisé en ce que** lorsque l'appelant (A2) requiert l'établissement (70) d'une communication (COM) avec un appelé (A1), cet appelé (A1) étant identifié par le module (M2) de gestion appelant, implémenté dans des moyens (21) de traitement de données du terminal (2) appelant, grâce à au moins un numéro unique (1ID) et/ou au moins un identifiant (FQDN) de communication, mémorisé/mémorisés dans des moyens (23) de mémorisation du terminal (2) appelant.

38. Terminal (1) communicant de gestion de la joignabilité d'au moins un utilisateur, dit appelé (A1), sur au moins un terminal, dit terminal appelé, via au moins un réseau (RC) de communication, pour la joignabilité de l'appelé (A1) par au moins un utilisateur, dit appelant (A2), sur au moins un terminal (2) communicant, dit terminal (2) appelant, le terminal (1) communicant comportant des moyens (10) de communication via le réseau/les réseaux (RC) de communication, des moyens (11) de traitement de données, des moyens (12) interactifs pour le contrôle du terminal (1) communicant par l'appelé (A1) et des moyens (13) de mémorisation, les moyens (11) de traitement du terminal (1) communicant comportant au moins un module (M1) de gestion, le terminal étant **caractérisé en ce que** le module (M1) de gestion contrôle :
- un enregistrement, dans les moyens (13) de mémorisation du terminal (1) appelé, d'au moins certaines données, dites données (DJ) de joignabilité, parmi des données représentatives d'au moins un numéro unique (1ID), d'au moins un profil (P) comprenant des données représentatives d'identifiants (FQDN) de communication de l'appelé (A1) triés selon un ordre de préférence et d'au moins un agenda (A) comprenant des données représentatives de tranches horaires (TH) et de paramètres relatifs à l'activation du profil/des profils (P) pendant les tranches horaires (TH), les données représentatives de l'ordre de préférence, des tranches horaires (TH) et de l'activation du profil (P) étant déterminées par l'appelé (A1) grâce au module (M1) de gestion et aux moyens (12) interactifs de son terminal (1) communicant,
- une mise à jour, à partir des données (DJ) de joignabilité, de données stockées dans au moins une base (DB_ENUM) de données, dite centralisée, d'au moins un serveur (4) de centralisation, accessible via le réseau/les réseaux (RC) de communication, la base (DB_ENUM) de données centralisée stockant des données relatives à une pluralité d'appelés (A1), ces données comportant, pour chaque appelé (A1), un identifiant principal, dit numéro unique (1ID), associé à au moins un identifiant (FQDN) de communication, la mise à jour étant réalisée par le module (M1) de gestion lors d'un changement par l'appelé (A1) d'au moins une des données (DJ) de joignabilité et/ou au cours du temps, lors du passage d'une tranche horaire (TH) à une autre.

39. Terminal (1) selon la revendication 38, **caractérisé en ce que** le module (M1) de gestion du terminal (1) communicant, appelé module (M1) de gestion appelé, est agencé pour générer également des données compatibles avec le serveur (4) de centralisation, pour la mise à jour de la base de données (DB_ENUM) du serveur (4) de centralisation à partir des données représentatives des identifiants (FQDN) de communication de l'appelé (A1) et/ou de son numéro unique (1 ID), présentes dans les données (DJ) de joignabilité stockées dans les moyens (13) de mémorisation du terminal.

40. Dispositif (100) électronique portable de gestion de la joignabilité d'au moins un utilisateur, dit appelé (A1), sur au moins un terminal, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant, le terminal (1) appelé comportant des moyens (10) de communication via le réseau/les réseaux (RC) de communication, des moyens (11) de traitement de données, des moyens (12) interactifs pour le contrôle du terminal (1) communicant par l'appelé (A1) et des moyens (13) de mémorisation, les moyens (11) de traitement du terminal (1) communicant exécutant au moins une application (110) logicielle de communication via le réseau/les réseaux (RC) de communication, le dispositif (100) portable de gestion étant **caractérisé en ce qu'**il comporte au moins une mémoire accessible en lecture et en écriture par le terminal (1) communicant et stockant:
- au moins un type de données, dites données (DJ) de joignabilité, parmi des données représentatives d'au moins un numéro unique (1ID), d'au moins un profil (P) comprenant des données représentatives d'identifiants (FQDN) de communication de l'appelé (A1) triés selon un ordre de préférence et d'au moins un agenda (A) comprenant des données représentatives de tranches horaires (TH) et de paramètres relatifs à l'activation du profil/des profils (P) pendant les tranches horaires (TH), les données représentatives de l'ordre de préférence, des tranches horaires (TH) et de l'activation du profil (P) étant déterminées par l'appelé (A1) grâce aux moyens (12) interactifs de son terminal (1) communicant et à au moins un module (M1) de gestion de la joignabilité,
- au moins un type de données permettant l'exécution, au sein de l'application (110) logicielle de communication du terminal (1) communicant, d'au moins un module (M1) de gestion de la joignabilité contrôlant une mise à jour, à partir des données (DJ) de joignabilité, de données stockées dans au moins une base (DB_ENUM) de données, dite centralisée, d'au moins un serveur (4) de centralisation, accessible via le réseau/les réseaux (RC) de communication, la base (DB_ENUM) de données centralisée stockant des données relatives à une pluralité d'appelés (A1), ces données comportant, pour chaque appelé (A1), un identifiant principal, dit numéro unique (1 ID), associé à au moins un identifiant (FQDN) de communication, la mise à jour étant réalisée par le module (M1) de gestion lors d'un changement par l'appelé (A1) d'au moins une des données (DJ) de joignabilité et/ou au cours du temps, lors du passage d'une tranche horaire (TH) à une autre.

41. Dispositif (100) portable de gestion selon la revendication 40, **caractérisé en ce que** le module (M1) de gestion du terminal (1) communicant, appelé module (M1) de gestion appelé, est agencé pour générer également des données compatibles avec le serveur (4) de centralisation, pour la mise à jour de la base de données (DB_ENUM) du serveur (4) de centralisation à partir des données représentatives des identifiants (FQDN) de communication de l'appelé (A1) et/ou de son numéro unique (1ID), présentes dans les données (DJ) de joignabilité stockées dans les moyens (13) de mémorisation du terminal.

42. Procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant, le procédé étant **caractérisé en ce que**, d'une part, il est mis en oeuvre grâce à au moins un dispositif (100) électronique portable de gestion de la joignabilité, comportant une mémoire accessible en lecture et en écriture par le terminal (1) communicant et stockant au moins un type de données permettant l'exécution d'au moins un module (M1) de gestion au sein d'une application (110) logicielle de communication en cours d'exécution sur des moyens (11) de traitement de données d'au moins un terminal (1) communicant comportant des moyens (10) de communication via le réseau/les réseaux (RC) de communication, des moyens (12) interactifs pour le contrôle du terminal (1) communicant par l'appelé (A1) et des moyens (13) de mémorisation, et d'autre part, il comporte au moins les étapes suivantes :
- enregistrement (80), par le module (M1) de gestion, dans la mémoire du dispositif (100) portable et/ou dans les moyens (13) de mémorisation du terminal (1) appelé, d'au moins certaines données, dites données (DJ) de joignabilité, parmi des données représentatives d'au moins un numéro unique (1ID), d'au moins un profil (P) comprenant des données représentatives d'identifiants (FQDN) de communication de l'appelé (A1) triés selon un ordre de préférence et d'au moins un agenda (A) comprenant des données représentatives de tranches horaires (TH) et de paramètres relatifs à l'activation du profil/des profils (P) pendant les tranches horaires (TH), les données représentatives de l'ordre de préférence, des tranches horaires (TH) et de l'activation du profil (P) étant déterminées par l'appelé (A1) grâce au module (M1) de gestion et aux moyens (12) interactifs du terminal (1) communicant,
- mise à jour (90), par le module (M1) de gestion, à partir des données (DJ) de joignabilité, de données stockées dans au moins une base (DB_ENUM) de données, dite centralisée, d'au moins un serveur (4) de centralisation, accessible via le réseau/les réseaux (RC) de communication, la base (DB_ENUM) de données centralisée stockant des données relatives à une pluralité d'appelés (A1), ces données comportant, pour chaque appelé (A1), un identifiant principal, dit numéro unique (1ID), associé à au moins un identifiant (FQDN) de communication, l'étape de mise à jour (90) étant mise en oeuvre par le module (M1) de gestion lors d'un changement par l'appelé (A1) d'au moins une des données (DJ) de joignabilité et/ou au cours du temps, lors du passage d'une tranche horaire (TH) à une autre.

43. Procédé selon la revendication 42, **caractérisé en ce qu'**il comporte une étape de création (85), par le module (M1) de gestion, de données compatibles avec le serveur (4) de centralisation, pour la mise à jour (90) de la base de données (DB_ENUM) du serveur (4) de centralisation à partir des données représentatives des identifiants (FQDN) de communication de l'appelé (A1) et/ou de son numéro unique (1ID), présentes dans les données (DJ) de joignabilité stockées dans les moyens (13) de mémorisation du terminal.

## Patentansprüche

1. System zum Verwalten der Erreichbarkeit mindestens eines als Angerufener (A1) bezeichneten Benutzers auf mindestens einem als angerufenes Endgerät (1) bezeichneten kommunizierenden Endgerät (1) über mindestens ein Kommunikationsnetzwerk (RC) für die Erreichbarkeit des Angerufenen (A1) durch mindestens einen als Anrufer (A2) bezeichneten Benutzer auf mindestens einem als anrufendes Endgerät (2) bezeichnetem kommunizierendem Endgerät (2), wobei das System aufweist:
• mindestens einen Zentralisierungsserver (4), auf den über das Kommunikationsnetzwerk / die Kommunikationsnetzwerke (RC) zugegriffen werden kann und der aufweist: mindestens eine als zentralisiert bezeichnete Datenbank (DB_ENUM), die Daten in Bezug auf eine Mehrzahl von Angerufenen (A1) speichert, wobei die Daten für jeden Angerufenen (A1) einen Hauptidentifikator (A1) aufweisen, der als einzigartige Nummer (1ID) bezeichnet wird, der mindestens einem Kommunikationsidentifikator (FQDN) zugeordnet ist,
• mindestens ein angerufenes Endgerät (1), aufweisend Mittel (10) zum Kommunizieren über das Kommunikationsnetzwerk / die Kommunikationsnetzwerke (RC), Datenverarbeitungsmittel (11), interaktive Mittel (12) zum Steuern des kommunizierenden Endgerätes (1) durch den Angerufenen (A1) und Speichermittel (13),
wobei das System **dadurch gekennzeichnet ist, dass** es aufweist:
• mindestens ein Verwaltungsmodul (M1), das in den Verarbeitungsmitteln (11) des angerufenen Endgerätes (1) implementiert ist, aufweisend Kommunikationsmittel (30), die dieses über das Kommunikationsnetzwerk / die Kommunikationsnetzwerke (RC) zugänglich machen, wobei das Verwaltungsmittel (M1) steuert:
- ein Speichern in den Speichermitteln (13) des angerufenen Endgerätes (1) von zumindest bestimmten Daten, die als Erreichbarkeitsdaten (DJ) bezeichnet werden, aus Daten, die repräsentativ sind für mindestens eine einzigartige Nummer (1ID), mindestens ein Profil (P), das Daten aufweist, die für Kommunikationsidentifikatoren (FQDN) des Angerufenen (A1) repräsentativ sind, die gemäß einer bevorzugten Reihenfolge ausgewählt werden, und mindestens eine Agenda (A), die Daten aufweist, die für Zeitfenster (TH) und Parameter bezüglich der Aktivierung des Profils/ der Profile (P) während der Zeitfenster (TH) repräsentativ sind, wobei die Daten, die für die bevorzugte Reihenfolge, die Zeitfenster (TH) und die Aktivierung des Profils (P) repräsentativ sind, vom Angerufenen (A1) mit Hilfe des Verwaltungsmoduls (M1) und der interaktiven Mittel (12) seines kommunizierenden Endgerätes (1) bestimmt werden,
- ein Aktualisieren der Daten, die in der zentralisierten Datenbank (DB_ENUM) des Zentralisierungsservers (4) gespeichert sind, ausgehend von den Erreichbarkeitsdaten (DJ), die in den Speichermitteln (13) des angerufenen Endgerätes (1) gespeichert sind, bei einer Änderung durch den Angerufenen (A1) mindestens einer der Erreichbarkeitsdaten (DJ) und / oder im Verlauf der Zeit beim Übergang von einem Zeitfenster (TH) in ein anderes.

2. System gemäß Anspruch 1, **dadurch gekennzeichnet, dass** das Verwaltungsmodul (M1) in das angerufene Endgerät (1) implementiert ist, wobei die Verarbeitungsmittel (11) des angerufenen Endgerätes (1) ein Verwaltungsmodul (M1) aufweisen, das als angerufenes Verwaltungsmodul (M1) bezeichnet wird, das das Speichern und das Auswählen in den Speichermitteln (13) des angerufenen Endgerätes (1) der Erreichbarkeitsdaten (DJ) steuert, wobei das Verwaltungsmodul (M1) des angerufenen Endgerätes (1) ferner Daten erzeugt, die mit dem Zentralisierungsserver (4) kompatibel sind, für das Aktualisieren der Datenbank (DB_ENUM) des Zentralisierungsservers (4) ausgehend von den Daten, die für die Kommunikationsidentifikatoren (FQDN) des Angerufenen (A1) und / oder seine einzigartige Nummer (1ID) repräsentativ sind, die in den Erreichbarkeitsdaten (DJ) vorhanden sind, die in den Speichermitteln (13) des Endgerätes gespeichert sind.

3. System gemäß Anspruch 1 und 2, **dadurch gekennzeichnet, dass** das Modul (M1) und ein Verwaltungsmodul (M3) jeweils in dem angerufenen Endgerät (1) und in einem Server (3) zur Verwaltung der Erreichbarkeit der Teilnehmer (A1) implementiert sind, der als Erreichbarkeitsserver (3) bezeichnet wird, wobei die Verarbeitungsmittel (31) des Erreichbarkeitsservers (3) aufweisen: ein Verwaltungsmodul (M3), das als Server-Verwaltungsmodul (M3) bezeichnet wird, wobei die Speichermittel (33) des Erreichbarkeitsservers (3) mindestens aufweisen: eine Datenbank (DB_JOIN), die als Erreichbarkeitsdatenbank bezeichnet wird, die Daten bezüglich einer Mehrzahl von Angerufenen (A1) speichert, wobei die Daten Erreichbarkeitsdaten (DJ) von jedem der Angerufenen (A1) aufweisen, wobei die Speichermittel (13) des angerufenen Endgerätes (1) mindestens einen Typ Daten aus den Erreichbarkeitsdaten (DJ) des Angerufenen speichern, wobei die Verarbeitungsmittel (11) des angerufenen Endgerätes (1) ferner ein Verwaltungsmodul (M1) aufweisen, das als angerufenes Verwaltungsmodul (M1) bezeichnet wird, das zu dem Serververwaltungsmodul (M3) komplementär ist, wobei das angerufene Verwaltungsmodul (M1) und das Serververwaltungsmodul (M3) sich über das Kommunikationsnetzwerk / die Kommunikationsnetzwerke (RC) austauschen über Daten, aufweisend mindestens einen Datentyp aus den Erreichbarkeitsdaten (DJ) für das Speichern in der Erreichbarkeitsdatenbank (DB_JOIN) der Daten, die für die Kommunikationsidentifikatoren (FQDN) des Angerufenen (A1) und / oder für seine einzigartige Nummer (1ID) und / oder sein Profil (P) und / oder seine Agenda (A) repräsentativ sind, die von dem Angerufenen (A1) auf dem angerufenen Endgerät (1) ausgewählt werden, wobei das Serververwaltungsmodul (M3) ferner Daten erzeugt, die mit dem Zentralisierungsserver (4) kompatibel sind, für das Aktualisieren der Datenbank (DB_ENUM) des Zentralisierungsservers (4) ausgehend von der Erreichbarkeitsdatenbank (DB_JOIN).

4. System gemäß Anspruch 3, **dadurch gekennzeichnet, dass** das Serververwaltungsmodul (M3) die Kommunikationsmittel (30) für das Versenden der Daten an das angerufene Endgerät (1) steuert, die für die Kommunikationsidentifikatoren (FQDN) des Angerufenen (A1) und / oder seine einzigartige Nummer (1ID) und / oder sein Profil (P) und / oder seine Agenda (A1) repräsentativ sind, wenn die Daten den Speichermitteln (13) des angerufenen Endgerätes (1) fehlen und / oder wenn das angerufene Verwaltungsmodul (M1) dies fordert.

5. System gemäß einem der Ansprüche 1 bis 4, **dadurch gekennzeichnet, dass** der Erreichbarkeitsserver (3) und der Zentralisierungsserver (4) einen einzigen und selben Server ausbilden, der die beiden Datenbanken (DB_ENUM, DB_JOIN) sowie Datenverarbeitungsmittel (31, 41) und Kommunikationsmittel (30, 40), die für die beiden Server spezifisch sind, aufweist.

6. System gemäß einem der Ansprüche 3 bis 5, **dadurch gekennzeichnet, dass** das angerufene Verwaltungsmodul (M1) und das Serververwaltungsmodul (M3) jeweils die Kommunikationsmittel (10) des angerufenen Endgerätes (1) und die Kommunikationsmittel (30) des Erreichbarkeitsservers (3) für das Aktualisieren der Datenbank (DB_ENUM) des Zentralisierungsservers (4) steuern.

7. System gemäß einem der Ansprüche 3 bis 6, **dadurch gekennzeichnet, dass** das angerufene Verwaltungsmodul (M1) und das Serververwaltungsmodul (M3) die Daten, die für die Zeitfenster (TH) repräsentativ sind, derart verwalten, dass diese gemäß den Profilen (P) modifizierbar sind, um ein Auswählen der Aktivierungszeiten der verschiedenen Profile (P) zu ermöglichen.

8. System gemäß einem der Ansprüche 3 bis 6, **dadurch gekennzeichnet, dass** das angerufene Verwaltungsmodul (M1) und das Serververaltungsmodul (M3) für jedes Profil (P) mindestens ein Unterprofil (SP) verwalten, um verschiedene bevorzugte Reihenfolgen der Kommunikationsidentifikatoren (FQDN) in Abhängigkeit von verschiedenen Zeitfenstern (TH) zu definieren, wobei die für die Unterprofile (SP) repräsentativen Daten in der Erreichbarkeitsdatenbank (DB_JOIN) des Erreichbarkeitsservers (3) und in den Speichermitteln (13) des angerufenen Endgerätes (1) gespeichert sind.

9. System gemäß Anspruch 8, **dadurch gekennzeichnet, dass** das angerufene Verwaltungsmodul (M1) und das Serververwaltungsmodul (M3) die für die Zeitfenster (TH) repräsentativen Daten derart verwalten, dass diese gemäß den Unterprofilen (SP) modifizierbar sind.

10. System gemäß einem der Ansprüche 3 bis 9, **dadurch gekennzeichnet, dass** das angerufene Verwaltungsmodul (M1) und das Serververwaltungsmodul (M3) die Daten, die für die Agenda (A) repräsentativ sind, verwalten, um die Zeitfenster (TH) nach Tag und / oder nach Woche und / oder nach Monat und / oder nach Jahr zu organisieren.

11. System gemäß einem der Ansprüche 3 bis 10, **dadurch gekennzeichnet, dass** die Datenverarbeitungsmittel (31) des Erreichbarkeitsservers (3) ferner Authentifizierungsmittel (S) aufweisen, um die Angerufenen (A1) zu identifizieren, die Erreichbarkeitsdaten in der Datenbank (DB_JOIN) des Erreichbarkeitsservers (3) speichern, und den Zugriff auf das Verwaltungsmodul (M3) auf Angerufene (A1) zu begrenzen, die zuvor bei Verwaltern des Erreichbarkeitsservers (3) gespeichert wurden.

12. System gemäß einem der Ansprüche 3 bis 11, **dadurch gekennzeichnet, dass** die in der Erreichbarkeitsdatenbank (DB_JOIN) gespeicherten Daten ferner Daten bezüglich Vertraulichkeitsparametern der einzigartigen Nummer (1ID) und Kommunikationsidentifikatoren (FQDN) des Angerufenen (A1) aufweisen, wobei die Daten den Angerufenen (A1) ermöglichen, die Anrufer (A2) zu definieren, die autorisiert sind, ihre Erreichbarkeitsdaten (DJ) zu erhalten und/oder zu definieren, welche Daten sie von den Erreichbarkeitsdaten (DJ) erhalten dürfen.

13. System gemäß einem der Ansprüche 1 bis 12, **dadurch gekennzeichnet, dass** der Zentralisierungsserver (4) Authentifizierungsmittel (S) der Angerufenen (A1) oder der Erreichbarkeitsserver (3) aufweist, wobei das Modul (M1) und das Modul (M3) davon die zentralisierte Datenbank (DB_ENUM) derart aktualisieren, dass der Zugriff auf Angerufene (A1) oder Erreichbarkeitsserver (3) begrenzt wird, die zuvor bei Verwaltern des Zentralisierungsservers (4) gespeichert wurden.

14. System gemäß einem der Ansprüche 1 bis 13, **dadurch gekennzeichnet, dass** der Zentralisierungsserver (4) aufweist:
- Mittel zum Kommunizieren (40) über das Kommunikationsnetzwerk / die Kommunikationsnetzwerke (RC) zum Empfangen von Anfragen (NAPTR) zum Erhalten der Kommunikationsidentifikatoren (FQDN) eines durch seine einzigartige Nummer (1ID) identifizierten Angerufenen (A1), zum Versenden einer Antwort, die eine Liste (NAPTR_RR) von Kommunikationsidentifikatoren (FQDN) entsprechend der einzigartigen Nummer (1ID) des Angerufenen (A1) aufweist, und zum Empfangen von Aktualisierungen der zentralisierten Datenbank (DB_ENUM) ausgehend von der Erreichbarkeitsdatenbank (DB_JOIN),
- Mittel (41) zum Verarbeiten von Daten für die Verarbeitung der Anfragen (NAPTR) zum Erhalten von Identifikatoren, der Identifizierung der einzigartigen Nummer (1ID) des Angerufenen (A1) und der Erstellung der Antwort, aufweisend die Liste (NAPTR_RR) mit korrespondierenden Identifikatoren (FQDN).

15. System gemäß einem der Ansprüche 1 bis 14, **dadurch gekennzeichnet, dass** es ferner mindestens ein anrufendes Endgerät (2) aufweist, aufweisend:
- Mittel (20) zum Kommunizieren über das Kommunikationsnetzwerk / die Kommunikationsnetzwerke (RC) zum Erreichen mindestens eines Angerufenen (A1) auf mindestens einem angerufenen Endgerät (1) mittels Anfragen (RT) zum Herstellen einer Kommunikation, und zum Kommunizieren mit dem angerufenen Endgerät (1) über mindestens ein Medium, und / oder zum Versenden von Anfragen (NAPTR) zum Erhalten der Kommunikationsidentifikatoren (FQDN) eines Angerufenen (A1) direkt an den Erreichbarkeitsserver (3) und / oder den Zentralisierungsserver (4), und zum Erhalten von Antworten, die Listen (NAPTR_RR) mit Kommunikationsidentifikatoren (FQDN) enthalten,
- Datenverarbeitungsmittel (21), aufweisend ein Verwaltungsmodul, das als anrufendes Verwaltungsmodul (M2) bezeichnet wird, aufweisend eine Anwendungsstartvorrichtung (M20), die die Kommunikationsmittel (20) verwaltet, um das Medium entsprechend dem prioritären Kommunikationsidentifikator (FQDN) in einer empfangenen Liste (NAPTR_RR) auszuwählen.

16. System gemäß Anspruch 15, **dadurch gekennzeichnet, dass** das anrufende Verwaltungsmodul (M2) mindestens eine einzigartige Nummer (1ID) und / oder mindestens einen Kommunikationsidentifikator (FQDN) verwaltet, die/ der mindestens einem Angerufenen (A1) entspricht/ entsprechen und in Speichermitteln (23) des anrufenden Endgerätes (2) gespeichert ist/ sind.

17. Verfahren zum Verwalten der Erreichbarkeit mindestens eines Benutzers, der als Angerufener (A1) bezeichnet wird, auf mindestens einem kommunizierenden Endgerät (1), das als angerufenes Endgerät (1) bezeichnet wird, über mindestens ein Kommunikationsnetzwerk (RC) für die Erreichbarkeit des Angerufenen (A1) durch mindestens einen Benutzer, der als Anrufer (A2) bezeichnet wird, auf mindestens einem kommunizierenden Endgerät (2), das als anrufendes Endgerät (2) bezeichnet wird, das mittels eines Systems umgesetzt wird, das aufweist:
- mindestens ein angerufenes Endgerät (1), aufweisend Mittel (10) zum Kommunizieren über das Kommunikationsnetzwerk / die Kommunikationsnetzwerke (RC), Datenverarbeitungsmittel (11), interaktive Mittel (12) zum Steuern des kommunizierenden Endgerätes (1) durch den Angerufenen (A1) und Speichermittel (13),
- mindestens einen Zentralisierungsserver (4), auf den über das Kommunikationsnetzwerk / die Kommunikationsnetzwerke (RC) zugegriffen werden kann und der aufweist: mindestens eine als zentralisiert bezeichnete Datenbank (DB_ENUM), die Daten in Bezug auf eine Mehrzahl von Angerufenen (A1) speichert, wobei die Daten für jeden Angerufenen (A1) einen Hauptidentifikator (A1) aufweisen, der als einzigartige Nummer (1ID) bezeichnet wird, der mindestens einem Kommunikationsidentifikator (FQDN) zugeordnet ist,
- mindestens ein Verwaltungsmodul (M1), das in den Verarbeitungsmitteln (11) des angerufenen Endgerätes (1) implementiert ist, aufweisend Kommunikationsmittel (30), die dieses über das Kommunikationsnetzwerk / die Kommunikationsnetzwerke (RC) zugänglich machen,
wobei das Verfahren **dadurch gekennzeichnet ist, dass** es die folgenden Schritte aufweist:
- Speichern (80) in den Speichermitteln (13) des angerufenen Endgerätes (1) durch das Verwaltungsmodul (M1) von zumindest bestimmten Daten, die als Erreichbarkeitsdaten (DJ) bezeichnet werden, aus Daten, die repräsentativ sind für mindestens eine einzigartige Nummer (1ID), mindestens ein Profil (P), das Daten aufweist, die für Kommunikationsidentifikatoren (FQDN) des Angerufenen (A1) repräsentativ sind, die gemäß einer bevorzugten Reihenfolge ausgewählt werden, und mindestens eine Agenda (A), die Daten aufweist, die für Zeitfenster (TH) und Parameter bezüglich der Aktivierung des Profils/ der Profile (P) während der Zeitfenster (TH) repräsentativ sind, wobei die Daten, die für die bevorzugte Reihenfolge, die Zeitfenster (TH) und die Aktivierung des Profils (P) repräsentativ sind, vom Angerufenen (A1) mit Hilfe des Verwaltungsmoduls (M1) und der interaktiven Mittel (12) seines kommunizierenden Endgerätes (1) bestimmt werden,
- Aktualisieren (90) der Daten, die in der zentralisierten Datenbank (DB_ENUM) des Zentralisierungsservers (4) gespeichert sind, mittels des Verwaltungsmoduls (M1), ausgehend von den Erreichbarkeitsdaten (DJ), die in den Speichermitteln (13) des angerufenen Endgerätes (1) gespeichert sind, bei einer Änderung durch den Angerufenen (A1) mindestens einer der Erreichbarkeitsdaten (DJ) und/ oder im Verlauf der Zeit beim Übergang von einem Zeitfenster (TH) in ein anderes.

18. Verfahren gemäß Anspruch 17, **dadurch gekennzeichnet, dass** das Verwaltungsmodul (M1) in dem angerufenen Endgerät (1) implementiert wird, wobei die Verarbeitungsmittel (11) des angerufenen Endgerätes (1) ein Verwaltungsmodul (M1) aufweisen, das als angerufenes Verwaltungsmodul (M1) bezeichnet wird, das das Durchführen der folgenden Schritte ermöglicht:
- Auswählen (83) der Erreichbarkeitsdaten (DJ) in den Speichermitteln (13) des angerufenen Endgerätes (1),
- Erzeugen (85) von Daten, die mit dem Zentralisierungsserver (4) kompatibel sind, für das Aktualisieren (90) der Datenbank (DB_ENUM) des Zentralisierungsservers (4) ausgehend von den Daten, die für die Kommunikationsidentifikatoren (FQDN) des Angerufenen (A1) und/ oder seine einzigartige Nummer (1ID) repräsentativ sind, die sich in den Erreichbarkeitsdaten (DJ) befinden, die in den Speichermitteln (13) des Endgerätes gespeichert sind.

19. Verfahren gemäß Anspruch 17, **dadurch gekennzeichnet, dass** das Modul (M1) und ein Verwaltungsmodul (M3) jeweils in dem angerufenen Endgerät (1) und in einem Server (3) zur Verwaltung der Erreichbarkeit der Teilnehmer (A1), der als Erreichbarkeitsserver (3) bezeichnet wird, implementiert werden, wobei die Verarbeitungsmittel (31) des Verwaltungsservers (3) das Verwaltungsmodul (M3) aufweisen, das als Serververwaltungsmodul (M3) bezeichnet wird, wobei die Speichermittel (33) des Verwaltungsservers (3) mindestens eine Datenbank (DB_JOIN) aufweisen, die als Erreichbarkeitsdatenbank bezeichnet wird, die Daten in Bezug auf eine Mehrzahl von Angerufenen (A1) speichert, wobei die Daten Erreichbarkeitsdaten (DJ) für jeden der Angerufenen (A1) aufweisen, wobei die Speichermittel (13) des angerufenen Endgerätes (1) mindestens einen Typ Daten aus den Erreichbarkeitsdaten (DJ) des Angerufenen (A1) speichern, wobei die Verarbeitungsmittel (11) des angerufenen Endgerätes ferner das Verwaltungsmodul (M1) aufweisen, das als angerufenes Verwaltungsmodul (M1) bezeichnet wird, das zu dem Serververwaltungsmodul (M3) komplementär ist, wobei das angerufene Verwaltungsmodul (M1) und das Serververwaltungsmodul (M3) das Durchführen der folgenden Schritte ermöglichen:
- Auswählen (83) durch den Angerufenen (A1) mittels des angerufenen Verwaltungsmoduls (M1), das die interaktiven Mittel (12) und die Speichermittel (13) seines angerufenen Endgerätes (1) steuert, aus den Erreichbarkeitsdaten (DJ), die in den Speichermitteln (13) des angerufenen Endgerätes (1) gespeichert sind, der Daten, die in der Erreichbarkeitsdatenbank (DB_JOIN) des Verwaltungsservers (3) zu speichern sind,
- Übermitteln (84) der von dem angerufenen Endgerät (1) ausgewählten Daten an das Serververwaltungsmodul (M3) über das Kommunikationsnetzwerk / die Kommunikationsnetzwerke (RC), anschließend Speichern (80) durch das Serververwaltungsmodul (M3) der Daten in der Datenbank (DB_JOIN) des Erreichbarkeitsservers (3),
- Erzeugen (85) durch das Serververwaltungsmodul (M3) von Daten, die mit dem Zentralisierungsserver (4) kompatibel sind, für das Aktualisieren (90) der Datenbank (DB_ENUM) des Zentralisierungsservers (4) ausgehend von der Erreichbarkeitsdatenbank (DB_JOIN).

20. Verfahren gemäß Anspruch 19, **dadurch gekennzeichnet, dass** es aufweist: einen Schritt des Versendens (82a) durch die Kommunikationsmittel (30) des Erreichbarkeitsservers (3) an das angerufene Endgerät (1) der Daten, die für die Kommunikationsidentifikatoren (FQDN) des Angerufenen (A1), und/ oder seine einzigartige Nummer (1ID) und/ oder sein Profil (P) und/ oder seine Agenda (A) repräsentativ sind, wenn das angerufene Endgerät (1) die Daten nicht speichert und/ oder wenn das angerufene Verwaltungsmodul (M1) dies anfordert.

21. Verfahren gemäß einem der Ansprüche 19 bis 20, **dadurch gekennzeichnet, dass** es einen Schritt des Implementierens der beiden Datenbanken (DB_ENUM, DB_JOIN) sowie der Datenverarbeitungsmittel (31, 41) und der Kommunikationsmittel (30, 40) aufweist, die für den Erreichbarkeitsserver (3) und den Zentralisierungsserver (4) spezifisch sind, die dann einen einzigen und selben Server ausbilden, wobei der Schritt zum Erzeugen (85) von Daten, die mit dem Zentralisierungsserver (4) kompatibel sind, dann aus einer Konvertierung mindestens eines Teils der Daten der Erreichbarkeitsdatenbank (DB_JOIN) in Daten der Datenbank (DB_ENUM) besteht, und der Schritt des Aktualisierens (90) der Datenbank (DB_ENUM) des Zentralisierungsservers (4) aus einem Speichern der konvertierten Daten in der Datenbank (DB_ENUM) besteht.

22. Verfahren gemäß einem der Ansprüche 17 bis 21, **dadurch gekennzeichnet, dass** der Schritt des Aktualisierens (90) aufweist: einen Schritt des Übermittelns (86) über das Kommunikationsnetzwerk / die Kommunikationsnetzwerke (RC) von Daten, die für die Kommunikationsidentifikatoren (FQDN) des Angerufenen (A1) und/ oder seine einzigartige Nummer (1ID) repräsentativ sind, durch das Modul (M1) und das Verarbeitungsmodul (M3) an Kommunikationsmittel (40) des Zentralisierungsservers (4).

23. Verfahren gemäß einem der Ansprüche 17 bis 22, **dadurch gekennzeichnet, dass** der Schritt (80) des Speicherns der Daten, die für die Zeitfenster (TH) repräsentativ sind, durch das Modul (M1) und das Verwaltungsmodul (M3) jeweils in den Speichermitteln (13) des angerufenen Endgerätes (1) und in den Speichermitteln (33) des Erreichbarkeitsservers (3) mindestens einen Schritt zum Modifizieren (87) der Zeitfenster (TH) gemäß den Profilen (P) aufweist, um ein Auswählen der Aktivierungszeiten der verschiedenen Profile (P) zu ermöglichen.

24. Verfahren gemäß einem der Ansprüche 17 bis 23, **dadurch gekennzeichnet, dass** der Schritt (80) des Speicherns der Daten, die für die Zeitfenster (TH) repräsentativ sind, durch das Modul (M1) und das Verwaltungsmodul (M3) jeweils in den Speichermitteln (13) des angerufenen Endgerätes (1) und in den Speichermitteln (33) des Erreichbarkeitsservers (3) mindestens einen Schritt des Speicherns (88) mindestens eines Unterprofils (SP) aufweist, um verschiedene bevorzugte Reihenfolgen der Kommunikationsidentifikatoren (FQDN) in Abhängigkeit von verschiedenen Zeitfenstern (TH) zu definieren.

25. Verfahren gemäß Anspruch 24, **dadurch gekennzeichnet, dass** der Schritt zum Speichern (88) mindestens eines Unterprofils (SP) durch das Modul (M1) und das Verwaltungsmodul (M3) einen Schritt (880) zum Modifizieren der Zeitfenster (TH) gemäß den Unterprofilen (SP) aufweist.

26. Verfahren gemäß einem der Ansprüche 17 bis 25, **dadurch gekennzeichnet, dass** der Schritt (80) zum Speichern der Daten, die für die Zeitfenster (TH) repräsentativ sind, durch das Modul (M1) und das Verwaltungsmodul (M3) jeweils in den Speichermitteln (13) des angerufenen Endgerätes (1) und in den Speichermitteln (33) des Erreichbarkeitsservers (3) mindestens einen Schritt des Organisierens (89) der Zeitfenster (TH) nach Tag und/ oder nach Woche und/ oder nach Monat und/ oder nach Jahr aufweist.

27. Verfahren gemäß einem der Ansprüche 19 bis 26, **dadurch gekennzeichnet, dass** der Schritt des Übermittelns (84) von Daten für das Speichern (80) in der Erreichbarkeitsdatenbank (DB_JOIN) aufweist: einen Schritt des Authentifizierens (72) des Angerufenen (A1), der auf den Erreichbarkeitsserver (3) zugreift, mittels Authentifizierungsmitteln (S), die sich in den Datenverarbeitungsmitteln (31) des Erreichbarkeitsservers (3) befinden, um den Zugriff auf Angerufene (A1), die zuvor während eines vorherigen Schrittes zum Angeben (71) der gespeicherten Angerufenen (A1) bei Verwaltern des Erreichbarkeitsservers (3) gespeichert wurden, zu begrenzen.

28. Verfahren gemäß einem der Ansprüche 17 bis 27, **dadurch gekennzeichnet, dass** der Schritt des Speicherns (80) des Profils (P) in der Erreichbarkeitsdatenbank (DB_JOIN) ferner aufweist: einen Schritt des Speicherns (95) von Daten bezüglich Vertraulichkeitsparametern der einzigartigen Nummer (1ID) und Kommunikationsidentifikatoren (FQDN) des Angerufenen (A1), wobei die Daten den Angerufenen (A1) ermöglichen, die Anrufer (A2) zu definieren, die zum Erhalten ihrer Erreichbarkeitsdaten (DJ) autorisiert sind und/oder zu definieren, welche Daten sie von den Erreichbarkeitsdaten (DJ) erhalten dürfen.

29. Verfahren gemäß einem der Ansprüche 19 bis 28, **dadurch gekennzeichnet, dass** es mindestens einen Schritt der folgenden Schritte aufweist, der durchgeführt wird, wenn ein Anrufer (A2) das Herstellen (70) einer Kommunikation (COM) mit einem Angerufenen (A1) über das Kommunikationsnetzwerk / die Kommunikationsnetzwerke (RC) anfordert:
- Konsultieren (96) der zentralisierten Datenbank (DB_ENUM) durch ein anrufendes Endgerät (2),
- Konsultieren (96a) der zentralisierten Datenbank (DB_ENUM) durch den Erreichbarkeitsserver (3),
- Konsultieren (96b) der Erreichbarkeitsdatenbank (DB_JOIN) durch das Serververwaltungsmodul (M3).

30. Verfahren gemäß den Ansprüchen 27 und 29, **dadurch gekennzeichnet, dass** dem Schritt des Konsultierens (96a) der zentralisierten Datenbank (DB_ENUM) und dem Schritt des Konsultierens (96b) der Erreichbarkeitsdatenbank (DB_JOIN) ein Schritt des Authentifizierens (72) der Anrufer (A2), die das Herstellen (70) einer Kommunikation (COM) angefordert haben, durch Authentifizierungsmittel (S) vorangeht, die sich in den Datenverarbeitungsmitteln (31) des Erreichbarkeitsservers (3) befinden, um den Zugriff auf Anrufer (A2) zu begrenzen, die zuvor während des Schrittes (95) des Speicherns der Vertraulichkeitsparameter von den Angerufenen (A1) als zum Erhalten mindestens eines Teils ihrer Erreichbarkeitsdaten (DJ) autorisiert gespeichert wurden.

31. Verfahren gemäß einem der Ansprüche 22 bis 30, **dadurch gekennzeichnet, dass** der Schritt des Übermittelns (86) von Daten zum Aktualisieren (90) der zentralisierten Datenbank (DB_ENUM) aufweist: einen Schritt des Authentifizierens (72a) des Angerufenen (A1) oder des Erreichbarkeitsservers (3) durch Authentifizierungsmittel (S) des Zentralisierungsservers (4), um den Zugriff auf Angerufene (A1) oder auf Erreichbarkeitsserver (3) zu begrenzen, die zuvor während eines vorhergehenden Schrittes des Angebens (71 a) der Angerufenen (A1) und der Erreichbarkeitsserver (3) bei Verwaltern des Zentralisierungsservers (4) gespeichert wurden.

32. Verfahren gemäß einem der Ansprüche 29 bis 31, **dadurch gekennzeichnet, dass**, wenn ein Anrufer (A2) das Herstellen (70) einer Kommunikation (COM) mit einem Angerufenen (A1) über das Kommunikationsnetzwerk / die Kommunikationsnetzwerke (RC) anfordert, Kommunikationsmittel (20) mindestens eines anrufenden Endgerätes (2) einen Schritt des Sendens (73) über das Kommunikationsnetzwerk / die Kommunikationsnetzwerke (RC) einer Anfrage (RT) zum Herstellen einer Kommunikation durchführen, um mindestens einen Angerufenen (A1) auf mindestens einem angerufenen Endgerät (1) zu erreichen und mit dem angerufenen Endgerät (1) zu kommunizieren.

33. Verfahren gemäß einem der Ansprüche 29 bis 31, **dadurch gekennzeichnet, dass**, wenn ein Anrufer (A2) das Herstellen (70) einer Kommunikation (COM) mit einem Angerufenen (A1) über das Kommunikationsnetzwerk / die Kommunikationsnetzwerke (RC) anfordert, Kommunikationsmittel (20) mindestens eines anrufenden Endgerätes (2) einen Schritt des Sendens (73a) über das Kommunikationsnetzwerk / die Kommunikationsnetzwerke (RC) einer Anfrage (NAPTR) zum Erhalten der Kommunikationsidentifikatoren (FQDN) eines Angerufenen (A1) durchführen, um die Identifikatoren (FQDN) des Angerufenen (A1) zu erhalten.

34. Verfahren gemäß einem der Ansprüche 29 bis 33, **dadurch gekennzeichnet, dass** der Schritt des Konsultierens (96, 96a) der zentralisierten Datenbank (DB_ENUM) die folgenden Schritte aufweist:
- Empfangen (91) mittels Kommunikationsmitteln (40) des Zentralisierungsservers (4) über das Kommunikationsnetzwerk / die Kommunikationsnetzwerke (RC) der Anfrage (NAPTR) zum Erhalten der Kommunikationsidentifikatoren (FQDN) eines durch seine einzigartige Nummer (1ID) identifizierten Angerufenen (A1),
- Verarbeiten (92) der Anfrage (NAPTR) zum Erhalten von Identifikatoren und Identifizieren der einzigartigen Nummer (1ID) des Angerufenen (A1) in der zentralisierten Datenbank (DB_ENUM) durch Datenverarbeitungsmittel (41) des Zentralisierungsservers (4),
- Erstellen (93) einer Antwort, die die Liste (NAPTR_RR) mit korrespondierenden Identifikatoren (FQDN) aufweist, wobei die Liste (NAPTR_RR) in Abhängigkeit von den Erreichbarkeitsdaten (DJ) mittels des Schrittes des Aktualisierens (90) der zentralisierten Datenbank (DB_ENUM) automatisch begrenzt wird,
- Senden (94) über die Kommunikationsmittel (40) des Zentralisierungsservers (4) der Antwort, die eine Liste (NAPTR_RR) mit Kommunikationsidentifikatoren (FQDN) entsprechend der einzigartigen Nummer (1ID) des Angerufenen (A1) aufweist.

35. Verfahren gemäß einem der Ansprüche 29 bis 33, **dadurch gekennzeichnet, dass** der Schritt des Konsultierens (96b) der Erreichbarkeitsdatenbank (DB_JOIN) die folgenden Schritte aufweist:
- Empfangen (91 bis) durch die Kommunikationsmittel (30) des Erreichbarkeitsservers (3) über das Kommunikationsnetzwerk / die Kommunikationsnetzwerke (RC) der Anfrage (NAPTR) zum Erhalten der Kommunikationsidentifikatoren (FQDN) eines durch seine einzigartige Nummer (1ID) identifizierten Angerufenen (1A),
- Verarbeiten (92bis) der Anfrage (NAPTR) zum Erhalten von Identifikatoren und Identifizieren der einzigartigen Nummer (1ID) des Angerufenen (A1) in der Erreichbarkeitsdatenbank (DB_JOIN) durch das Serververwaltungsmodul (M3),
- Erstellen (93bis) einer Antwort, die die Liste (NAPTR_RR) mit korrespondierenden Identifikatoren (FQDN) aufweist, wobei die Liste (NAPTR_RR) in Abhängigkeit von den Erreichbarkeitsdaten (DJ) mittels des Schrittes des Speicherns (80) der Erreichbarkeitsdaten (DJ) automatisch begrenzt wird,
- Senden (94bis) über die Kommunikationsmittel (30) des Erreichbarkeitsservers (3) der Antwort, die eine Liste (NAPTR_RR) mit Kommunikationsidentifikatoren (FQDN) entsprechend der einzigartigen Nummer (1ID) des Angerufenen (A1) an das anrufende Endgerät (2) aufweist.

36. Verfahren gemäß einem der Ansprüche 29 bis 35, **dadurch gekennzeichnet, dass** der Schritt des Konsultierens (96, 96a) der zentralisierten Datenbank (DB_ENUM) und / oder der Schritt des Konsultierens (96b) der Erreichbarkeitsdatenbank (DB_JOIN) von den folgenden Schritten begleitet wird/ begleitet werden:
- Empfangen (74) durch die Kommunikationsmittel (20) des anrufenden Endgerätes (2) der Antwort, die die Liste (NAPTR_RR) mit Kommunikationsidentifikatoren (FQDN) des Angerufenen (A1) enthält,
- Verarbeitung (75) durch das anrufende Verarbeitungsmodul (M2) des anrufenden Endgerätes (2) der Antwort, die die Liste (NAPTR_RR) mit Kommunikationsidentifikatoren (FQDN) des Angerufenen (A1) enthält, und Starten (76) einer Kommunikation (COM) durch eine Anwendungsstartvorrichtung (M20) des anrufenden Verwaltungsmoduls (M2), die die Kommunikationsmittel (20) verwaltet, um das Medium auszuwählen, das dem prioritären Kommunikationsidentifikator (FQDN) in der empfangenen Liste (NAPTR_RR) entspricht.

37. Verfahren gemäß Anspruch 36, **dadurch gekennzeichnet, dass**, wenn der Anrufer (A2) das Herstellen (70) einer Kommunikation (COM) mit einem Angerufenen (A1) anfordert, der Angerufene (A1) durch das anrufende Verwaltungsmodul (M2) identifiziert wird, das in Datenverarbeitungsmitteln (21) des anrufenden Endgerätes (2) implementiert wird, mittels mindestens einer einzigartigen Nummer (1ID) und / oder mindestens eines Kommunikationsidentifikators (FQDN), der/ die in Speichermitteln (23) des anrufenden Endgerätes (2) gespeichert ist/ sind.

38. Kommunizierendes Endgerät (1) zur Verwaltung der Erreichbarkeit mindestens eines Benutzers, der als Angerufener (A1) bezeichnet wird, auf mindestens einem Endgerät, das als angerufenes Endgerät bezeichnet wird, über mindestens ein Kommunikationsnetzwerk (RC), für die Erreichbarkeit des Angerufenen (A1) durch mindestens einen Benutzer, der als Anrufer (A2) bezeichnet wird, auf mindestens einem kommunizierenden Endgerät (2), das als anrufendes Endgerät (2) bezeichnet wird, wobei das kommunizierende Endgerät (1) aufweist: Mittel (10) zum Kommunizieren über das Kommunikationsnetzwerk/ die Kommunikationsnetzwerke (RC), Mittel (11) zum Verarbeiten von Daten, interaktive Mittel (12) zum Steuern des kommunizierenden Endgerätes (1) durch den Angerufenen (A2) und Speichermittel (13), wobei die Verarbeitungsmittel (11) des kommunizierenden Endgerätes (1) mindestens ein Verwaltungsmodul (M1) aufweisen, wobei das Endgerät **dadurch gekennzeichnet ist, dass** das Verwaltungsmodul folgendes steuert:
- ein Speichern in den Speichermitteln (13) des angerufenen Endgerätes (1) von zumindest bestimmten Daten, die als Erreichbarkeitsdaten (DJ) bezeichnet werden, aus Daten, die repräsentativ sind für mindestens eine einzigartige Nummer (1ID), mindestens ein Profil (P), das Daten aufweist, die für Kommunikationsidentifikatoren (FQDN) des Angerufenen (A1) repräsentativ sind, die gemäß einer bevorzugten Reihenfolge ausgewählt werden, und mindestens eine Agenda (A), die Daten aufweist, die für Zeitfenster (TH) und Parameter bezüglich der Aktivierung des Profils/der Profile (P) während der Zeitfenster (TH) repräsentativ sind, wobei die Daten, die für die bevorzugte Reihenfolge, die Zeitfenster (TH) und die Aktivierung des Profils (P) repräsentativ sind, vom Angerufenen (A1) mit Hilfe des Verwaltungsmoduls (M1) und der interaktiven Mittel (12) seines kommunizierenden Endgerätes (1) bestimmt werden,
- ein Aktualisieren von Daten, die in mindestens einer als zentralisiert bezeichneten Datenbank (DB_ENUM) mindestens eines Zentralisierungsservers (4) gespeichert sind, ausgehend von den Erreichbarkeitsdaten (DJ), auf die über das Kommunikationsnetzwerk / die Kommunikationsnetzwerke (RC) zugegriffen werden kann, wobei die zentralisierte Datenbank (DB_ENUM) Daten bezüglich einer Mehrzahl von Angerufenen (A2) speichert, wobei die Daten für jeden Angerufenen (A1) einen Hauptidentifikator aufweisen, der als einzigartige Nummer (1ID) bezeichnet wird, der mindestens einem Kommunikationsidentifikator (FQDN) zugeordnet ist, wobei das Aktualisieren durch das Verwaltungsmodul (M1) bei einer Änderung mindestens einer der Erreichbarkeitsdaten (DJ) durch den Angerufenen (A1) und/ oder über die Zeit beim Übergang von einem Zeitfenster (TH) in ein anderes durchgeführt wird.

39. Endgerät (1) gemäß Anspruch 38, **dadurch gekennzeichnet, dass** das Verwaltungsmodul (M1) des kommunizierenden Endgerätes (1), das als angerufenes Verwaltungsmodul (M1) bezeichnet wird, eingerichtet ist, um ferner Daten zu erzeugen, die mit dem Zentralisierungsserver (4) kompatibel sind, für das Aktualisieren der Datenbank (DB_ENUM) des Zentralisierungsservers (4) ausgehend von den Daten, die für die Kommunikationsidentifikatoren (FQDN) des Angerufenen (A1) und / oder seine einzigartige Nummer (1ID) repräsentativ sind, die in den Erreichbarkeitsdaten (DJ) vorliegen, die in den Speichermitteln (13) des Endgerätes gespeichert sind.

40. Tragbare elektronische Vorrichtung (100) zum Verwalten der Erreichbarkeit mindestens eines als Angerufener (A1) bezeichneten Benutzers auf mindestens einem als angerufenes Endgerät (1) bezeichneten Endgerät (1) über mindestens ein Kommunikationsnetzwerk (RC) für die Erreichbarkeit des Angerufenen (A1) durch mindestens einen als Anrufer (A2) bezeichneten Benutzer auf mindestens einem als anrufendes Endgerät (2) bezeichnetem kommunizierendem Endgerät (2), wobei das angerufene Endgerät (1) aufweist: Mittel (10) zum Kommunizieren über das Kommunikationsnetzwerk / die Kommunikationsnetzwerke (RC), Datenverarbeitungsmittel (11), interaktive Mittel (12) für das Steuern des kommunizierenden Endgerätes (1) durch den Angerufenen (A1) und Speichermittel (13), wobei die Verarbeitungsmittel (11) des kommunizierenden Endgerätes (1) mindestens eine Kommunikationssoftwareanwendung (110) über das Kommunikationsnetzwerk / die Kommunikationsnetzwerke (RC) durchführen,
wobei die tragbare Verwaltungsvorrichtung (100) **dadurch gekennzeichnet ist, dass** sie mindestens einen Speicher aufweist, der zum Auslesen und zum Beschreiben durch das kommunizierenden Endgerät (1) zugänglich ist und speichert:
- mindestens einen Typ Daten, die als Erreichbarkeitsdaten (DJ) bezeichnet werden, aus Daten, die repräsentativ sind für mindestens eine einzigartige Nummer (1ID), mindestens ein Profil (P), das Daten aufweist, die für Kommunikationsidentifikatoren (FQDN) des Angerufenen (A1) repräsentativ sind, die gemäß einer bevorzugten Reihenfolge ausgewählt werden, und mindestens eine Agenda (A), die Daten aufweist, die für Zeitfenster (TH) und Parameter bezüglich der Aktivierung des Profils / der Profile (P) während der Zeitfenster (TH) repräsentativ sind, wobei die Daten, die für die bevorzugte Reihenfolge, die Zeitfenster (TH) und die Aktivierung des Profils (P) repräsentativ sind, vom Angerufenen (A1) mittels der interaktiven Mittel (12) seines kommunizierenden Endgerätes (A1) und mindestens eines Erreichbarkeitsverwaltungsmoduls (M1) bestimmt werden,
- mindestens einen Typ Daten, die das Ausführen innerhalb der Kommunikationssoftwareanwendung (110) des kommunizierenden Endgerätes (1) mindestens eines Erreichbarkeitsverwaltungsmoduls (M1) ermöglichen, das, ausgehend von den Erreichbarkeitsdaten (DJ), ein Aktualisieren von Daten steuert, die in mindestens einer Datenbank (DB_ENUM) gespeichert sind, die als zentralisiert bezeichnet wird, mindestens eines Zentralisierungsservers (4), auf den über das Kommunikationsnetzwerk / die Kommunikationsnetzwerke (RC) zugegriffen werden kann, wobei die zentralisierte Datenbank (DB_ENUM) Daten bezüglich einer Mehrzahl von Angerufenen (A1) speichert, wobei die Daten für jeden Angerufenen (A1) aufweisen: einen Hauptidentifikator, der als einzigartige Nummer (1ID) bezeichnet wird, der mindestens einem Kommunikationsidentifikator (FQDN) zugeordnet wird, wobei das Aktualisieren durch das Verwaltungsmodul (M1) bei einer Änderung durch den Angerufenen (A1) mindestens einer der Erreichbarkeitsdaten (DJ) und/ oder über die Zeit während des Übergangs von einem Zeitfenster (TH) in ein anderes durchgeführt wird.

41. Tragbare Verwaltungsvorrichtung (100) gemäß Anspruch 40, **dadurch gekennzeichnet, dass** das Verwaltungsmodul (M1) des kommunizierenden Endgerätes (1), das als angerufenes Verwaltungsmodul (M1) bezeichnet wird, eingerichtet ist, um ferner Daten zu erzeugen, die mit dem Zentralisierungsserver (4) kompatibel sind, zum Aktualisieren der Datenbank (DB_ENUM) des Zentralisierungsservers (4) ausgehend von den Daten, die für die Kommunikationsidentifikatoren (FQDN) des Angerufenen (A1) und / oder seine einzigartige Nummer (1ID) repräsentativ sind, die in den Erreichbarkeitsdaten (DJ) vorliegen, die in den Speichermitteln (13) des Endgerätes gespeichert sind.

42. Verfahren zum Verwalten der Erreichbarkeit mindestens eines Benutzers, der als Angerufener (A1) bezeichnet wird, auf mindestens einem kommunizierenden Endgerät (1), das als angerufenes Endgerät (1) bezeichnet wird, über mindestens ein Kommunikationsnetzwerk (RC), für die Erreichbarkeit des Angerufenen (A1) durch mindestens einen Benutzer, der als Anrufer (A2) bezeichnet wird, auf mindestens einem kommunizierenden Endgerät (2), das als anrufendes Endgerät (2) bezeichnet wird, wobei das Verfahren **dadurch gekennzeichnet ist, dass** es einerseits mittels mindestens einer tragbaren elektronischen Erreichbarkeitsverwaltungsvorrichtung (100) durchgeführt wird, aufweisend einen Speicher, auf den durch Auslesen und Beschreiben durch das kommunizierende Endgerät (1) zugegriffen werden kann und der mindestens einen Typ Daten speichert, die das Ausführen mindestens eines Verwaltungsmoduls (M1) innerhalb einer Kommunikationssoftwareanwendung (110) während des Ausführens auf Datenverarbeitungsmitteln mindestens eines kommunizierenden Endgerätes (1) ermöglichen, aufweisend Mittel (10) zum Kommunizieren über das Kommunikationsnetzwerk / die Kommunikationsnetzwerke (RC), interaktive Mittel (12) zum Steuern des kommunizierenden Endgerätes (1) durch den Angerufenen (A1) und Speichermittel (13), und andererseits die folgenden Schritte aufweist:
- Speichern (80) durch das Verwaltungsmodul (M1) in dem Speicher der tragbaren Vorrichtung (100) und / oder in den Speichermitteln (13) des angerufenen Endgerätes (1) von zumindest bestimmten Daten, die als Erreichbarkeitsdaten (DJ) bezeichnet werden, aus Daten, die repräsentativ sind für mindestens eine einzigartige Nummer (1ID), mindestens ein Profil (P), das Daten aufweist, die für Kommunikationsidentifikatoren (FQDN) des Angerufenen (A1) repräsentativ sind, die gemäß einer bevorzugten Reihenfolge ausgewählt werden, und mindestens eine Agenda (A), die Daten aufweist, die für Zeitfenster (TH) und Parameter bezüglich der Aktivierung des Profils/ der Profile (P) während der Zeitfenster (TH) repräsentativ sind, wobei die Daten, die für die bevorzugte Reihenfolge, die Zeitfenster (TH) und die Aktivierung des Profils (P) repräsentativ sind, vom Angerufenen (A1) mit Hilfe des Verwaltungsmoduls (M1) und der interaktiven Mittel (12) seines kommunizierenden Endgerätes (1) bestimmt werden,
- Aktualisieren (90) durch das Verwaltungsmodul (M1), ausgehend von den Erreichbarkeitsdaten (DJ), von Daten, die in mindestens einer als zentralisiert bezeichneten Datenbank (DB_ENUM) gespeichert sind, auf die über das Kommunikationsnetzwerk / die Kommunikationsnetzwerke (RC) zugegriffen werden kann, wobei die zentralisierte Datenbank (DB_ENUM) Daten bezüglich einer Mehrzahl von Angerufenen (A1) speichert, wobei die Daten für jeden Angerufenen (A1) aufweisen: einen Hauptidentifikator, der als einzigartige Nummer (1ID) bezeichnet wird, der mindestens einem Kommunikationsidentifikator (FQDN) zugeordnet wird, wobei der Schritt des Aktualisierens (90) von dem Verwaltungsmodul (M1) bei einer Änderung durch den Angerufenen (A1) mindestens einer der Erreichbarkeitsdaten (DJ) und / oder über die Zeit, bei einem Übergang von einem Zeitfenster (TH) in ein anderes durchgeführt wird.

43. Verfahren gemäß Anspruch 42, **dadurch gekennzeichnet, dass** es aufweist: einen Schritt des Erzeugens (85) durch das Verwaltungsmodul (M1) von Daten, die mit dem Zentralisierungsserver (4) kompatibel sind, für das Aktualisieren (90) der Datenbank (DB_ENUM) des Zentralisierungsservers (4) ausgehend von den Daten, die für die Kommunikationsidentifikatoren (FQDN) des Angerufenen (A1) und / oder seine einzigartige Nummer (1ID) repräsentativ sind, die in den Erreichbarkeitsdaten (DJ) vorliegen, die in den Speichermitteln (13) des Endgerätes gespeichert sind.

## Claims

1. System for managing the reachability of at least one user, referred to as the called party (A1), on at least one communicating terminal (1), referred to as the called terminal (1), via at least one communication network (RC), for the reachability of the called party (A1) by at least one user, referred to as the calling party (A2), on at least one communicating terminal (2), referred to as the calling terminal (2), the system comprising:
• at least one centralization server (4), accessible via the communication network/networks (RC) and comprising at least one, so-called centralized, database (DB_ENUM) storing data relating to a plurality of called parties (A1), these data comprising, for each called party (A1), a main identifier, referred to as the unique number (1 ID), associated with at least one communication identifier (FQDN),
• at least one called terminal (1), comprising means (10) of communication via the communication network/networks (RC), means (11) for processing data, interactive means (12) for the control of the communicating terminal (1) by the called party (A1) and storage means (13),
the system being **characterized in that** it comprises:
• at least one management module (M1), implemented in the processing means (11) of the called terminal (1), comprising communication means (30) rendering it accessible via the communication network/networks (RC), the management module (M1) controlling:
- a recording in the means (13) of storage of the called terminal (1), of at least certain data, referred to as reachability data (DJ), from among data representative of at least one unique number (1ID), of at least one profile (P) comprising data representative of communication identifiers (FQDN) of the called party (A1) sorted according to an order of preference and of at least one schedule (A) comprising data representative of time slots (TH) and of parameters relating to the activation of the profile/ profiles (P) during the time slots (TH), the data representative of the order of preference, of the time slots (TH) and of the activation of the profile (P) being determined by the called party (A1) by virtue of the management module (M1) and of the interactive means (12) of its communicating terminal (1),
- an update of the data stored in the centralized database (DB_ENUM) of the centralization server (4), with the help of the reachability data (DJ) recorded in the means (13) of storage of the called terminal (1), upon a change by the called party (A1) of at least one of the reachability data (DJ) and/or in the course of time, when passing from one time slot (TH) to another.

2. System according to Claim 1, **characterized in that** the management module (M1) is implemented in the called terminal (1), the means (11) of processing of the called terminal (1) comprising a management module (M1), called the called management module (M1), controlling the recording and the selection, in the means (13) of storage of the called terminal (1), of the reachability data (DJ), the module (M1) for managing the called terminal (1) also generating data compatible with the centralization server (4), for the updating of the database (DB_ENUM) of the centralization server (4) with the help of the data representative of the communication identifiers (FQDN) of the called party (A1) and/or of its unique number (1ID), which data are present in the reachability data (DJ) stored in the means (13) of storage of the terminal.

3. System according to Claim 1 and 2, **characterized in that** the module (M1) and a management module (M3) are implemented respectively in the called terminal (1) and in a server (3) for managing the reachability of the subscribers (A1), referred to as the reachability server (3), the means (31) of processing of the reachability server (3) comprising a management module (M3), called the server management module (M3), the means (33) of storage of the reachability server (3) comprising at least one, so-called reachability, database (DB_REACH) storing data relating to a plurality of called parties (A1), these data comprising reachability data (DJ) of each of the called parties (A1), the means (13) of storage of the called terminal (1) storing at least one type of data from among the reachability data (DJ) of the called party, the means (11) of processing of the called terminal (1) also comprising a management module (M1), called the called management module (M1), complementary to the server management module (M3), the called management module (M1) and the server management module (M3) exchanging with one another, via the communication network/networks (RC), data comprising at least one type of data from among the reachability data (DJ), for the recording, in the reachability database (DB_REACH), of the data representative of the communication identifiers (FQDN) of the called party (A1) and/or of its unique number (1ID) and/or of its profile (P) and/or of its schedule (A), which data are selected by the called party (A1) on the called terminal (1), the server management module (M3) also generating data compatible with the centralization server (4), for the updating of the database (DB_ENUM) of the centralization server (4) with the help of the reachability database (DB_REACH).

4. System according to Claim 3, **characterized in that** the server management module (M3) controls the communication means (30) for the dispatching, to the called terminal (1), of the data representative of the communication identifiers (FQDN) of the called party (A1) and/or of its unique number (1ID) and/or of its profile (P) and/or of its schedule (A), when these data are absent from the means (13) of storage of the called terminal (1) and/or when the called management module (M1) so requests.

5. System according to one of Claims 1 to 4, **characterized in that** the reachability server (3) and the centralization server (4) constitute one and the same server comprising the two databases (DB_ENUM, DB_REACH), as well as means (31, 41) for processing data and communication means (30, 40) specific to these two servers.

6. System according to one of Claims 3 to 5, **characterized in that** the called management module (M1) and the server management module (M3) control, respectively, the communication means (10) of the called terminal (1) and the communication means (30) of the reachability server (3) for the updating of the database (DB_ENUM) of the centralization server (4).

7. System according to one of Claims 3 to 6, **characterized in that** the called management module (M1) and the server management module (M3) manage the data representative of the time slots (TH) in such a way that they are modifiable according to the profiles (P), so as to make it possible to choose the periods of activation of the various profiles (P).

8. System according to one of Claims 3 to 6, **characterized in that** the called management module (M1) and the server management module (M3) manage, for each profile (P), at least one sub-profile (SP) so as to define various orders of preference of the communication identifiers (FQDN) as a function of various time slots (TH), the data representative of these sub-profiles (SP) being recorded in the reachability database (DB_REACH) of the reachability server (3) and in the means (13) of storage of the called terminal (1).

9. System according to Claim 8, **characterized in that** the called management module (M1) and the server management module (M3) manage the data representative of the time slots (TH) in such a way that they are modifiable according to the sub-profiles (SP).

10. System according to one of Claims 3 to 9, **characterized in that** the called management module (M1) and the server management module (M3) manage the data representative of the schedule (A) so as to organize the time slots (TH) by day and/or by week and/or by month and/or by year.

11. System according to one of Claims 3 to 10, **characterized in that** the means (31) for processing data of the reachability server (3) also comprise authentication means (S) for identifying the called parties (A1) recording reachability data in the database (DB_REACH) of the reachability server (3) and for limiting access to the management module (M3) to called parties (A1) previously registered with managers of the reachability server (3).

12. System according to one of Claims 3 to 11, **characterized in that** the data stored in the reachability database (DB_REACH) also comprises data relating to confidentiality parameters of the unique number (1ID) and communication identifiers (FQDN) of the called party (A1), these data allowing the called parties (A1) to define the calling parties (A2) authorized to obtain their reachability data (DJ) and/or to define which data they are authorized to obtain from among these reachability data (DJ).

13. System according to one of Claims 1 to 12, **characterized in that** the centralization server (4) comprises means (S) for authentication of the called parties (A1) or reachability servers (3) whose module (M1) and the module (M3) update the centralized database (DB_ENUM), in such a way as to limit access to called parties (A1) or reachability servers (3), previously registered with managers of the centralization server (4).

14. System according to one of Claims 1 to 13, **characterized in that** the centralization server (4) comprises:
- means (40) of communication, via the communication network/networks (RC), for the reception of requests (NAPTR) for obtaining the communication identifiers (FQDN) of a called party (A1) identified by its unique number (1ID), for the dispatching of a response comprising a list (NAPTR_RR) of communication identifiers (FQDN) corresponding to the unique number (1ID) of the called party (A1) and for the reception of updates of the centralized database (DB_ENUM) with the help of the reachability database (DB_REACH),
- means (41) for processing data for the processing of the requests (NAPTR) for obtaining identifiers, the identification of the unique number (1ID) of the called party (A1) and the formulation of the response comprising the list (NAPTR_RR) of corresponding identifiers (FQDN).

15. System according to one of Claims 1 to 14, **characterized in that** it also comprises at least one calling terminal (2), comprising:
- means (20) of communication via the communication network/networks (RC) so as to reach at least one called party (A1) on at least one called terminal (1), by virtue of communication establishment requests (RT), and to communicate with this called terminal (1) through at least one medium, and/or to dispatch requests (NAPTR) for obtaining the communication identifiers (FQDN) of a called party (A1) directly to the reachability server (3) and/or the centralization server (4) and to receive responses containing lists (NAPTR_RR) of communication identifiers (FQDN),
- means (21) for processing data comprising a management module, referred to as the calling management module (M2), comprising an application launcher (M20) managing the communication means (20) so as to select the medium corresponding to the priority communication identifier (FQDN) in a list (NAPTR_RR) received.

16. System according to Claim 15, **characterized in that** the calling management module (M2) manages at least one unique number (1ID) and/or at least one communication identifier (FQDN), corresponding to at least one called party (A1) and which is (are) stored in means (23) of storage of the calling terminal (2).

17. Method for managing the reachability of at least one user, referred to as the called party (A1), on at least one communicating terminal (1), referred to as the called terminal (1), via at least one communication network (RC), for the reachability of the called party (A1) by at least one user, referred to as the calling party (A2), on at least one communicating terminal (2), referred to as the calling terminal (2), implemented by a system comprising:
- at least one called terminal (1) comprising means (10) of communication via the communication network/networks (RC), means (11) for processing data, interactive means (12) for the control of the communicating terminal (1) by the called party (A1) and storage means (13),
- at least one centralization server (4), accessible via the communication network/networks (RC) and comprising at least one, so-called centralized, database (DB_ENUM) storing data relating to a plurality of called parties (A1), these data comprising, for each called party (A1), a main identifier, referred to as the unique number (1ID), associated with at least one communication identifier (FQDN),
- at least one management module (M1), implemented in the processing means (11) of the called terminal (1), comprising communication means (30) rendering it accessible via the communication network/networks (RC), the method being **characterized in that** it comprises the following steps:
- recording (80), by the management module (M1), in the means (13) of storage of the called terminal (1), of at least certain data, referred to as reachability data (DJ), from among data representative of at least one unique number (1ID), of at least one profile (P) comprising data representative of communication identifiers (FQDN) of the called party (A1) sorted according to an order of preference and of at least one schedule (A) comprising data representative of time slots (TH) and of parameters relating to the activation of the profile/ profiles (P) during the time slots (TH), the data representative of the order of preference, of the time slots (TH) and of the activation of the profile (P) being determined by the called party (A1) by virtue of the management module (M1) and of the interactive means (12) of its communicating terminal (1),
- updating (90), by the management module (M1), of the data stored in the centralized database (DB_ENUM) of the centralization server (4), with the help of the reachability data (DJ) recorded in the means (13) of storage of the called terminal (1), upon a change by the called party (A1) of at least one of the reachability data (DJ) and/or in the course of time, when passing from one time slot (TH) to another.

18. Method according to Claim 17, **characterized in that** the management module (M1) is implemented in the called terminal (1), the means (11) of processing of the called terminal (1) comprising a management module (M1), called the called management module (M1), allowing the implementation of the following steps:
- selection (83) of the reachability data (DJ) in the means (13) of storage of the called terminal (1),
- creation (85) of data compatible with the centralization server (4), for the updating (90) of the database (DB_ENUM) of the centralization server (4) with the help of the data representative of the communication identifiers (FQDN) of the called party (A1) and/or of its unique number (1ID), which data are present in the reachability data (DJ) stored in the means (13) of storage of the terminal.

19. Method according to Claim 17, **characterized in that** the module (M1) and a management module (M3) is implemented respectively in the called terminal (1) and in a server (3) for managing the reachability of the subscribers (A1), referred to as the reachability server (3), the means (31) of processing of the management server (3) comprising the management module (M3), called the server management module (M3), the means (33) of storage of the management server (3) comprising at least one, so-called reachability, database (DB_REACH) storing data relating to a plurality of called parties (A1), these data comprising reachability data (DJ) of each of the called parties (A1), the means (13) of storage of the called terminal (1) storing at least one type of data from among the reachability data (DJ) of the called party (A1), the means (11) of processing of the called terminal (1) also comprising the management module (M1), called the called management module (M1), complementary to the server management module (M3), the called management module (M1) and the server management module (M3) allowing the implementation of the following steps:
- selection (83) by the called party (A1), by virtue of the called management module (M1) controlling the interactive means (12) and the means (13) of storage of its called terminal (1), from among the reachability data (DJ) stored in the means (13) of storage of the called terminal (1), of the data to be recorded in the reachability database (DB_REACH) of the management server (3),
- transmission (84) of the data selected by the called terminal (1) to the server management module (M3), via the communication network/networks (RC), and then recording (80), by the server management module (M3), of these data in the database (DB_REACH) of the reachability server (3),
- creation (85), by the server management module (M3), of data compatible with the centralization server (4), for the updating (90) of the database (DB_ENUM) of the centralization server (4) with the help of the reachability database (DB_REACH).

20. Method according to Claim 19, **characterized in that** it comprises a step of dispatching (82bis), by the communication means (30) of the reachability server (3), to the called terminal (1), of the data representative of the communication identifiers (FQDN) of the called party (A1) and/or of its unique number (1ID) and/or of its profile (P) and/or of its schedule (A), when the called terminal (1) does not store these data and/or when the called management module (M1) so requests.

21. Method according to one of Claims 19 to 20, **characterized in that** it comprises a step of implementation of the two databases (DB_ENUM, DB_REACH), as well as of the means (31, 41) for processing data and the specific communication means (30, 40) of the reachability server (3) and of the centralization server (4) which then constitute one and the same server, the step of creation (85) of data compatible with the centralization server (4) then consisting of a conversion of at least part of the data of the reachability database (DB_REACH) into data of the database (DB_ENUM) and the step of updating (90) of the database (DB_ENUM) of the centralization server (4) consisting of a recording of these converted data in the database (DB_ENUM).

22. Method according to one of Claims 17 to 21, **characterized in that** the updating step (90) comprises a step of transmission (86), via the communication network/networks (RC), of data representative of the communication identifiers (FQDN) of the called party (A1) and/or of its unique number (1ID), by the module (M1) and the management module (M3) to communication means (40) of the centralization server (4).

23. Method according to one of Claims 17 to 22, **characterized in that** step (80) of recording of the data representative of the time slots (TH), by the module (M1) and the management module (M3) respectively in the means (13) of storage of the called terminal (1) and in the means (33) of storage of the reachability server (3), comprises at least one step of modification (87) of the time slots (TH) according to the profiles (P), so as to make it possible to choose the periods of activation of the various profiles (P).

24. Method according to one of Claims 17 to 23, **characterized in that** step (80) of recording of the data representative of the time slots (TH), by the module (M1) and the management module (M3) respectively in the means (13) of storage of the called terminal (1) and in the means (33) of storage of the reachability server (3), comprises at least one step of recording (88) of at least one sub-profile (SP) so as to define various orders of preference of the communication identifiers (FQDN) as a function of various time slots (TH).

25. Method according to Claim 24, **characterized in that** the step of recording (88) of at least one sub-profile (SP), by the module (M1) and the management module (M3), comprises a step (880) of modifying the time slots (TH) according to the sub-profiles (SP).

26. Method according to one of Claims 17 to 25, **characterized in that** step (80) of recording of the data representative of the time slots (TH), by the module (M1) and the management module (M3) respectively in the means (13) of storage of the called terminal (1) and in the means (33) of storage of the reachability server (3) comprises at least one step of organization (89) of the time slots (TH) by day and/or by week and/or by month and/or by year.

27. Method according to one of Claims 19 to 26, **characterized in that** the step (84) of transmission of data for the recording (80) in the reachability database (DB_REACH) comprises a step of authentication (72) of the called party (A1) accessing the reachability server (3), by authentication means (S) present in the means (31) for processing data of the reachability server (3), in such a way as to limit access to called parties (A1) previously registered with managers of the reachability server (3) in the course of a prior step of declaration (71) of the called parties (A1).

28. Method according to one of Claims 17 to 27, **characterized in that** the step (80) of recording the profile (P) in the reachability database (DB_REACH) also comprises a step (95) of recording data relating to confidentiality parameters of the unique number (1ID) and of the communication identifiers (FQDN) of the called party (A1), these data allowing the called parties (A1) to define the calling parties (A2) authorized to obtain their reachability data (DJ) and/or to define which data they are authorized to obtain from among these reachability data (DJ).

29. Method according to one of Claims 19 to 28, **characterized in that** it comprises at least one step of the following steps, which is implemented when a calling party (A2) requests the establishment (70) of a communication (COM) with a called party (A1) via the communication network/networks (RC):
- consultation (96) of the centralized database (DB_ENUM) by a calling terminal (2),
- consultation (96bis) of the centralized database (DB_ENUM) by the reachability server (3),
- consultation (96ter) of the reachability database (DB_REACH) by the server management module (M3).

30. Method according to Claims 27 and 29, **characterized in that** the step of consultation (96bis) of the centralized database (DB_ENUM) or the step of consultation (96ter) of the reachability database (DB_REACH) is preceded by a step of authentication (72) of the calling parties (A2) that have requested the establishment (70) of a communication (COM), by authentication means (S) present in the means (31) for processing data of the reachability server (3), in such a way as to limit access to calling parties (A2) previously recorded by the called parties (A1), during step (95) of recording the confidentiality parameters, as being authorized to obtain at least part of their reachability data (DJ).

31. Method according to one of Claims 22 to 30, **characterized in that** the step of transmission (86) of data for the updating (90) of the centralized database (DB_ENUM) comprises a step of authentication (72bis) of the called party (A1) or of the reachability server (3), by means (S) for authentication of the centralization server (4), in such a way as to limit access to called parties (A1) or reachability servers (3), previously registered with managers of the centralization server (4) in the course of a prior step of declaration (71 bis) of the called parties (A1) and of the reachability servers (3).

32. Method according to one of Claims 29 to 31, **characterized in that**, when a calling party (A2) requests the establishment (70) of a communication (COM) with a called party (A1), via the communication network/networks (RC), communication means (20) of at least one calling terminal (2) implement a step of dispatching (73), via the communication network/networks (RC), of a request (RT) for establishment of a communication, so as to reach at least one called party (A1) on at least one called terminal (1) and to communicate with this called terminal (1).

33. Method according to one of Claims 29 to 31, **characterized in that**, when a calling party (A2) requests the establishment (70) of a communication (COM) with a called party (A1), via the communication network/networks (RC), communication means (20) of at least one calling terminal (2) implement a step of dispatching (73bis), via the communication network/networks (RC), of a request (NAPTR) for obtaining the communication identifiers (FQDN) of a called party (A1), so as to obtain the identifiers (FQDN) of the called party (A1).

34. Method according to one of Claims 29 to 33, **characterized in that** the step of consultation (96, 96bis) of the centralized database (DB_ENUM) comprises the following steps:
- reception (91), by communication means (40) of the centralization server (4), via the communication network/networks (RC), of the request (NAPTR) for obtaining the communication identifiers (FQDN) of a called party (A1) identified by its unique number (1ID),
- processing (92) of the request (NAPTR) for obtaining identifiers and identification of the unique number (1ID) of the called party (A1) in the centralized database (DB_ENUM), by means (41) for processing data of the centralization server (4),
- formulation (93) of a response comprising the list (NAPTR_RR) of corresponding identifiers (FQDN), this list (NAPTR_RR) being automatically limited as a function of the reachability data (DJ), by virtue of the step of updating (90) of the centralized database (DB_ENUM),
- dispatching (94), by the communication means (40) of the centralization server (4), of the response comprising a list (NAPTR_RR) of communication identifiers (FQDN) corresponding to the unique number (1ID) of the called party (A1).

35. Method according to one of Claims 29 to 33, **characterized in that** the step of consultation (96ter) of the reachability database (DB_REACH) comprises the following steps:
- reception (91 bis), by the communication means (30) of the reachability server (3), via the communication network/networks (RC), of the request (NAPTR) for obtaining the communication identifiers (FQDN) of a called party (A1) identified by its unique number (1ID),
- processing (92bis) of the request (NAPTR) for obtaining identifiers and identification of the unique number (1ID) of the called party (A1) in the reachability database (DB_REACH), by the server management module (M3),
- formulation (93bis) of a response comprising the list (NAPTR_RR) of corresponding identifiers (FQDN), this list (NAPTR_RR) being automatically limited as a function of the reachability data (DJ), by virtue of the step (80) of recording the reachability data (DJ),
- dispatching (94bis), by the communication means (30) of the reachability server (3), of the response comprising a list (NAPTR_RR) of communication identifiers (FQDN) corresponding to the unique number (1 ID) of the called party (A1), to the calling terminal (2).

36. Method according to one of Claims 29 to 35, **characterized in that** the step of consultation (96, 96bis) of the centralized database (DB_ENUM) and/or the step of consultation (96ter) of the reachability database (DB_REACH) is (are) accompanied by the following steps:
- reception (74) by the communication means (20) of the calling terminal (2), of the response containing the list (NAPTR_RR) of communication identifiers (FQDN) of the called party (A1),
- processing (75), by the calling management module (M2) of the calling terminal (2), of the response containing the list (NAPTR_RR) of communication identifiers (FQDN) of the called party (A1) and commencement (76) of a communication (COM), by an application launcher (M20) of the calling management module (M2), managing the communication means (20) so as to select the medium corresponding to the priority communication identifier (FQDN) in the list (NAPTR_RR) received.

37. Method according to Claim 36, **characterized in that** when the calling party (A2) requests the establishment (70) of a communication (COM) with a called party (A1), this called party (A1) being identified by the calling management module (M2), implemented in means (21) for processing data of the calling terminal (2), by virtue of at least one unique number (1ID) and/or at least one communication identifier (FQDN), which is (are) stored in means (23) of storage of the calling terminal (2).

38. Communicating terminal (1) for managing the reachability of at least one user, referred to as the called party (A1), on at least one terminal, referred to as the called terminal, via at least one communication network (RC), for the reachability of the called party (A1) by at least one user, referred to as the calling party (A2), on at least one communicating terminal (2), referred to as the calling terminal (2), the communicating terminal (1) comprising means (10) of communication via the communication network/networks (RC), means (11) for processing data, interactive means (12) for the control of the communicating terminal (1) by the called party (A1) and storage means (13), the means (11) of processing of the communicating terminal (1) comprising at least one management module (M1), the terminal being **characterized in that** the management module controls:
- a recording, in the means (13) of storage of the called terminal (1), of at least certain data, referred to as reachability data (DJ), from among data representative of at least one unique number (1ID), of at least one profile (P) comprising data representative of communication identifiers (FQDN) of the called party (A1) sorted according to an order of preference and of at least one schedule (A) comprising data representative of time slots (TH) and of parameters relating to the activation of the profile/ profiles (P) during the time slots (TH), the data representative of the order of preference, of the time slots (TH) and of the activation of the profile (P) being determined by the called party (A1) by virtue of the management module (M1) and of the interactive means (12) of its communicating terminal (1),
- an updating, with the help of the reachability data (DJ), of data stored in at least one, so-called centralized, database (DB_ENUM) of at least one centralization server (4), accessible via the communication network/networks (RC), the centralized database (DB_ENUM) storing data relating to a plurality of called parties (A1), these data comprising, for each called party (A1), a main identifier, referred to as the unique number (1ID), associated with at least one communication identifier (FQDN), the updating being carried out by the management module (M1) upon a change by the called party (A1) of at least one of the reachability data (DJ) and/or in the course of time, when passing from one time slot (TH) to another.

39. Terminal (1) according to Claim 38, **characterized in that** the module (M1) for managing the communicating terminal (1), called the called management module (M1), is devised so as to also generate data compatible with the centralization server (4), for the updating of the database (DB_ENUM) of the centralization server (4) with the help of the data representative of the communication identifiers (FQDN) of the called party (A1) and/or of its unique number (1ID), which data are present in the reachability data (DJ) stored in the means (13) of storage of the terminal.

40. Portable electronic device (100) for managing the reachability of at least one user, referred to as the called party (A1), on at least one terminal, referred to as the called terminal (1), via at least one communication network (RC), for the reachability of the called party (A1) by at least one user, referred to as the calling party (A2), on at least one communicating terminal (2), referred to as the calling terminal (2), the called terminal (1) comprising means (10) of communication via the communication network/networks (RC), means (11) for processing data, interactive means (12) for the control of the communicating terminal (1) by the called party (A1) and storage means (13), the means (11) of processing of the communicating terminal (1) executing at least one communication software application (110) via the communication network/networks (RC), the portable management device (100) being **characterized in that** it comprises at least one memory that is read-accessible and write-accessible by the communicating terminal (1) and storing:
- at least one type of data, referred to as reachability data (DJ), from among data representative of at least one unique number (1 ID), of at least one profile (P) comprising data representative of communication identifiers (FQDN) of the called party (A1) sorted according to an order of preference and of at least one schedule (A) comprising data representative of time slots (TH) and of parameters relating to the activation of the profile/ profiles (P) during the time slots (TH), the data representative of the order of preference, of the time slots (TH) and of the activation of the profile (P) being determined by the called party (A1) by virtue of the interactive means (12) of its communicating terminal (1) and of at least one module (M1) for managing the reachability,
- at least one type of data allowing the execution, within the communication software application (110) of the communicating terminal (1), of at least one module (M1) for managing reachability controlling an updating, with the help of the reachability data (DJ), of data stored in at least one, so-called centralized, database (DB_ENUM) of at least one centralization server (4), accessible via the communication network/networks (RC), the centralized database (DB_ENUM) storing data relating to a plurality of called parties (A1), these data comprising, for each called party (A1), a main identifier, referred to as the unique number (1ID), associated with at least one communication identifier (FQDN), the updating being carried out by the management module (M1) upon a change by the called party (A1) of at least one of the reachability data (DJ) and/or in the course of time, when passing from one time slot (TH) to another.

41. Portable management device (100) according to Claim 40, **characterized in that** the module (M1) for managing the communicating terminal (1), called the called management module (M1), is devised so as to also generate data compatible with the centralization server (4), for the updating of the database (DB_ENUM) of the centralization server (4) with the help of the data representative of the communication identifiers (FQDN) of the called party (A1) and/or of its unique number (1ID), present in the reachability data (DJ) stored in the means (13) of storage of the terminal.

42. Method for managing the reachability of at least one user, referred to as the called party (A1), on at least one communicating terminal (1), referred to as the called terminal (1), via at least one communication network (RC), for the reachability of the called party (A1) by at least one user, referred to as the calling party (A2), on at least one communicating terminal (2), referred to as the calling terminal (2), the method being **characterized in that**, on the one hand, it is implemented by virtue of at least one portable electronic device (100) for managing reachability, comprising a memory that is read-accessible and write-accessible by the communicating terminal (1) and storing at least one type of data allowing the execution of at least one management module (M1) within a communication software application (110) in the course of execution on means (11) for processing data of at least one communicating terminal (1) comprising means (10) of communication via the communication network/networks (RC), interactive means (12) for the control of the communicating terminal (1) by the called party (A1) and storage means (13), and on the other hand, it comprises at least the following steps:
- recording (80), by the management module (M1), in the memory of the portable device (100) and/or in the means (13) of storage of the called terminal (1), of at least certain data, referred to as reachability data (DJ), from among data representative of at least one unique number (1ID), of at least one profile (P) comprising data representative of communication identifiers (FQDN) of the called party (A1) sorted according to an order of preference and of at least one schedule (A) comprising data representative of time slots (TH) and of parameters relating to the activation of the profile/ profiles (P) during the time slots (TH), the data representative of the order of preference, of the time slots (TH) and of the activation of the profile (P) being determined by the called party (A1) by virtue of the management module (M1) and of the interactive means (12) of the communicating terminal (1),
- updating (90), by the management module (M1), with the help of the reachability data (DJ), of data stored in at least one, so-called centralized, database (DB_ENUM) of at least one centralization server (4), accessible via the communication network/networks (RC), the centralized database (DB_ENUM) storing data relating to a plurality of called parties (A1), these data comprising, for each called party (A1), a main identifier, referred to as the unique number (1ID), associated with at least one communication identifier (FQDN), the updating step (90) being implemented by the management module (M1) upon a change by the called party (A1) of at least one of the reachability data (DJ) and/or in the course of time, when passing from one time slot (TH) to another.

43. Method according to Claim 42, **characterized in that** it comprises a step of creation (85), by the management module (M1), of data compatible with the centralization server (4), for the updating (90) of the database (DB_ENUM) of the centralization server (4) with the help of the data representative of the communication identifiers (FQDN) of the called party (A1) and/or of its unique number (1ID), which data are present in the reachability data (DJ) stored in the means (13) of storage of the terminal.
